(19) Europäisches Patentamt
European Patent Office
Office européen des brevets

(11) EP 3 367 319 A1

(12) # EUROPEAN PATENT APPLICATION
published in accordance with Art. 153(4) EPC

(43) Date of publication:
**29.08.2018 Bulletin 2018/35**

(21) Application number: **16857103.2**

(22) Date of filing: **19.10.2016**

(51) Int Cl.:
***G06Q 50/02*** *(2012.01)*

(86) International application number:
**PCT/JP2016/004632**

(87) International publication number:
**WO 2017/068782 (27.04.2017 Gazette 2017/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.10.2015 JP 2015209378**

(71) Applicant: **NEC Corporation**
**Tokyo 108-8001 (JP)**

(72) Inventors:
- **AZUMA, Tan**
  **Tokyo 108-8001 (JP)**
- **FUJIYAMA, Kenichiro**
  **Tokyo 108-8001 (JP)**
- **ARAKI, Soichiro**
  **Tokyo 108-8001 (JP)**
- **SATOH, Mineto**
  **Tokyo 108-8001 (JP)**

(74) Representative: **Betten & Resch**
**Patent- und Rechtsanwälte PartGmbB**
**Maximiliansplatz 14**
**80333 München (DE)**

(54) **INFORMATION PROCESSING SYSTEM, FARMING SUPPORT METHOD, INFORMATION PROCESSING DEVICE, CONTROL METHOD THEREFOR, AND RECORDING MEDIUM**

(57) In order to provide an farming schedule matching a growing environment for crops and increase reliability of farming support, the present invention comprises: an index value calculation unit that calculates index values at which the growth of crops is hindered, during a period including at least an observation period in which the effects of farming work performed in order to grow crops are observed; and a schedule generation unit that, in order to reduce the index values calculated by the index value calculation unit, generates a schedule for farming work performed on crops during a prescribed farming period being a period prior to the observation period.

Fig.1

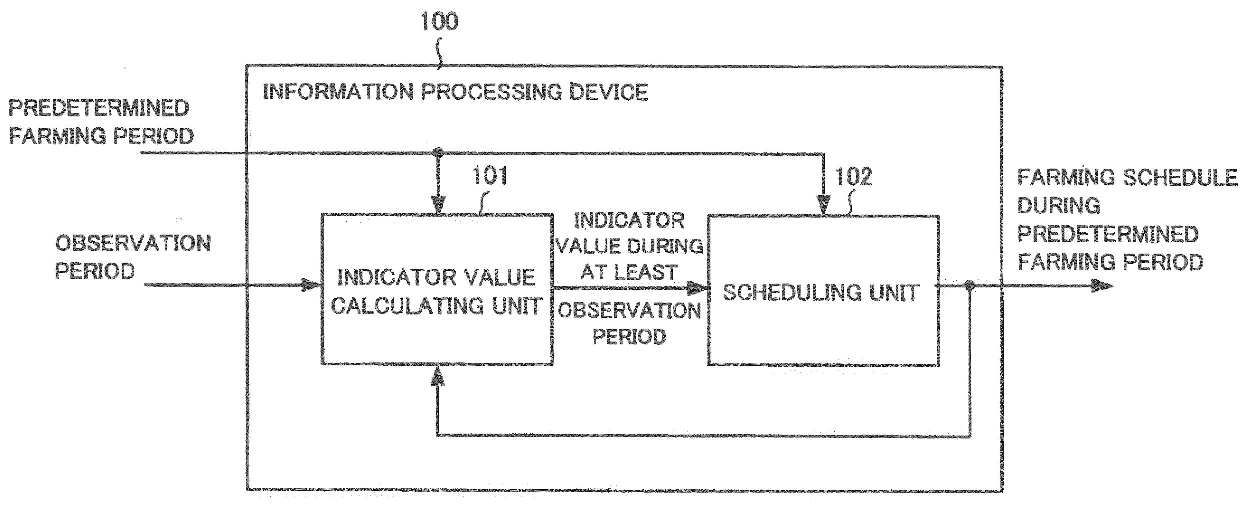


EP 3 367 319 A1

## Description

### Technical Field

The present invention relates to an information processing system, a farming support method, an information processing device, a control method therefor, and a recording medium.

### Background Art

In usual farming work, a fertilizing amount and an irrigation amount provided for a crop are determined based on a past experience and an intuition of a farm worker, or a farming schedule is generated depending on a cultivation history for each region and crop, the history being provided by a government or an agricultural cooperative. For example, PTLs 1 and 2 are known as technologies of supporting the determinations.

PTL 1 describes weather prediction processing based on a weather model, prediction processing of crop growth based on a growth model, detection processing of a soil state by using a farmland map, and processing of recording a farming work to a work history storing unit for determining appropriate agrichemical spraying work and fertilizing work for each cultivated field. A proposal adapting work calculating unit generates candidates of an agrichemical spraying schedule and a fertilization schedule for maximizing a yield at present on the basis of thus acquired information. However, in PTL 1, in order to determine an amount and a stage of agrichemical spraying and fertilization, an observation device for acquiring a degree of growth and weather data needs to be installed at each cultivated field.

In order to compensate for the drawback, PTL 2 describes a system that recognizes a growth state of a crop from a wavelength component included in satellite image data and outputs a working condition and work details in accordance with the state for each cultivated field.

[Citation List]

[Patent Literature]

PTL 1: Japanese Laid-open Patent Publication No. H11(1999) -313594
PTL 2: Japanese Patent Publication No. 4873545

### Summary of Invention

### Technical Problem

However, the technologies described in the aforementioned literatures require a long-term prediction of crop growth up to a harvest date by use of a growth model when aiming at, for example, yield maximization. The reason is that, while an integrated value of daily growth amounts of a fruit is a yield, maximization of a daily growth amount of the fruit is not always equal to maximization of the yield and may not consequently maximize the yield. Such a yield is herein referred to as "a local solution of a yield."

Further, a long-term crop growth prediction requires a long-term prediction of weather data up to a harvest date. Since a long-term weather prediction for a period exceeding two weeks is uncertain, a yield prediction also becomes inaccurate, and therefore a farming schedule generated on the basis of the predicted yield is also inaccurate. Consequently, reliability of farming support degrades.

An object of the present invention is to provide a technology for solving the aforementioned problem.

### Advantageous Effects of Invention

In order to achieve the above-described object, an information processing device according to the present invention including:

indicator value calculating means for calculating an indicator value of hindering crop growth during a period including at least an observation period during which an effect of farming work performed for growing the crop is observed; and
scheduling means for generating a schedule of farming work performed on the crop during a predetermined farming period being a period preceding the observation period in order to reduce the indicator value calculated by the indicator value calculating means.

In order to achieve the above-described object, a control method according to the present invention including:

calculating an indicator value of hindering crop growth during a period including at least an observation period during which an effect of farming work performed for growing the crop is observed; and
generating a schedule of farming work performed on the crop during a predetermined farming period being a period preceding the observation period in order to reduce the calculated indicator value.

In order to achieve the above-described object, a control program of an information processing device according to the present invention including:

an indicator value calculating step for calculating an indicator value of hindering crop growth during a period including at least an observation period during which an effect of farming work performed for growing the crop is observed; and
a scheduling step for generating a schedule of farming work performed on the crop during a predetermined farming period being a period preceding the observation period in order to reduce the indicator value calculated in the indicator value calculating step.

In order to achieve the above-described object, an information processing system according to the present invention including:

acquiring means for acquiring a report period of a farming schedule reported to a user and a parameter for calculating an indicator value of hindering crop growth;
indicator value calculating means for calculating, by use of the parameter, an indicator value of hindering crop growth during a period including at least an observation period during which an effect of farming work performed for growing the crop is observed;
scheduling means for generating a schedule for farming work performed on the crop during a predetermined farming period being a period preceding the observation period in order to reduce the indicator value calculated by the indicator value calculating means; and
outputting means for generating a farming schedule during the report period based on farming schedules during a plurality of the predetermined farming periods repeatedly generated by the scheduling means, and outputting the generated farming schedule.

In order to achieve the above-described object, a farming support method according to the present invention including:

acquiring a report period of a farming schedule reported to a user and a parameter for calculating an indicator value of hindering crop growth;
calculating, by use of the parameter, an indicator value of hindering crop growth during a period including at least an observation period during which an effect of farming work performed for growing the crop is observed;
generating a schedule for farming work performed on the crop during a predetermined farming period being a period preceding the observation period in order to reduce the indicator value calculated by the indicator value calculating means; and
generating a farming schedule during the report period based on farming schedules during a plurality of the predetermined farming periods repeatedly generated, and outputting the generated farming schedule.

## Advantageous Effects of Invention

The present invention is able to provide a farming schedule suited for a growth environment of a crop and improve reliability of farming support.

## Brief Description of Drawings

[Fig. 1] Fig. 1 is a block diagram illustrating a configuration of an information processing device according to a first example embodiment of the present invention
[Fig. 2A] Fig. 2A is a diagram illustrating an overview of a farming support method by an information processing system including an information processing device according to a second example embodiment of the present invention.

[Fig. 2B] Fig. 2B is a diagram illustrating an overview of a farming support method by the information processing system including the information processing device according to the second example embodiment of the present invention.

[Fig. 2C] Fig. 2C is a diagram (1/2) illustrating a user interface of the farming support method by the information processing system including the information processing device according to the second example embodiment of the present invention.

[Fig. 2D] Fig. 2D is the diagram (2/2) illustrating the user interface of the farming support method by the information processing system including the information processing device according to the second example embodiment of the present invention.

[Fig. 2E] Fig. 2E is a diagram (1/2) illustrating a user interface of the farming support method by the information processing system including the information processing device according to the second example embodiment of the present invention.

[Fig. 2F] Fig. 2F is the diagram (2/2) illustrating the user interface of the farming support method by the information processing system including the information processing device according to the second example embodiment of the present invention.

[Fig. 2G] Fig. 2G is the diagram illustrating a user interface of the farming support method by the information processing system including the information processing device according to the second example embodiment of the present invention.

[Fig. 3A] Fig. 3A is a block diagram illustrating a configuration of an information processing system including an information processing device according to the second example embodiment of the present invention.

[Fig. 3B] Fig. 3B is a sequence diagram illustrating an operating procedure of the information processing system including the information processing device according to the second example embodiment of the present invention.

[Fig. 4] Fig. 4 is a block diagram illustrating a functional configuration of the information processing system including the information processing device according to the second example embodiment of the present invention.

[Fig. 5A] Fig. 5A is a block diagram illustrating a configuration of a stress calculating unit according to the second example embodiment of the present invention.

[Fig. 5B] Fig. 5B is a block diagram illustrating a configuration of a farming scheduling unit according to the second example embodiment of the present invention.

[Fig. 5C] Fig. 5C is a block diagram illustrating a configuration of a farming scheduling unit according to the second example embodiment of the present invention.

[Fig. 6A] Fig. 6A is a diagram illustrating a configuration of a database according to the second example embodiment of the present invention.

[Fig. 6B] Fig. 6B is a diagram illustrating a configuration of a database according to the second example embodiment of the present invention.

[Fig. 6C] Fig. 6C is a diagram (1/2) illustrating a configuration of a database according to the second example embodiment of the present invention.

[Fig. 6D] Fig. 6D is a diagram illustrating (2/2) the configuration of the database according to the second example embodiment of the present invention.

[Fig. 7A] Fig. 7A is a diagram illustrating a configuration of an intake calculating table according to the second example embodiment of the present invention.

[Fig. 7B] Fig. 7B is a diagram illustrating a configuration of a requirement calculating table according to the second example embodiment of the present invention.

[Fig. 7C] Fig. 7C is a diagram illustrating a configuration of a goal value calculating table according to the second example embodiment of the present invention.

[Fig. 8] Fig. 8 is a diagram illustrating a configuration of a stress calculating table according to the second example embodiment of the present invention.

[Fig. 9A] Fig. 9A is a diagram illustrating a configuration of a farming scheduling table according to the second example embodiment of the present invention.

[Fig. 9B] Fig. 9B is a diagram illustrating a configuration of a farming scheduling table according to the second example embodiment of the present invention.

[Fig. 9C] Fig. 9A is a diagram illustrating a configuration of a farming scheduling table according to the second example embodiment of the present invention.

[Fig. 10] Fig. 10 is a block diagram illustrating a hardware configuration of an information processing device according to the second example embodiment of the present invention.

[Fig. 11] Fig. 11 is a flowchart illustrating processing of the information processing device according to the second example embodiment of the present invention.

[Fig. 12A] Fig. 12A is a flowchart illustrating processing for generating a farming schedule according to the second example embodiment of the present invention.

[Fig. 12B] Fig. 12B is a flowchart illustrating processing for generating a farming schedule according to the second example embodiment of the present invention.

[Fig. 13] Fig. 13 is a block diagram illustrating a functional configuration of an information processing device according to a third example embodiment of the present invention.

[Fig. 14] Fig. 14 is a diagram illustrating a configuration of a setting table of a stress calculating period according to the third example embodiment of the present invention.

[Fig. 15] Fig. 15 is a flowchart illustrating a procedure of a stress calculating period setting process according to the third example embodiment of the present invention.

[Fig. 16] Fig. 16 is a block diagram illustrating a functional configuration of an information processing device according to a fourth example embodiment of the present invention.

[Fig. 17] Fig. 17 is a diagram illustrating a configuration of a stress calculating period updating table according to the fourth example embodiment of the present invention.

[Fig. 18] Fig. 18 is a flowchart illustrating a procedure of a stress calculating period updating process according to the fourth example embodiment of the present invention.

[Fig. 19] Fig. 19 is a block diagram illustrating a functional configuration of an information processing device according to a fifth example embodiment of the present invention.

[Fig. 20] Fig. 20 is a diagram illustrating a configuration of a stress observation information updating table according to the fifth example embodiment of the present invention.

[Fig. 21] Fig. 21 is a flowchart illustrating a procedure of a stress observation information updating process according to the fifth example embodiment of the present invention.

[Fig. 22] Fig. 22 is a block diagram illustrating a configuration of an information processing system including an information processing device according to a sixth example embodiment of the present invention.

[Fig. 23] Fig. 23 is a block diagram illustrating a functional configuration of an information processing device according to a seventh example embodiment of the present invention.

Description of Embodiments

Example embodiments of the present invention will be described in detail in an exemplified manner below with reference to drawings. Components described in the following example embodiments are merely exemplifications and are not intended to limit the technical scope of the present invention thereto.

[First example embodiment]

An information processing device 100 according to a first example embodiment of the present invention will be described by use of Fig. 1. The information processing device 100 is a device generating a farming schedule.

As illustrated in Fig. 1, the information processing device 100 includes an indicator value calculating unit (indicator value calculator) 101 and a scheduling unit (scheduler) 102. The indicator value calculating unit 101 calculates an indicator value hindering growth of a crop during a period including at least an observation period for observing an effect of farming work performed for growing the crop. The scheduling unit 102 generates a schedule for farming work performed on the crop during a predetermined farming period being a period preceding the observation period, in order to reduce an indicator value calculated by the indicator value calculating unit 101.

The present example embodiment is able to provide a farming schedule suited for a growth environment of a crop and improve reliability of farming support.

Further, an example of a related art is a technology of issuing a warning based on an experience by use of farming data (past data) stored over several years. The technology has a problem that farming data need to be obtained over several years again when a farming region or a crop changes. The present example embodiment is able to generate an accurate farming schedule based on a short-term prediction without requiring enormous past data.

[Second example embodiment]

Next, an information processing system including an information processing device according to a second example embodiment of the present invention will be described. The information processing device according to the present example embodiment defines differences between a nutrition amount and a water content that are required by a crop, and a nutrition amount and a water content that can be actually taken in by the crop as a nutritional stress and a water stress, respectively, and generates a short-term fertilization and irrigation schedule with the stresses as indicators. A stress of a crop is a factor hindering growth of the crop. A crop continues to grow to an ideal state without a stress. Accordingly, when a stress is an indicator, a yield is less likely to fall into a local solution, unlike a case of a daily crop growth amount (growth rate) being an indicator. Accordingly, by employing a stress as an indicator in a prediction, a growth amount or a final yield calculated on the basis of uncertain long-term weather prediction data does not need to be employed as the indicator, and therefore a short-term farming schedule less likely to fall into a local solution can be generated.

Generation of a long-term farming schedule may be provided by repeating generation of short-term farming schedules. At this time, long-term weather prediction data are required, and therefore accuracy of a farming schedule degrades as an interval from the present time increases. However, when a farming schedule candidate is generated and updated by use of accurate short-term weather prediction data as actual time advances, a more accurate farming schedule candidate can be generated.

<<Information processing system>>

A configuration and an operation of the information processing system according to the present example embodiment will be described below with reference to Figs. 2A to 3B.

(Operation Overview)

Fig. 2A is a diagram illustrating an overview of a farming support method by the information processing system including the information processing device according to the present example embodiment. It is assumed that a number of days for which a farming schedule is provided for a user is three days and that an indicator value observation period for generating a three-day farming schedule is 10 days after the three days. Then, Fig. 2A illustrates a method for generating the farming schedule. In the present example embodiment, an indicator value calculating period is set to be a period obtained by adding a farming scheduling period and an indicator value observation period. The indicator value observation period is a stress observation period, and the indicator value calculating period is a stress calculating period in the present example embodiment. However, the indicator value is not limited to a stress. Further, while Fig. 2A illustrates an example that a recommended three-day farming schedule is generated and reported to a user every day, farming support may be performed in such a way that a recommended three-day farming schedule is generated and reported to a user every three days. Furthermore, the farming scheduling period is not limited to three days and may be set in hours, and a length thereof is desirably no longer than several days.

While an indicator value is calculated with respect to a period obtained by adding a farming scheduling period and an indicator value observation period in the following example embodiments, farming scheduling may be based on an indicator value calculated during the indicator value observation period without calculating an indicator value with respect to the farming scheduling period. However, in order to improve prediction accuracy based on an indicator value, it is desirable to also calculate an indicator value during the farming scheduling period and use the value for farming scheduling.

A farming period 201 represents a period from seeding of a crop or planting of a seedling to harvesting of the crop, or when growing a tree and harvesting a fruit, represents a period set in units of years or several years.

A first farming scheduling process 211 includes considering a 10-day stress observation period after the three days and calculating daily stresses during a total of 13 days in order to generate a three-day farming schedule. The first farming scheduling process 211 includes generating a three-day farming schedule by which a sum total of the stresses during the 13 days is minimized or brought closest to a goal value, and notifying the farming schedule to a user.

Next, a second farming scheduling process 212 includes shifting a farming schedule period in the first farming scheduling process 211 forward by one day, and then calculating daily stresses during a total of 13 days considering a 10 day-stress observation period after the three days in order to generate a three-day farming schedule. The second farming scheduling process 212 includes generating a three-day farming schedule by which a sum total of the stresses during the 13 days is minimized or brought closest to the goal value, and notifying the three-day farming schedule to the user.

Furthermore, a third farming scheduling process 213 includes shifting a farming schedule period in the second farming scheduling process 212 forward by one day and calculating daily stresses during a total of 13 days while considering a 10-day stress observation period after the three days in order to generate a three-day farming schedule. Then, the third farming scheduling process 213 includes generating a three-day farming schedule by which a sum total of the stresses during the 13 days is minimized or brought closest to the goal value is generated, and notifying the three-day farming schedule to the user.

After repeating such generation of a three-day farming schedule and notification to the user every day, an m-th farming scheduling process 21m generates a three-day farming schedule at the end of the farming period 201.

Fig. 2B is a diagram illustrating a modified example of an overview of the farming scheduling method 200 by the information processing system including the information processing device according to the present example embodiment. Fig. 2B illustrates a farming scheduling method in a case that scheduling days (also referred to as a report period) for which a farming schedule is provided for a user is assumed to be one week (seven days), a farming scheduling period is assumed to be three days, and an indicator value observation period considered for generating a three-day farming schedule is assumed to be 10 days after the three days.

The farming period 201 represents a period from seeding of a crop or planting of a seedling to harvesting of the crop, or when growing a tree and harvesting a fruit, represents a period set in units of years or several years.

A first farming scheduling process 221 includes considering a 10-day stress observation period after a three days and calculating daily stresses during a total of 13 days in order to in order to generate the three-day farming schedule. The first farming scheduling process 221 includes generating the three-day farming schedule by which a sum total of the stresses during the 13 days is minimized or brought closest to a goal value, and keeping the three-day farming schedule.

A second farming scheduling process 222 includes considering a 10-day stress observation period after a three days for which the farming schedule is generated in the second farming scheduling process 222, and calculating daily stresses during a total of 13 days in order to generate a farming schedule for three days following the three-day farming schedule generated in the first farming scheduling process 221. The second farming scheduling process 222 includes generating the three-day farming schedule by which a sum total of the stresses during the 13 days is minimized or brought closest to the goal value, and keeping the three-day farming schedule.

Furthermore, a third farming scheduling process 223 includes considering a 10-day stress observation period after the three days for which the farming schedule is generated in the third farming scheduling process 223, and calculating daily stresses during a total of 13 days in order to generate a farming schedule for three days following the three days for which a farming schedule is generated in the second farming scheduling process 222. The third farming scheduling process 223 includes generating a three-day farming schedule by which a sum total of the stresses during the 13 days is minimized or brought closest to the goal value and keeping the three-day farming schedule.

The farming scheduling method 200 includes generating a farming schedule for one week (seven days) being scheduling days provided for a user by combining the kept seven days (= three days + three days + one day), and notifying the generated farming schedule to the user (224). Additionally, the farming scheduling method 200 may include determining reliability of a one-week (seven-day) farming schedule by calculating daily stresses again after generating the one-week (seven-day) farming schedule.

After repeating on a weekly basis such repetition of generation of a three-day farming schedule and notification of a seven-day farming schedule to the user, an n-th farming scheduling process 22n includes generating a three-day farming schedule at the end of the farming period 201, and notifying a one-week farming schedule to the user.

As described above, compared with a case of generating a long-term farming schedule over an entire farming period 201 or a monthly long-term farming schedule, on the basis of uncertain information such as a long-term weather prediction, a farming schedule is repeatedly generated on the basis of certain information such as a short-term weather prediction for approximately two weeks (13 days) in this example. Additionally, when information about three days for which a farming schedule is generated is used in a weighted manner, a farming schedule based on more accurate information is generated. Accordingly, a farming schedule suited for a growth environment of a crop can be provided, and reliability of farming support can be improved.

While a farming schedule for the next three days being a target is generated and is notified to a user on a daily or weekly basis in Figs. 2A and 2B, a long-term farming schedule may be generated on a monthly, seasonal, or even longer-term basis by repeating three-day farming schedules, and be notified at once. Thus, a latest farming schedule can be highly accurately generated and notified, while a long-term farming schedule can be used as a reference for long-term planning (a material, a machine, and manpower).

Further, the most desirable stress condition for selection of an appropriate farming schedule is a case that a sum total of stresses during the stress calculating period (e.g. 13 days) including the farming scheduling period (hereinafter also referred to as a partial period: e.g. three days) and the stress observation period (e.g. 10 days) is zero, and a daily stress is also zero. Alternatively, the condition is a case that the sum total of stresses is zero, and also a fluctuation of a daily stress is small. Alternatively, the condition is a case that the sum total of stresses is less than or equal to a first threshold, and also a daily stress is less than or equal to a second threshold (< first threshold). Alternatively, the condition is a case that a difference between a goal stress related to a purpose based on present growth status and the sum total of stresses, and a difference between the goal stress and a daily stress are respectively less than or equal to a third threshold. In addition, various conditions related to a farming schedule are used depending on a crop, a kind thereof, or a stage (e.g. budding, growth, flowering, and fruition) thereof. A predetermined farming period being a period preceding a stress observation period is set as a farming scheduling period.

Further, while Figs. 2A and 2B illustrate, as an example, a case that a farming scheduling period (partial period) is set to three days, a stress observation period is set to 10 days, and a stress calculating period is set to 13 days, each period may be set to an appropriate period. Further, while scheduling days are set to one week (seven days) in Fig. 2B, the scheduling days may be set to 12 days related to a calendar, 15 days related to a lunar age, or the like.

(User Interface)

Figs. 2C and 2D are diagrams illustrating user interfaces in the farming support method by the information processing system including the information processing device according to the present example embodiment. Figs. 2C and 2D illustrate display output and operation input for a user on a screen on a communication terminal 210.

A farming support application program 231 indicates a state where a user instructs start of a farming support application program according to the present example embodiment. For example, when the farming support application program is started, a plurality of menus (unillustrated) for farming support are displayed, and when farming scheduling is selected, an initialization screen of the farming scheduling application program is displayed. The initialization screen includes input frames for input parameters 232 from the user, the parameters being used for farming scheduling. For example, the input parameters 232 include a cultivated field location, a kind of a crop, a planting date of the crop, a soil analysis result of the target cultivated field, a ridge width, a planting interval, and a report period to the user but are not limited thereto. Further, while the cultivated field location is input in longitude and latitude, the input form is not limited thereto.

When parameters used for farming scheduling are input, and farming scheduling is instructed by a user or the like, a recommended farming schedule generated on the basis of the input parameters and information stored in a database is transmitted to the communication terminal 210, and the transmitted recommended farming schedule is displayed on the screen on the communication terminal 210. A predicted harvest date and a predicted yield are displayed as goal information 234 in the displayed recommended farming schedule. The details of the goal information 234 are not limited to this example. Further, a farming schedule 235 in Fig. 2C includes irrigation and a daily irrigation amount, fertilization, and a fertilizing amount as a farming schedule of a week. The display scheme of the recommended farming schedule is not limited to this example. Further, the display of the farming schedule 235 is not limited to irrigation and fertilization, and a farming schedule related to an element essential to the crop or an element that may be a large stress depending on a purpose is displayed and is consequently reported to the user.

Further, the user inputs a daily farming result 233 as a farming diary. For example, inputs to the farming result 233 include a date of farming, an amount of performed irrigation, a type of performed fertilization, a fertilizing amount, and a change in the crop, but items included in the farming diary are not limited thereto. The input form is not limited to the above either. A history of a daily farming result 233 is stored in the database and is referred to in subsequent farming scheduling in the present example embodiment. Further, the history is also referred to in farming scheduling in a following year or later, in the present example embodiment.

Figs. 2E and 2F are diagrams illustrating a modified example of user interfaces in the farming support method by the information processing system including the information processing device according to the present example embodiment. Figs. 2E and 2F illustrate display output and operation input for a user on the screen on the communication terminal 210. In Figs. 2E and 2F, a same reference sign is given to a component similar to that in Figs. 2C and 2D, and overlapping description thereof is omitted.

For example, when the farming support application program is started, a plurality of menus (unillustrated) for farming support are displayed, and when farming scheduling is selected, an initialization screen of the farming scheduling application program is displayed. The initialization screen displays input frames for input parameters from the user, the parameters being used for farming scheduling. For example, the input parameters include a cultivated field ID 242, a crop ID 243, periods 244 for calculating a stress for farming scheduling, and other setting data 245 used for farming scheduling. ID stands for identifier. The periods 244 include an entire period, a report period (a period for which a farming schedule is reported to the user), a partial period (a period during which a farming schedule is generated: e.g. three days in this example), and an observation period (a period during which an effect of farming work is observed: e.g. 10 days in this example). The other setting data 245 may include a planting date of a crop, a soil analysis result of a target cultivated field, a ridge width, and a planting interval that are input in Fig. 2C. Further, Fig. 2F also illustrates a start button 246 and a return button 247 for farming scheduling.

When the start button 246 is touched, a farming schedule is generated. Then, in Fig. 2F, an entire farming period, a past stress history, and a 13 day-stress calculated for farming scheduling are displayed (248), and an enlarged view of a farming schedule for that current day (September 6 in Fig. 2F) out of three days (September 5 to September 7) is displayed (249).

Further, corresponding to Fig. 2B, an enlarged view of a farming schedule for that day (September 8 in Fig. 2E) out of a farming schedule for three days (September 8 to September 10) generated after three days (September 8) is displayed (249).

While display output and operation input combining Figs. 2C and 2E are also feasible, the output and input are not limited thereto. Specifically, a parameter for requiring user input, or another parameter for to be notified to the user and another element of a farming schedule are displayed when available.

Fig. 2G is a diagram illustrating a user interface in the farming support method by the information processing system including the information processing device according to the present example embodiment. Fig. 2G illustrates display output and operation input for a user setting a farming purpose on the screen on the communication terminal 210. In Fig. 2G, a same reference sign is given to a component similar to that in Figs. 2C and 2D, and overlapping description thereof is omitted.

The user inputs goal information 253 as a farming purpose. For example, the input goal information 253 includes an input date of the farming purpose, a scheduled harvest date, a goal yield, and a taste goal of a harvest but is not limited thereto. The input form is not limited to the above either.

A recommended farming schedule is generated on the basis of parameters including the input farming purpose and information stored in a database, and is subsequently transmitted to the communication terminal 210 and displayed on the screen on the communication terminal 210. The displayed recommended farming schedule displays the input farming purpose in addition to a predicted harvest date and a predicted yield as goal information 254. The details of the goal information 254 is not limited to the aforementioned example. Further, for example, in Fig. 2G, a farming schedule 255 is set to decrease an irrigation amount and increase a water stress in order to increase a sugar content.

An example of irrigation and an irrigation amount, and fertilization and a fertilizing amount that are reported in sequences on a daily basis has been described by reference to Figs. 2C to 2G. However, without being limited to the aforementioned example, irrigation and an irrigation amount, and fertilization and a fertilizing amount may be reported in sequences on an hourly basis.

(System Configuration)

Fig. 3A is a block diagram illustrating a configuration of an information processing system 300 including an information processing device 310 according to the present example embodiment.

The information processing system 300 includes a communication terminal 210, an information processing device 310 generating a farming schedule, and a database 320 storing data for generating a farming schedule, the components being connected through a communication network 340. The communication terminal 210 includes an inputting unit (inputter) 331 by which a user inputs data and an operation, and an outputting unit (outputter) 332 including a displaying unit that displays a farming schedule. While the information processing device 310 and the database 320 are illustrated as separate devices in Fig. 3A, the information processing device 310 may include the database 320.

(Operation Sequence)

Fig. 3B is a sequence diagram illustrating an operating procedure of the information processing system 300 including the information processing device 310 according to the present example embodiment.

In Step S301, the communication terminal 210 logs into the information processing device 310, downloads a farming support application program as needed, and then in Step S303, starts the farming support application program.

In Step S305, the information processing device 310 instructs the communication terminal 210 to display an input instructing display for setting information by the farming support application program. The input instructing display for setting information corresponds to input frames for input parameters in Figs. 2C and 2E. When setting information is input in Step S307, the communication terminal 210 transmits the input setting information to the information processing device 310, stores the setting information in the database 320, and prepares farming scheduling.

In Step S309, the information processing device 310 acquires data used for farming scheduling. The data is stored in the database 320. In Step S311, the information processing device 310 calculates an intake and a requirement during a total period including a partial period and a stress observation period. The intake represents an intake of each element that can be taken in by a crop, and is an indicator in farming scheduling. The requirement represents a requirement of each element preferably provided for the crop and is an indicator in farming scheduling. Then, in Step S313, the information processing device 310 calculates a stress of each element on the basis of the calculated intake and requirement.

In Step S315, the information processing device 310 calculates or acquires a goal stress on the basis of information from at least one of the communication terminal 210 (referring to Fig. 2G) and the database 320. When the goal stress is preset to zero or the like, Step S315 may not need to be executed. In Step S317, the information processing device 310 generates a farming schedule during the partial period in such a way that the calculated stress is reduced (or brought closer to the goal stress). When scheduling days to be reported to the user exceeds the partial period, generation of a farming schedule during the partial period is repeated until the scheduling days are exceeded.

In Step S319, the information processing device 310 transmits the farming schedule generated for the scheduling days to the communication terminal 210. In Step S321, the communication terminal 210 receives the farming schedule for the scheduling days, and outputs and reports the schedule to the user. When farming for that day ends, in Step S323, the communication terminal 210 inputs a farming diary. In Step S325, the information processing device 310 receives the farming diary and stores the diary in the database 320 in a searchable manner for use in future farming scheduling.

On the following day (or after three days, one week, or the like), the information processing device 310 acquires data used for the process from the database 320 in Steps S309 to S317 and generates a farming schedule for subsequent three days. The operation procedures in subsequent Steps S319 to S325 are similar to the previous round.

Farming scheduling and reporting to the user may be performed on the day before the start of a farming schedule as illustrated in Fig. 3B or may be performed on the starting date of the farming schedule.

<<Functional configuration of Information processing device>>

Fig. 4 is a block diagram illustrating a functional configuration of the information processing system 300 including the information processing device 310 according to the present example embodiment. Fig. 4 illustrates the database 320 storing data, the inputting unit 331 such as a keyboard included in the communication terminal 210, the outputting unit 332 such as a display, and the information processing device 310 processing data through program control.

The database 320 includes weather data 421, soil data 422, farming data 423, crop data 424, and calculation setting data 425.

The weather data 421 represent past weather data and short-term weather prediction data of a target cultivated field and a vicinity thereof. The weather data 421 include daily values of a maximum temperature, a minimum temperature, a sunshine amount, a precipitation, humidity, an airflow volume, and a wind direction. The soil data 422 include chemical soil component information, physical soil component information, and topographical information of the target cultivated field. The farming data 423 include a farming schedule already performed and a subsequent tentative farming schedule during a present period. The farming schedule includes an irrigation amount and a stage thereof, a fertilizing amount and a stage thereof, and plowing information. Further, the tentative farming schedule may be a farming schedule of a previous year or the like. The crop data 424 include phenological information such as a time from germination to flowering of a target crop, information about growth such as dependency of a growth rate on a sunshine duration when necessary and sufficient amounts of nutrition and water are provided, and information about a nitrogen content that can be taken in with respect to a water content that can be taken in. The calculation setting data 425 include information such as an entire scheduling period being an entire schedule during which scheduling is performed, scheduling days being a number of days for which calculation is performed in one round of scheduling, effect days being a number of days in which a farming effect becomes apparent, and a comparison threshold being a threshold in a stress comparison. A starting date and an ending date of the entire scheduling period are identical to and synchronized with those of the tentative farming schedule in the farming data.

The information processing device 310 includes an intake calculating unit (intake calculator) 411, a requirement calculating unit (requirement calculator) 412, a purpose-by-goal calculating unit (purpose-by-goal calculator) 413, a stress calculating unit (stress calculator) 414, and a farming scheduling unit (farming scheduler) 415.

From an input schedule, the intake calculating unit 411 calculates daily amounts of nutrition and water that can be taken in by a crop during a period specified on the basis of conditions of the crop and an environment. For example, by use of a soil model, the intake calculating unit 411 calculates a water content that can be actually taken in by the crop from an irrigation amount by calculating a water retentivity of soil,

From an input schedule, the requirement calculating unit 412 calculates daily amounts of nutrition and water preferably provided for a crop during a period specified on the basis of the crop, a present state of the crop, and a goal. For example, by use of the weather data, the requirement calculating unit 412 calculates a transpiration amount from a leaf, an amount consumed in photosynthesis, and the like, and determines a water amount canceling the amounts to be a requirement.

By also using data input by the inputting unit 331, the purpose-by-goal calculating unit 413 calculates a daily optimum stress for each purpose during the specified period. Alternatively, a time and an amount of a stress to be provided may be freely determined. For example, when yield maximization is a purpose, constant zero becomes an optimum stress.

The stress calculating unit 414 calculates a nutritional stress and a water stress during the specified period on the basis of a difference or a ratio between a nutrition amount and a water content to be taken in by a crop that are calculated by the intake calculating unit 411, and a nutrition amount and water content preferably provided for the crop that are calculated by the requirement calculating unit 412, respectively.

The farming scheduling unit 415 compares a stress of a crop caused by an input schedule calculated by the stress calculating unit 414 with an optimum stress calculated by the purpose-by-goal calculating unit 413 and generates a new schedule during the specified period in such a way that the both approach one another. For example, by use of a genetic algorithm, the farming scheduling unit 415 generates a large number of schedule candidates including an amount (fertilizing amount) and a stage of a fertilizer to be provided, and an amount and a stage of irrigation, and employs a schedule candidate by which a calculated stress becomes closest to the optimum stress, out of the schedule candidates. However, the employment method is not limited to the above. Further, the farming scheduling unit 415 updates a farming schedule during the specified period in the farming data 423 in the database 320 with the generated farming schedule.

While the present example embodiment is described with a water content and nutrition as examples of growth elements of a crop, the elements are not limited thereto, and an appropriate farming schedule may be generated by calculating a stress for another element influencing growth of the crop.

(Stress calculating unit)

Fig. 5A is a block diagram illustrating a configuration of the stress calculating unit 414 according to the present example embodiment.

The stress calculating unit 414 includes an intake acquiring unit (intake acquirer) 511, a requirement acquiring unit (requirement acquirer) 512, and a difference (or ratio) calculating unit (difference (or ratio) calculator) 513.

The intake acquiring unit 511 acquires a daily intake calculated by the intake calculating unit 411 over a period including a partial period and a stress observation period. The requirement acquiring unit 512 acquires a daily requirement calculated by the requirement calculating unit 412 over a period including the partial period and the stress observation period. The difference (or ratio) calculating unit 513 calculates as a stress a difference or a ratio between a daily intake calculated by the intake calculating unit 411 and a daily requirement calculated by the requirement calculating unit 412, and outputs the stress to the farming scheduling unit 415.

Examples of formulas for calculating stresses of several elements are presented below. Other formulas for calculating the following stresses or formulas for calculating stresses of other elements are not described in detail here.

Nitrogen stress (one of nutritional stresses)

[Eqn. 1]

$$S_N = 1 - \alpha \frac{N_{use}}{N_{need}} \quad \cdot \cdot \text{(Eqn. 1)}$$

$S_N$ denotes a nitrogen stress, $N_{need}$ denotes a nitrogen content preferably provided for growth, $N_{use}$ denotes a nitrogen content that can be used for growth, and $\alpha$ denotes a constant. $N_{need}$ is a nitrogen content required for synthesizing each tissue of a crop. $N_{need}$ may be calculated a from nitrogen content required for growth, and a value thereof depends on growth of the crop up to a present point and therefore depends on past weather (a temperature, a precipitation, a sunshine level, humidity, an airflow volume, and a wind direction), a past soil state (a component of soil, a water content, a total nitrogen content, and drainability), and a past farming schedule (an irrigation amount and a fertilizing amount). $N_{use}$ is an available nitrogen content that may be calculated from a soil water content, drainability of soil, a soil total nitrogen content, a nitrogen absorption rate of the crop, a root density, an amount of formaldehyde ($CH_2O$) preferably provided for nitrogen fixation of the crop, a protein content in each part, an amount of $CH_2O$ preferably provided for protein synthesis, a planting density of the crop, and a mass of a seed. The $CH_2O$ amount is obtained by converting a glucide expressed by $C_nH_{2n}O_n$ into a $CH_2O$ amount, the glucide being generated by photosynthesis.

Drought Stress

[Eqn. 2]

$$S_{W_d} = 1 - \beta \frac{W_{upt}}{W_{eva}} \quad \cdot \cdot \text{(Eqn. 2)}$$

$S_{Wd}$ denotes a drought stress, $W_{upt}$ denotes a water intake from a root, and $W_{eva}$ denotes a transpiration amount of water, and $\beta$ denotes a constant. $W_{upt}$ can be calculated by the following formula.

[Eqn. 3]

$$W_{upt} = \sum_{d} \mu e^{\delta(W_s(d) - W_{min}(d))} \quad \cdot \cdot \cdot (\text{Eqn. } 3)$$

$W_s(d)$ denotes a water content in soil and depends on a depth d, and $W_{min}(d)$ denotes a minimum water content of the soil water content. Also, $\mu$ and $\delta$ denote constants. $W_{eva}$ can be calculated by the following formula.
[Eqn. 4]

$$W_{eva} = \varepsilon[1 - e^{-KA_L}] \quad \cdot \cdot \cdot (\text{Eqn. } 4)$$

Here, $\kappa$ denotes an absorption coefficient of light, $A_L$ denotes an area of a leaf, and $\varepsilon$ denotes a constant. The soil water content depends on a weather (a temperature, a precipitation, a sunshine level, humidity, an airflow volume, and a wind direction), a soil state (a component of soil and drainability), and a farming schedule (an irrigation amount and a fertilizing amount).

Hyperhydration Stress

[Eqn. 5]

$$S_{W_e} = 1 - \gamma \frac{W_{smax} - W_s}{S_{min}} \quad \cdot \cdot \cdot (\text{Eqn. } 5)$$

$W_{smax}$ denotes a water content in soil in saturation, $W_s$ denotes a soil water content, $S_{min}$ denotes a minimum pore space in the soil, and $\gamma$ denotes a constant. The soil water content depends on a weather (a temperature, a precipitation, a sunshine level, humidity, an airflow volume, and a wind direction), a soil state (a component of soil and drainability), and a farming schedule (an irrigation amount and a fertilizing amount).

(Farming scheduling unit)

Fig. 5B is a block diagram illustrating a configuration of the farming scheduling unit 415 according to the present example embodiment. The unit is denoted as a farming scheduling unit (farming scheduler) 415A in the present example embodiment.

The farming scheduling unit 415A includes a calculated stress acquiring unit (calculated stress acquirer) 521, a goal stress acquiring unit (goal stress acquirer) 522, a stress determining unit (stress determiner) 523, a tentative scheduling unit (tentative scheduler) 524, a tentative schedule/stress keeping unit (tentative schedule/stress keeper) 525, a schedule determining unit (schedule determiner) 526, and a schedule outputting unit 527.

The calculated stress acquiring unit 521 acquires a daily stress from the stress calculating unit 414. The goal stress acquiring unit 522 acquires a daily goal stress from the purpose-by-goal calculating unit 413. When the goal stress is zero or another constant value, the goal stress acquiring unit 522 is not required. The stress determining unit 523 includes an operator calculating a difference or a ratio between a daily calculated stress and a daily goal stress, and a comparator comparing the comparison result with a threshold, and determines whether or not the difference or the ratio between the calculated stress and the goal stress falls within the threshold.

The tentative scheduling unit 524 generates a tentative schedule feasible during a farming scheduling period. A number of generated tentative schedules is based on a history stored in the database 320, and a smaller number is desirable. The tentative schedule generated by the tentative scheduling unit 524 represents information being a basis when the intake calculating unit 411 calculates an intake. Further, the tentative schedule generated by the tentative scheduling unit 524 is associated with a determination result determined by the stress determining unit 523 with respect to a stress calculated on the basis of the tentative schedule and is stored in the tentative schedule/stress keeping unit 525. A tentative schedule including a difference or a ratio exceeding the threshold may be deleted from candidates. The schedule determining unit 526 determines a tentative schedule with a best determination result (being within the threshold and a difference or a ratio being minimum) by the stress determining unit 523 to be a farming schedule out of tentative schedules stored in the tentative schedule/stress keeping unit 525, and outputs the schedule to the schedule outputting unit 527.

The schedule outputting unit 527 acquires scheduling days (report period) for reporting to a user from the inputting unit 331 and keeps the scheduling days until a generated farming schedule exceeds the scheduling days. Then, when the generated farming schedule exceeds the scheduling days, the schedule outputting unit 527 outputs a farming schedule corresponding to the scheduling days to the outputting unit 332. Further, the determined farming schedule is stored for future reference in the farming data 423 in the database 320. A tentative schedule with a minimum difference or ratio is not necessarily the best farming schedule, and another condition may be added.

Fig. 5C is a block diagram illustrating a modified example of a configuration of the farming scheduling unit 415 according to the present example embodiment. This example is denoted as a farming scheduling unit 415B. In Fig. 5C, a same reference sign is given to a functional unit similar to that in Fig. 5B, and overlapping description thereof is omitted.

The farming scheduling unit 415B includes a calculated stress acquiring unit (calculated stress acquirer) 521, a goal stress acquiring unit (goal stress acquirer) 522, a stress determining unit (stress determiner) 523, an initial schedule acquiring unit (initial schedule acquirer) 534, a schedule updating unit (schedule updater) 535, a schedule determining unit (schedule determiner) 536, and a schedule outputting unit 527.

The initial schedule acquiring unit 534 acquires, as an initial schedule, farming data 423 in the database 320 and a farming schedule stored in a calculation setting data 425, for the same crop in the same condition (a stage and a purpose). The schedule updating unit 535 modifies a farming schedule in accordance with a determination result by the stress determining unit 523. The schedule updating unit 535 reflects an initial schedule or a modified schedule in processing of calculating an intake in the intake calculating unit 411. The schedule determining unit 536 determines, as a farming schedule, a schedule included in the schedule updating unit 535 when a determination result by the stress determining unit 523 meets a predetermined condition, and transmits the determined farming schedule to the outputting unit 332. Further, the determined farming schedule is stored for future reference in the farming data 423 in the database 320.

While not illustrated in Figs. 5B and 5C, the schedule outputting unit 527 may be configured to perform a daily stress calculation on a collective farming schedule corresponding to the scheduling days again and check suitability of the farming schedule.

(Database)

Figs. 6A to 6D are diagrams illustrating a configuration of the database 320 according to the present example embodiment.

Fig. 6A is a diagram illustrating a data storage example in the database 320 illustrated in Fig. 4. While Fig. 6A illustrates that data are stored for each target cultivated field 601, the arrangement is not related to an arrangement in the database 320.

The database 320 stores a data type 602 and a data content 603 in a searchable manner, the data type and the data content being associated with a target cultivated field 601. The data type 602 and the data content 603 have been described with reference to Fig. 4, and therefore description thereof is omitted. The data type 602 and the data content 603 are not limited to Fig. 6A.

Fig. 6B is a diagram illustrating a storage example of the calculation setting data 425 for calculating a stress.

The calculation setting data 425 store a plurality of farming stages 612 associated with a target crop 611. Then, the calculation setting data 425 store a plurality of calculation targets 613 related to each farming stages 612. The calculation targets 613 include an intake, a requirement, a stress, and a goal stress. Then, the calculation setting data 425 incudes used parameters 614 and formulas 615 that are associated with each set of a target crop 611, a farming stage 612, and a calculation target 613.

Figs. 6C and 6D are lists of data examples stored in the database 320. Figs. 6C and 6D list examples of data related to soil, data related to a crop parameter, data related to an initial value, data related to planting, data related to irrigation, data related to cultivation, data related to a cultivated field, data related to fertilization, and data related to weather. The database 320 may additionally store data related to calculation of a stress.

(Intake Calculating Table)

Fig. 7A is a diagram illustrating a configuration of an intake calculating table 710 according to the present example embodiment. The intake calculating table 710 is used for calculating an intake by the intake calculating unit 411.

The intake calculating table 710 stores a plurality of elements 712 for calculating a stress, the elements being associated with each stress calculating period 711. The intake calculating table 710 includes a parameter(s) 713 for calculating an intake, the parameter being related to each element 712. When the element 712 represents water, the parameters 713 include a water capacity of soil, an irrigation amount history, and a crop intake that can be taken in by a crop. When the element 712 represents nutrition, the parameters 713 include a retentive amount of the soil, a fertilizing amount history, and a crop intake that can be taken in by the crop. Then, the intake calculating table 710 includes an intake 714 calculated on the basis of the parameters 713.

(Requirement Calculating Table)

Fig. 7B is a diagram illustrating a configuration of a requirement calculating table 720 according to the present example embodiment. The requirement calculating table 720 is used for calculating a requirement by the requirement calculating unit 412.

The requirement calculating table 720 is generated in relation to a farming stage 721. The requirement calculating table 720 includes a plurality of elements 723 for calculating a stress, the elements being associated with each stress calculating period 722. The requirement calculating table 720 stores a parameter(s) 724 for calculating a requirement, the parameter being related to each element 723. When the element 723 represents water, the parameters 724 include a transpiration amount from a leaf or the like, and another water consumption. When the element 723 represents nutrition, the parameters 724 include a degree of growth (growth history) and another nutrition consumption. Then, the requirement calculating table 720 includes a requirement 725 calculated on the basis of the parameters 724.

(Goal Value Calculating Table)

Fig. 7C is a diagram illustrating a configuration of a goal value calculating table 730 according to the present example embodiment. The goal value calculating table 730 is used for calculating a stress goal value by the purpose-by-goal calculating unit 413.

The goal value calculating table 730 includes a plurality of elements 732 for calculating a stress, the elements being associated with each stress calculating period 731. The goal value calculating table 730 includes a parameter(s) 733 for calculating a goal amount, the parameter being related to each element 732. When the element 732 represents water, the parameters 733 include a present stage of phenology, a phenology history, a yield goal, and an environment prediction. When the element 732 represents nutrition, the parameters 733 include a present stage of phenology, a phenology history, a yield goal, and an environment prediction. Then, the goal value calculating table 730 includes a stress goal value 735 calculated depending on a farming purpose(s) 734 on the basis of the parameters 733. The farming purposes 734 include a taste, a color, and a luster of a harvest in addition to a yield. For example, in the case of the taste, a property of a crop at harvest such as "an increased sugar content" or "enhanced sourness" is included. When attempting to grow high-sugar-content strawberries, the stress goal value 735 includes farming in such a way to maintain a stress immediately before harvest high rather than zero.

(Stress Calculating Table)

Fig. 8 is a diagram illustrating a configuration of a stress calculating table 800 according to the present example embodiment. The stress calculating table 800 is used for calculating a stress on the basis of a calculated intake and a calculated requirement by the stress calculating unit 414.

The stress calculating table 800 includes a plurality of elements 802 for calculating a stress, the elements being associated with each of scheduling days (stress calculating period) 801. The stress calculating table 800 includes a calculated intake 803 and a calculated requirement 804 that are related to each element 802. Further, the stress calculating table 800 stores a stress formula 805. Then, the stress calculating table 800 includes a stress value (a difference or a ratio) 806 calculated in accordance with the stress formula 805 on the basis of the calculated intake 803 and the calculated requirement 804.

(Farming scheduling Table)

Fig. 9A is a diagram illustrating a configuration of a farming scheduling table 910 according to the present example embodiment. The farming scheduling table 910 is used for calculating stresses for a plurality of scheduling candidates and determining a farming schedule on the basis of the calculated stresses by the farming scheduling unit 415A.

The farming scheduling table 910 includes, for each day in a stress calculating period 912, an element 913, a calculated stress 914, a goal stress 915, a determination result of whether a difference is within a threshold 916, and weighting 917 for each day or element, each item being associated with each scheduling candidate 911. Then, the farming scheduling table 910 includes a sum total of stresses 918 during the stress calculating period. A scheduling candidate with a minimum sum total of stresses 918 is determined to be a farming schedule 919 (indicated as "employed" in Fig. 9A). Each scheduling candidate 911 includes a scheduling candidate during a farming scheduling period from the first day to the third day and a schedule history of a farming schedule stored as farming data 423 on and after the fourth day in the database 320. Then, one of the scheduling candidates is determined to be the farming schedule 919.

Furthermore, for example, a farming schedule may be selected by a user, by displaying several types of farming schedules and sum totals of stresses related to the farming schedules on a user interface.

Fig. 9B is a diagram illustrating a configuration of a farming scheduling table 920 according to the present example embodiment. The farming scheduling table 920 is used for acquiring an initial farming schedule from a stored history schedule, calculating a stress, and modifying the farming schedule on the basis of the calculated stress, by the farming scheduling unit 415B.

The farming scheduling table 920 includes an element 922, a calculated stress 923, a goal stress 924, a determination result of whether a difference is within a threshold 925, for each day in scheduling days (stress calculating period) 921. Then, the farming scheduling table 920 includes necessity for rescheduling 926 and a farming schedule 927 depending on the determination result of whether a difference is within a threshold 925. The farming schedule 927 stores the initial farming schedule during the farming scheduling period (partial period) and, when the necessity for rescheduling 926 is "yes," a modified farming schedule during the period.

Fig. 9C is a diagram illustrating a configuration of a farming scheduling table 930 according to the present example embodiment. The farming scheduling table 930 is a table used, when scheduling days for reporting to a user exceed a farming scheduling period (partial period), for collectively outputting farming schedules during farming scheduling periods corresponding to the scheduling days.

The farming scheduling table 930 includes, for example, sets of three-day farming schedules 932 successively determined and a farming schedule 933 corresponding to the scheduling days for reporting to the user, each item being associated with scheduling days 931.

<<Hardware Configuration of Information processing device>>

Fig. 10 is a block diagram illustrating a hardware configuration of the information processing device 310 according to the present example embodiment.

In Fig. 10, a central processing unit (CPU) 1010 is a processor for arithmetic control and provides a functional unit in the information processing device 310 in Fig. 4 by executing a program. A read only memory (ROM) 1020 stores initial data, fixed data for a program and the like, and a program. A communication controlling unit (communication controller) 1030 controls communication with the communication terminal 210, the database 320, and another device through a network 340.

A random access memory (RAM) 1040 is a random access memory used by the CPU 1010 as a work area for temporary storage. The RAM 1040 secures an area for storing data for providing the present example embodiment. A target cultivated field ID 1041 is an identifier indicating a cultivated field being a target of farming scheduling. A stress calculating period 1042 is a period for calculating a stress, the period being obtained by adding a partial period and a stress observation period. The intake calculating table 710 is a table used for calculating an intake during the stress calculating period 1042. The requirement calculating table 720 is a table used for calculating a requirement during the stress calculating period 1042. The stress calculating table 800 is a table used for calculating a stress during the stress calculating period 1042. The goal value calculating table 730 is a table used for calculating a stress goal value during the stress calculating period 1042. The farming scheduling tables 910 and 920 are tables used for generating a farming schedule depending on a stress during the stress calculating period 1042. A determined farming schedule 1043 is a farming schedule reported to a user of the communication terminal 210. Transmitted/received data 1044 are an area for storing data transmitted and received to and from the communication terminal 210 and the database 320 through the communication controlling unit 1030.

A storage 1050 stores a database and various types of parameters, or the following data or program for providing the present example embodiment. A target cultivated field database 1051 stores environmental data of soil and the like in a target cultivated field related to the target cultivated field ID 1041.

The storage 1050 stores the following programs. An information processing device controlling program 1052 is a program controlling the entire information processing device 310. An intake calculating module 1053 is a module calculating an intake during the stress calculating period 1042 by use of the intake calculating table 710. A requirement calculating module 1054 is a module calculating a requirement during the stress calculating period 1042 by use of the requirement calculating table 720. A stress calculating module 1055 is a module calculating a stress during the stress calculating period by use of the stress calculating table 800. A goal value calculating module 1056 is a module calculating a goal value during the stress calculating period by use of the goal value calculating table 730. A farming scheduling module 1057 is a module generating a farming schedule by use of the farming scheduling tables 910 and 920. A communication controlling module 1058 is a module controlling transmission and reception to and from the communication terminal 210 and the database 320 through the communication controlling unit 1030.

A general-purpose function included in the information processing device 310, and a program and data that are related to another feasible function are not illustrated in the RAM 1040 and the storage 1050 in Fig. 10.

<<Processing Procedure of Information processing device>>

Fig. 11 is a flowchart illustrating processing of the information processing device 310 according to the present example embodiment. The flowchart is executed by the CPU 1010 in Fig. 10 by use of the RAM 1040 and provides the functional units of the information processing device 310 in Fig. 4. Fig. 11 illustrates one round of processing for generating a farming schedule corresponding to scheduling days for reporting to a user. The flowchart in Fig. 11 is repeatedly executed for each set of scheduling days over an entire farming period.

In Step S1101, the information processing device 310 calculates an intake, a requirement, and a stress, and inputs or acquires calculation setting data for generating a farming schedule from the database 320. The calculation setting data include scheduling days from the inputting unit 331. In Step S1103, the information processing device 310 sets an initial scheduling period. In other words, the information processing device 310 calculates and sets an initial present scheduling period on the basis of the scheduling days and a scheduling period. Specifically, the initial present scheduling period is a total period (stress calculating period) of a farming scheduling period and a stress observation period from the first day of the scheduling days. Then, in Step S1105, the information processing device 310 executes processing of scheduling farming, the processing including calculating a stress during a stress generating period by use of the calculation setting data and generating a farming schedule during the farming scheduling period.

When the processing of scheduling farming ends, in Step S1107, the information processing device 310 determines whether or not the processing during the scheduling days (report period) is ended. When the processing during the report period is not ended, in Step S1111, the information processing device 310 determines a next scheduling period, returns to Step S1105, and executes the processing of scheduling farming on the present scheduling period.

When the processing for the report period is ended, in Step S1113, the information processing device 310 records a stored farming schedule history during the entire schedule for reference.

(Farming scheduling processing)

Fig. 12A is a flowchart illustrating processing of scheduling farming (S1105) according to the present example embodiment. Fig. 12A indicates a procedure of calculating stresses for a plurality of schedule candidates and generating an appropriate farming schedule on the basis of the stresses.

In Step S1211, the information processing device 310 acquires information such as a formula, weather data, soil data, farming data, and crop data, the information including a stress calculating period, farming history information, and information about a stress observation period from the database 320. In Step S1213, the information processing device 310 executes processing of calculating a requirement by use of the requirement calculating table 720. Next, in Step S1215, the information processing device 310 executes processing of calculating an intake by use of the intake calculating table 710. Then in Step S1217, the information processing device 310 executes processing of calculating a stress based on a current schedule candidate, by use of the stress calculating table 800. Steps S1213 and S1215 may be executed in reverse order.

In Step S1219, the information processing device 310 executes processing of calculating a goal stress by use of the goal value calculating table 730. Then, in Step S1221, the information processing device 310 compares the calculated stress with the goal stress. In Step S1223, the information processing device 310 determines whether or not the calculated stress is an appropriate stress on the basis of the comparison result. For example, the information processing device 310 determines that the calculated stress is an appropriate stress when a difference between the two stress values is less than a comparison threshold, and an inappropriate stress when the difference is greater than or equal to the comparison threshold. When the calculated stress is not an appropriate stress, in Step S1225, the information processing device 310 deletes the current schedule from schedule candidates. On the other hand, when the calculated stress is an appropriate stress, in Step S1227, the information processing device 310 keeps the current schedule as a schedule candidate.

In Step S1229, the information processing device 310 determines whether or not another schedule exists. When another schedule exists, the information processing device 310 returns to Step S1211 and determines whether or not the other schedule is a schedule candidate with an appropriate stress. When another schedule does not exist, selection of a schedule candidate is ended, and in Step S1231, the information processing device 310 determines a least stressful schedule candidate to be a new farming schedule and outputs the schedule.

Fig. 12B is a flowchart illustrating a modified example of a procedure of the processing of scheduling farming according to the present example embodiment. Fig. 12B is a procedure of calculating stresses for a plurality of schedule candidates and generating an appropriate farming schedule on the basis of the stresses. In Fig. 12B, a same step number is given to a step similar to that in Fig. 12A, and overlapping description thereof is omitted.

When the determination result in Step S1223 is not an appropriate stress, in Step S1245, the information processing device 310 modifies the current schedule candidate and newly generates a schedule candidate. Then, in Step S1247, the information processing device 310 updates the farming data 423 in the database 320. The information processing device 310 returns to Step S1211 and repeats calculation of a stress and determination of whether or not the stress is appropriate.

On the other hand, when the determination result in Step S1223 is an appropriate stress, in Step S1249, the information processing device 310 determines a farming schedule during the scheduling period to be a current schedule and outputs the schedule.

The present example embodiment generates a farming schedule by use of a stress calculated by use of highly accurate short-term weather prediction data, and therefore is able to generate a highly accurate farming schedule for each purpose. In other words, for a purpose of yield maximization or the like, a farming schedule using short-term weather prediction data is generated instead of a farming schedule using long-term weather prediction data, and therefore accuracy of the generated farming schedule is improved, and reliability of farming support can be improved.

[Third example embodiment]

Next, an information processing system including an information processing device according to a third example embodiment of the present invention will be described. Compared with the aforementioned second example embodiment, the information processing system according to the present example embodiment differs in generating a farming schedule by setting an appropriate stress calculating period, taking a growth condition of a crop into consideration. Specifically, since a time required for an effect to become apparent is different between irrigation and fertilization, a stress observation period is classified by a stress type. For example, observation of a nutritional stress may be performed for a longer time and observation of a water stress may be performed for a shorter time. The remaining configuration and operation are similar to those according to the second example embodiment, and therefore a same reference sign is given to same components or operations, and detailed description thereof is omitted.

<<Functional configuration of Information processing device>>

Fig. 13 is a block diagram illustrating a functional configuration of an information processing device 1310 in an information processing system 1300 according to the present example embodiment. In Fig. 13, a same reference sign is given to a functional unit similar to that in Fig. 4, and overlapping description thereof is omitted.

The information processing device 1310 includes a stress calculating unit (stress calculator) 1314 and a stress calculating period setting unit (stress calculating period setter) 1316. The stress calculating unit 1314 calculates a stress during a stress calculating period set by the stress calculating period setting unit 1316 depending on a type and a kind of a crop, a cultivated field location, a stage, or the like. A farming scheduling unit 415 generates a farming schedule on the basis of a stress during the stress calculating period.

The stress calculating period setting unit 1316 sets an appropriate partial period and an appropriate stress observation period depending on a type and a kind of a crop, a cultivated field location, a stage, or the like.

(Setting table of stress calculating period)

Fig. 14 is a diagram illustrating a configuration of a setting table 1400 of a stress calculating period according to the present example embodiment. The setting table 1400 of a stress calculating period is used for setting an appropriate partial period and an appropriate stress observation period depending on a type and a kind of a crop, a cultivated field location, a growth process, a stage, or the like, by the stress calculating period setting unit 1316.

The setting table 1400 of a stress calculating period includes an optimum stress calculating period 1405 at the time, depending on conditions such as a type and a kind of a crop 1401, a cultivated field location 1402, a soil 1403, and a farming stage 1404. The farming stage 1404 includes climate and a farming purpose. Further, the stress calculating period 1405 represents a total period of a scheduling period (partial period) during which a farming schedule is generated and a stress observation period during which an effect of farming work is observed.

(Stress calculating period setting process)

Fig. 15 is a flowchart illustrating a procedure of a stress calculating period setting process according to the present example embodiment. The flowchart is executed by the CPU 1010 in Fig. 10 by use of the RAM 1040 and provides the stress calculating period setting unit 1316 in Fig. 13. The flowchart in Fig. 15 may be executed in parallel with Fig. 11, 12A, or 12B, or may be incorporated into the stress calculating period setting in Fig. 11, 12A, or 12B.

In Step S1501, the information processing device 1310 acquires parameters (e.g. a kind of a crop and a cultivated field) for determining a stress calculating period. Next, in Step S1503, the information processing device 1310 refers to the setting table 1400 of a stress calculating period and determines a stress calculating period (a farming scheduling period and a stress observation period) to be used. Then, in Step S1505, the information processing device 1310 outputs the determined stress calculating period to the stress calculating unit 1314.

The present example embodiment sets an appropriate stress calculating period, taking a crop and a growth condition of the crop into consideration, and generates a farming schedule suited for the crop and therefore is able to improve reliability of farming support.

[Fourth example embodiment]

Next, an information processing system including an information processing device according to a fourth example embodiment of the present invention will be described. Compared with the aforementioned second and third example embodiments, the information processing system according to the present example embodiment differs in selecting an appropriate farming schedule by changing a stress calculating period when calculating a stress. The remaining configuration and operation are similar to those according to the second and third example embodiments, and therefore a same reference sign is given to same components or operations, and detailed description thereof is omitted.

<<Functional configuration of information processing device>

Fig. 16 is a block diagram illustrating a functional configuration of an information processing device 1610 in an information processing system 1600 according to the present example embodiment. In Fig. 16, a same reference sign is given to a functional unit similar to that in Fig. 4, and overlapping description thereof is omitted.

The information processing device 1610 includes a farming scheduling unit (farming scheduler) 1615 and a stress calculating period updating unit (stress calculating period updater) 1617. The farming scheduling unit 1615 calculates stresses with respect to a plurality of scheduling periods (stress calculating periods) changed by the stress calculating period updating unit 1617, compares the stresses, selects an appropriate scheduling period, and generates a farming schedule.

The stress calculating period updating unit 1617 changes a scheduling period and causes the farming scheduling unit 1615 to execute farming scheduling. In practice, the change of the scheduling period by the stress calculating period updating unit 1617 is also communicated to the intake calculating unit 411, the requirement calculating unit 412, the purpose-by-goal calculating unit 413, and the stress calculating unit 414, and is used by the units.

(Stress calculating period updating table)

Fig. 17 is a diagram illustrating a configuration of a stress calculating period updating table 1700 according to the present example embodiment. The stress calculating period updating table 1700 is used for generating a farming schedule by the farming scheduling unit 1615 on the basis of a stress calculating period changed by the stress calculating period updating unit 1617.

The stress calculating period updating table 1700 includes a minimum value of a sum total of stresses 1702 during each stress calculating period 1701 being changed, the value being associated with each stress calculating period. As illustrated in Fig. 17, it is desirable that the change of a stress calculating period be a change by increasing or decreasing a farming scheduling period and a stress observation period with respect to an initially set stress calculating period. Further, it is desirable that the minimum value of a sum total of stresses 1702 be a value normalized in days.

Then, the farming scheduling unit 1615 compares normalized minimum values of sum totals of stresses for all the changed stress calculating periods and performs prioritization 1703. The farming scheduling unit 1615 refers to the prioritization 1703 and outputs a farming schedule 1704 related to the minimum value of all the sum totals of stresses as a selected farming schedule 1705.

Furthermore, for example, after the prioritization 1703 is referred to, several types of farming schedules and sum totals of stresses related to the farming schedules may be displayed on a user interface in order of priority, in order to have a user select a farming schedule.

(Stress calculating period updating process)

Fig. 18 is a flowchart illustrating a procedure of a stress calculating period updating process according to the present example embodiment. The flowchart is executed by the CPU 1010 in Fig. 10 by use of the RAM 1040 and provides the farming scheduling unit 1615 in Fig. 16. The flowchart in Fig. 18 may be executed in parallel with Fig. 11, 12A, or 12B, or may be incorporated into the farming scheduling in Fig. 11, 12A, or 12B.

In Step S1801, the information processing device 1610 acquires an increased or decreased stress calculating period from the stress calculating period updating unit 1617. In Step S1803, the information processing device 1610 calculates a stress during the acquired stress calculating period on the basis of a plurality of tentative farming schedules. Then, in Step S1805, the information processing device 1610 stores a minimum stress value and a related farming schedule as an optimum farming schedule during each stress calculating period.

In Step S1807, the information processing device 1610 determines whether or not every change to the stress calculating period is performed. When not every change to the stress calculating period is performed, in Step S1809, the information processing device 1610 increases or decreases the stress calculating period (a farming scheduling period and a stress observation period) by one day. Then, the information processing device 1610 returns to Step S1803 and repeats storing a minimum stress value and a related farming schedule during the changed stress calculating period.

When every change to the stress calculating period is performed, in Step S1811, the information processing device 1610 compares the stored minimum stress values, prioritizes the farming schedules, and in Step S1813, selects and outputs an appropriate farming schedule.

The present example embodiment generates an appropriate farming schedule by changing a stress calculating period and therefore is able to improve reliability of farming support.

[Fifth example embodiment]

Next, an information processing system including an information processing device according to a fifth example embodiment of the present invention will be described. Compared with the aforementioned second to fourth example embodiments, the information processing system according to the present example embodiment differs in selecting an appropriate farming schedule by changing information used in a stress observation period acquired from history information when calculating a stress. Specifically, while an optimum farming schedule during a partial period is currently obtained assuming a default value or a past farming schedule as a farming schedule during an observation period, the farming schedule during the observation period is uniformly changed. For example, in terms of a farming pattern during the observation period, a stress is calculated while uniformly changing a past schedule by a factor of 1.2, 0.8, or the like, and then a minimum stress is sought. The remaining configuration and operation are similar to those according to the second to fourth example embodiments, and therefore a same reference sign is given to same components or operations and detailed description thereof is omitted.

<<Functional configuration of information processing device>>

Fig. 19 is a block diagram illustrating a functional configuration of an information processing device 1910 in an information processing system 1900 according to the present example embodiment. In Fig. 19, a same reference sign is given to a functional unit similar to that in Fig. 4, and overlapping description thereof is omitted. Further, information used during a stress observation period is hereinafter referred to as a stress observation information.

The information processing device 1910 includes a stress calculating unit (stress calculator) 1914, a farming scheduling unit (farming scheduler) 1915, and a stress observation information updating unit (stress observation information updater) 1918. The stress calculating unit 1914 calculates a stress during a stress calculating period by use of stress observation information changed by the stress observation information updating unit 1918. The farming scheduling unit 1915 selects an appropriate farming schedule on the basis of a stress calculated based on stress observation information changed by the stress observation information updating unit 1918 and outputs the schedule.

The stress observation information updating unit 1918 provides the stress calculating unit 1914 and the farming scheduling unit 1915 with information during a stress observation period for generating a farming schedule during a partial period, while changing the information on the basis of information in farming data 423 in a database 320. Specifically, the stress observation information updating unit 1918 includes an unillustrated history information acquiring unit (history information acquirer) and an unillustrated history information updating unit (history information updater).

In practice, the change of the stress observation information by the stress observation information updating unit 1918 is also communicated to an intake calculating unit 411, a requirement calculating unit 412, and a purpose-by-goal calculating unit 413, and is used by the units.

(Stress observation information updating table)

Fig. 20 is a diagram illustrating a configuration of a stress observation information updating table 2000 according to the present example embodiment. The stress observation information updating table 2000 is used for selecting and outputting a farming schedule based on appropriate stress observation information, by the stress observation information updating unit 1918, the stress calculating unit 1914, and the farming scheduling unit 1915.

The stress observation information updating table 2000 includes a stress calculation value 2003 calculated on the basis of a tentative farming schedule 2001 during a farming scheduling period (partial period) during which a farming schedule is generated and stress observation information 2002 during a stress observation period during which an effect of farming work is observed. The stress observation information 2002 includes a farming schedule acquired from a farming schedule history in the farming data 423 in the database 320, and weighting and a change applied to the farming schedule. Further, the stress calculation value 2003 includes a stress calculation value during the partial period during which the farming schedule is generated and a stress calculation value during the stress observation period.

The stress observation information updating table 2000 includes prioritization 2004 of total sums of the stress calculation values 2003 and a farming schedule 2005 selected based on the prioritization (indicated as "employed" in Fig. 20).

(Stress observation information updating process)

Fig. 21 is a flowchart illustrating a procedure of a stress observation information updating process according to the present example embodiment. The flowchart is executed by the CPU 1010 in Fig. 10 by use of the RAM 1040 and provides the stress calculating unit 1914, the farming scheduling unit 1915, and the stress observation information updating unit 1918 in Fig. 19. The flowchart in Fig. 21 may be executed in parallel with Fig. 11, 12A, or 12B, or may be incorporated into the farming scheduling in Fig. 11, 12A, or 12B. Further, in Fig. 21, a same step number is given to a step similar to that in Fig. 18, and overlapping description thereof is omitted.

In Step S2102, the information processing device 1910 acquires stress observation information from a farming schedule history in the farming data 423 in the database 320. Further, in Step S2105, the information processing device 1910 stores a stress calculated by use of current stress observation information and a related farming schedule.

In Step S2107, the information processing device 1910 determines whether or not every change to the stress observation information is performed. When not every change to the stress observation information is performed, in Step S2109, the information processing device 1910 changes the stress observation information, returns to Step S1803, and repeats storing a stress calculated based on the changed stress observation information, and a related farming schedule.

When every change to the stress observation information is performed, in Step S2111, the information processing device 1910 compares stresses, prioritizes farming schedules, and then in Step S1813, selects and outputs an appropriate farming schedule.

The present example embodiment generates a farming schedule using appropriate information during a stress observation period and therefore is able to improve reliability of farming support.

[Sixth example embodiment]

Next, an information processing system including an information processing device according to a sixth example embodiment of the present invention will be described. Compared with the aforementioned second to fifth example embodiments, the information processing system according to the present example embodiment differs in generating a farming schedule by a cloud server. The remaining configuration and operation are similar to those according to the second to fifth example embodiments, and therefore a same reference sign is given to same components or operations, and detailed description thereof is omitted.

<<Information processing system>>

Fig. 22 is a block diagram illustrating a configuration of an information processing system 2200 including an information processing device according to the present example embodiment. The information processing device corresponds to a cloud server 2210 in the present example embodiment. Further, in Fig. 22, a same reference sign is given to components similar to that in Fig. 3A, and overlapping description thereof is omitted.

The information processing system 2200 includes a communication terminal 2230 including an inputting unit (inputter) 331 and an outputting unit (outputter) 332, and a cloud server 2210, the terminal and the server being connected through a network 340. The cloud server 2210 includes a virtual personal computer (PC) 2211 providing an information processing device including the farming scheduling unit according to the aforementioned example embodiments, and a database 2222.

The present example embodiment is able to provide a farming schedule suited for a growth environment of a crop with a smaller investment and improve reliability of farming support.

[Seventh example embodiment]

Next, a mobile terminal according to a seventh example embodiment of the present invention will be described. Compared with the aforementioned second to sixth example embodiments, the mobile terminal according to the present example embodiment differs in that the mobile terminal independently generates a farming schedule. The remaining configuration and operation are similar to those according to the second to sixth example embodiments, and therefore a same reference sign is given to same components or operations, and detailed description thereof is omitted.

<<Functional configuration of information processing device>>

Fig. 23 is a block diagram illustrating a functional configuration of an information processing device according to the present example embodiment. The information processing device corresponds to a communication terminal 2310 in the present example embodiment. Further, in Fig. 23, a same reference sign is given to a functional unit similar to that in Fig. 4, and overlapping description thereof is omitted.

The communication terminal 2310 includes a database 2323 in addition to the functional units included in the information processing device 310 in Fig. 4 for generating a farming schedule.

The present example embodiment is able to provide a farming schedule suited for a growth environment of a crop, the schedule being better adapted to an environment for the crop and a cultivated field, and improve reliability of farming support.

[Other example embodiments]

A farming schedule is generated with a "stress" as an indicator value in terms of a value for not falling into a local solution with an "indicator value hindering growth," in the present example embodiment. However, the "indicator value hindering growth" is not limited to a stress, and for example, when susceptibility of a crop to a disease can be quantified and be controlled by a farming schedule, the indicator value represents one "under a condition that the disease is likely to be prevalent and an amount of applied agrichemicals is preferred to be held down.".

While the present invention has been described above with reference to the example embodiments, the present invention is not limited to the aforementioned example embodiments. Various changes and modifications that can be understood by a person skilled in the art may be made to the configurations and details of the present invention, within the scope of the present invention. Further, a system or a device in which different features included in the respective example embodiments are appropriately combined is also included in the scope of the present invention.

Further, the present invention may be applied to a system including a plurality of pieces of equipment or may be applied to a single device. Additionally, the present invention is applicable to a case that an information processing program providing the function of the example embodiments is directly or remotely supplied to the system or the device. Accordingly, a program installed on a computer in order to provide the function of the present invention on the computer, a recording medium storing the program, or a World Wide Web (WWW) server for downloading the program is also included in the scope of the present invention. In particular, at least a non-transitory computer readable medium storing a program causing a computer to execute the process steps included in the aforementioned example embodiments is included in the scope of the present invention.

The present invention has been described using the above-described example embodiments as example cases. However, the present invention is not limited to the above-described example embodiments. In other words, the present invention is applicable with various aspects that can be understood by those skilled in the art without departing from the scope of the present invention.

This application is based upon and claims the benefit of priority from Japanese patent application No. 2015-209378, filed on October 23, 2015, the disclosure of which is incorporated herein in its entirety.

Part of or the entire of each of the above-described exemplary embodiments may be described as the following supplementary notes. However, the present invention illustrated by the use of the above-described example embodiments is not limited to the following. The supplementary notes are as follows.

(Supplementary note 1)

An information processing device comprising:

indicator value calculating means for calculating an indicator value of hindering crop growth during a period including at least an observation period during which an effect of farming work performed for growing the crop is observed; and scheduling means for generating a schedule of farming work performed on the crop during a predetermined farming period being a period preceding the observation period in order to reduce the indicator value calculated by the indicator value calculating means.

(Supplementary note 2)

The information processing device according to supplementary note 1, wherein

the predetermined farming period is no longer than several days.

(Supplementary note 3)

The information processing device according to supplementary note 1 or 2, wherein
the indicator value calculating means calculates the indicator value during the observation period and the predetermined farming period.

(Supplementary note 4)

The information processing device according to any one of supplementary notes 1 to 3, wherein,
the scheduling means generates a plurality of different farming schedules during the predetermined farming period, calculates the indicator value based on each farming schedule, and determines a farming schedule minimizing the calculated indicator value to be a farming schedule during the predetermined farming period.

(Supplementary note 5)

The information processing device according to any one of supplementary notes 1 to 4, further comprising:

acquiring means for acquiring a report period of a farming schedule reported to a user and parameters for calculating the indicator value; and
outputting means for generating a farming schedule during the report period based on farming schedules during a plurality of the predetermined farming periods repeatedly generated by the scheduling means, and outputting the generated farming schedule.

(Supplementary note 6)

The information processing device according to supplementary note 5, wherein
the parameters includes a history of farming work performed before the predetermined farming period, environment prediction data including data related to weather during the observation period, data related to soil on which the crop is grown, and data related to the crop.

(Supplementary note 7)

The information processing device according to any one of supplementary notes 1 to 6, wherein
with respect to an element required to be taken in by the crop, the indicator value is a stress of the crop, the stress being calculated based on an intake that can be taken in by the crop and a requirement preferably provided for the crop.

(Supplementary note 8)

The information processing device according to supplementary note 7, wherein
an intake that can be taken in by the crop is based on an amount of the element in an environment in a state in which the crop can take in the element, and an amount of the element that can be taken in by the crop from the environment.

(Supplementary note 9)

The information processing device according to supplementary note 7 or 8, wherein
the element required to be taken in includes at least either of nutrition and water.

(Supplementary note 10)

The information processing device according to any one of supplementary notes 7 to 9, wherein
the indicator value calculating means includes

intake calculating means for calculating the intake,
requirement calculating means for calculating the requirement, and
stress calculating means for calculating the stress based on the intake and the requirement.

(Supplementary note 11)

The information processing device according to supplementary note 10, wherein
the stress calculating means calculates the stress based on a difference between the intake and the requirement, or a ratio between the intake and the requirement.

(Supplementary note 12)

The information processing device according to any one of supplementary notes 1 to 11, further comprising:

goal calculating means for calculating a goal value of the indicator value, depending on at least a growth process of the crop or a yield goal of the crop, wherein
the scheduling means generates a schedule of the farming work in such a way that the indicator value approaches the goal value.

(Supplementary note 13)

The information processing device according to any one of supplementary notes 1 to 12, further comprising:
period setting means for setting the predetermined farming period and the observation period in relation to at least a type of the crop and the indicator value.

(Supplementary note 14)

The information processing device according to any one of supplementary notes 1 to 13, further comprising:

period updating means for updating at least the observation period, wherein
the indicator value calculating means calculates and stores the indicator value during the changed observation period, and
the scheduling means determines a farming schedule using the observation period minimizing the stored indicator value to be a farming schedule during the predetermined farming period.

(Supplementary note 15)

The information processing device according to any one of supplementary notes 1 to 14, further comprising:

history information acquiring means for acquiring history information during the observation period, and
history information updating means for updating the history information, wherein
the indicator value calculating means calculates the indicator value during the observation period by use of the changed history information, and stores the calculated indicator value, and
the scheduling means determines a farming schedule using the history information minimizing the stored indicator value to be a farming schedule during the predetermined farming period.

(Supplementary note 16)

A control method comprising:

calculating an indicator value of hindering crop growth during a period including at least an observation period during which an effect of farming work performed for growing the crop is observed; and
generating a schedule of farming work performed on the crop during a predetermined farming period being a period preceding the observation period in order to reduce the calculated indicator value.

(Supplementary note 17)

A recoding medium storing a program that controls an information processing device, the program making a computer achieve:

an indicator value calculating step for calculating an indicator value of hindering crop growth during a period including at least an observation period during which an effect of farming work performed for growing the crop is observed; and

a scheduling step for generating a schedule of farming work performed on the crop during a predetermined farming period being a period preceding the observation period in order to reduce the indicator value calculated in the indicator value calculating step.

(Supplementary note 18)

An information processing system comprising:

acquiring means for acquiring a report period of a farming schedule reported to a user and a parameter for calculating an indicator value of hindering crop growth;
indicator value calculating means for calculating, by use of the parameter, an indicator value of hindering crop growth during a period including at least an observation period during which an effect of farming work performed for growing the crop is observed;
scheduling means for generating a schedule for farming work performed on the crop during a predetermined farming period being a period preceding the observation period in order to reduce the indicator value calculated by the indicator value calculating means; and
outputting means for generating a farming schedule during the report period based on farming schedules during a plurality of the predetermined farming periods repeatedly generated by the scheduling means, and outputting the generated farming schedule.

(Supplementary note 19)

A farming support method comprising:

acquiring a report period of a farming schedule reported to a user and a parameter for calculating an indicator value of hindering crop growth;
calculating, by use of the parameter, an indicator value of hindering crop growth during a period including at least an observation period during which an effect of farming work performed for growing the crop is observed;
generating a schedule for farming work performed on the crop during a predetermined farming period being a period preceding the observation period in order to reduce the indicator value calculated by the indicator value calculating means; and
generating a farming schedule during the report period based on farming schedules during a plurality of the predetermined farming periods repeatedly generated, and outputting the generated farming schedule.

## Claims

**1.** An information processing device comprising:

indicator value calculating means for calculating an indicator value of hindering crop growth during a period including at least an observation period during which an effect of farming work performed for growing the crop is observed; and
scheduling means for generating a schedule of farming work performed on the crop during a predetermined farming period being a period preceding the observation period in order to reduce the indicator value calculated by the indicator value calculating means.

**2.** The information processing device according to claim 1, wherein
the predetermined farming period is no longer than several days.

**3.** The information processing device according to claim 1 or 2, wherein
the indicator value calculating means calculates the indicator value during the observation period and the predetermined farming period.

**4.** The information processing device according to any one of claims 1 to 3, wherein,
the scheduling means generates a plurality of different farming schedules during the predetermined farming period, calculates the indicator value based on each farming schedule, and determines a farming schedule minimizing the calculated indicator value to be a farming schedule during the predetermined farming period.

**5.** The information processing device according to any one of claims 1 to 4, further comprising:

acquiring means for acquiring a report period of a farming schedule reported to a user and parameters for calculating the indicator value; and
outputting means for generating a farming schedule during the report period based on farming schedules during a plurality of the predetermined farming periods repeatedly generated by the scheduling means, and outputting the generated farming schedule.

**6.** The information processing device according to claim 5, wherein
the parameters includes a history of farming work performed before the predetermined farming period, environment prediction data including data related to weather during the observation period, data related to soil on which the crop is grown, and data related to the crop.

**7.** The information processing device according to any one of claims 1 to 6, wherein
with respect to an element required to be taken in by the crop, the indicator value is a stress of the crop, the stress being calculated based on an intake that can be taken in by the crop and a requirement preferably provided for the crop.

**8.** The information processing device according to claim 7, wherein
an intake that can be taken in by the crop is based on an amount of the element in an environment in a state in which the crop can take in the element, and an amount of the element that can be taken in by the crop from the environment.

**9.** The information processing device according to claim 7 or 8, wherein
the element required to be taken in includes at least either of nutrition and water.

**10.** The information processing device according to any one of claims 7 to 9, wherein
the indicator value calculating means includes

intake calculating means for calculating the intake, requirement calculating means for calculating the requirement, and
stress calculating means for calculating the stress based on the intake and the requirement.

**11.** The information processing device according to claim 10, wherein
the stress calculating means calculates the stress based on a difference between the intake and the requirement, or a ratio between the intake and the requirement.

**12.** The information processing device according to any one of claims 1 to 11, further comprising:

goal calculating means for calculating a goal value of the indicator value, depending on at least a growth process of the crop or a yield goal of the crop, wherein
the scheduling means generates a schedule of the farming work in such a way that the indicator value approaches the goal value.

**13.** The information processing device according to any one of claims 1 to 12, further comprising:
period setting means for setting the predetermined farming period and the observation period in relation to at least a type of the crop and the indicator value.

**14.** The information processing device according to any one of claims 1 to 13, further comprising:

period updating means for updating at least the observation period, wherein
the indicator value calculating means calculates and stores the indicator value during the changed observation period, and
the scheduling means determines a farming schedule using the observation period minimizing the stored indicator value to be a farming schedule during the predetermined farming period.

**15.** The information processing device according to any one of claims 1 to 14, further comprising:

history information acquiring means for acquiring history information during the observation period, and

history information updating means for updating the history information, wherein
the indicator value calculating means calculates the indicator value during the observation period by use of the changed history information, and stores the calculated indicator value, and
the scheduling means determines a farming schedule using the history information minimizing the stored indicator value to be a farming schedule during the predetermined farming period.

**16.** A control method comprising:

calculating an indicator value of hindering crop growth during a period including at least an observation period during which an effect of farming work performed for growing the crop is observed; and
generating a schedule of farming work performed on the crop during a predetermined farming period being a period preceding the observation period in order to reduce the calculated indicator value.

**17.** A recoding medium storing a program that controls an information processing device, the program making a computer achieve:

an indicator value calculating step for calculating an indicator value of hindering crop growth during a period including at least an observation period during which an effect of farming work performed for growing the crop is observed; and
a scheduling step for generating a schedule of farming work performed on the crop during a predetermined farming period being a period preceding the observation period in order to reduce the indicator value calculated in the indicator value calculating step.

**18.** An information processing system comprising:

acquiring means for acquiring a report period of a farming schedule reported to a user and a parameter for calculating an indicator value of hindering crop growth;
indicator value calculating means for calculating, by use of the parameter, an indicator value of hindering crop growth during a period including at least an observation period during which an effect of farming work performed for growing the crop is observed;
scheduling means for generating a schedule for farming work performed on the crop during a predetermined farming period being a period preceding the observation period in order to reduce the indicator value calculated by the indicator value calculating means; and
outputting means for generating a farming schedule during the report period based on farming schedules during a plurality of the predetermined farming periods repeatedly generated by the scheduling means, and outputting the generated farming schedule.

**19.** A farming support method comprising:

acquiring a report period of a farming schedule reported to a user and a parameter for calculating an indicator value of hindering crop growth;
calculating, by use of the parameter, an indicator value of hindering crop growth during a period including at least an observation period during which an effect of farming work performed for growing the crop is observed;
generating a schedule for farming work performed on the crop during a predetermined farming period being a period preceding the observation period in order to reduce the indicator value calculated by the indicator value calculating means; and
generating a farming schedule during the report period based on farming schedules during a plurality of the predetermined farming periods repeatedly generated, and outputting the generated farming schedule.

Fig.1

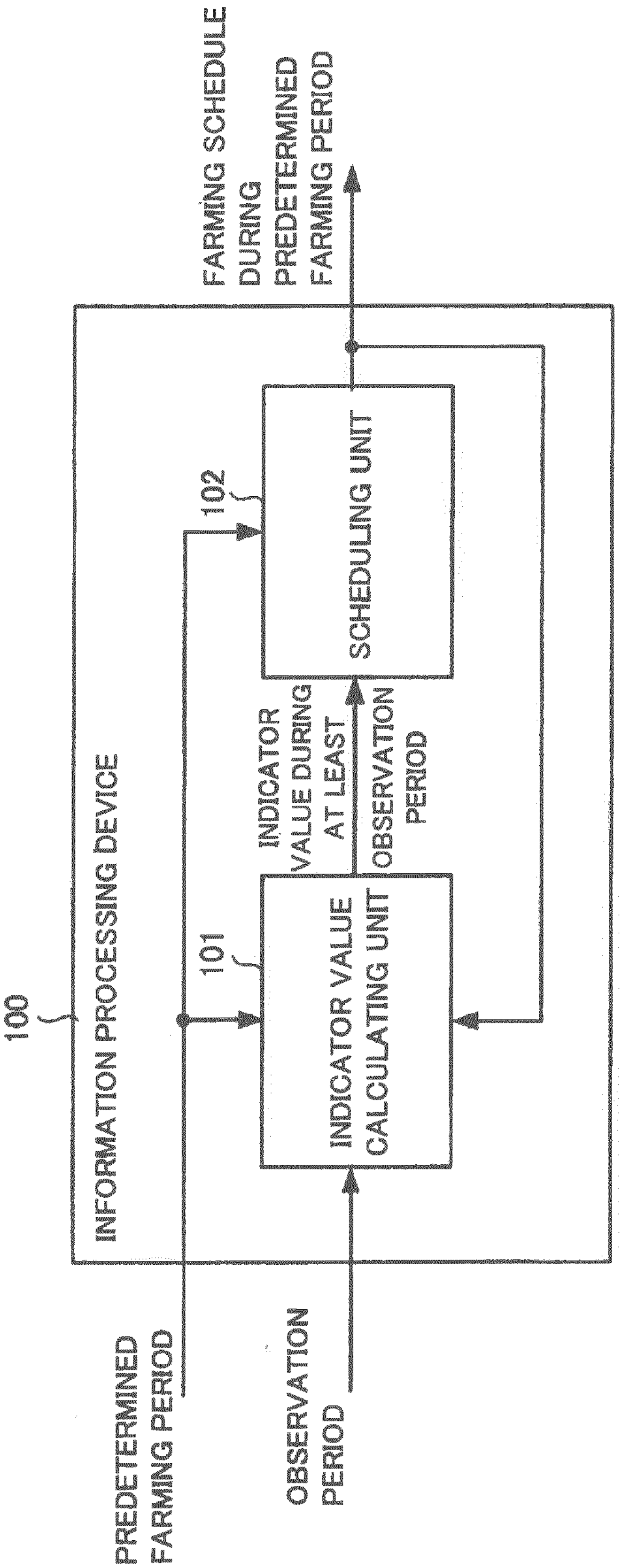
100
INFORMATION PROCESSING DEVICE
101
INDICATOR VALUE CALCULATING UNIT
102
SCHEDULING UNIT
INDICATOR VALUE DURING AT LEAST OBSERVATION PERIOD
PREDETERMINED FARMING PERIOD
OBSERVATION PERIOD
FARMING SCHEDULE DURING PREDETERMINED FARMING PERIOD

Fig.2A

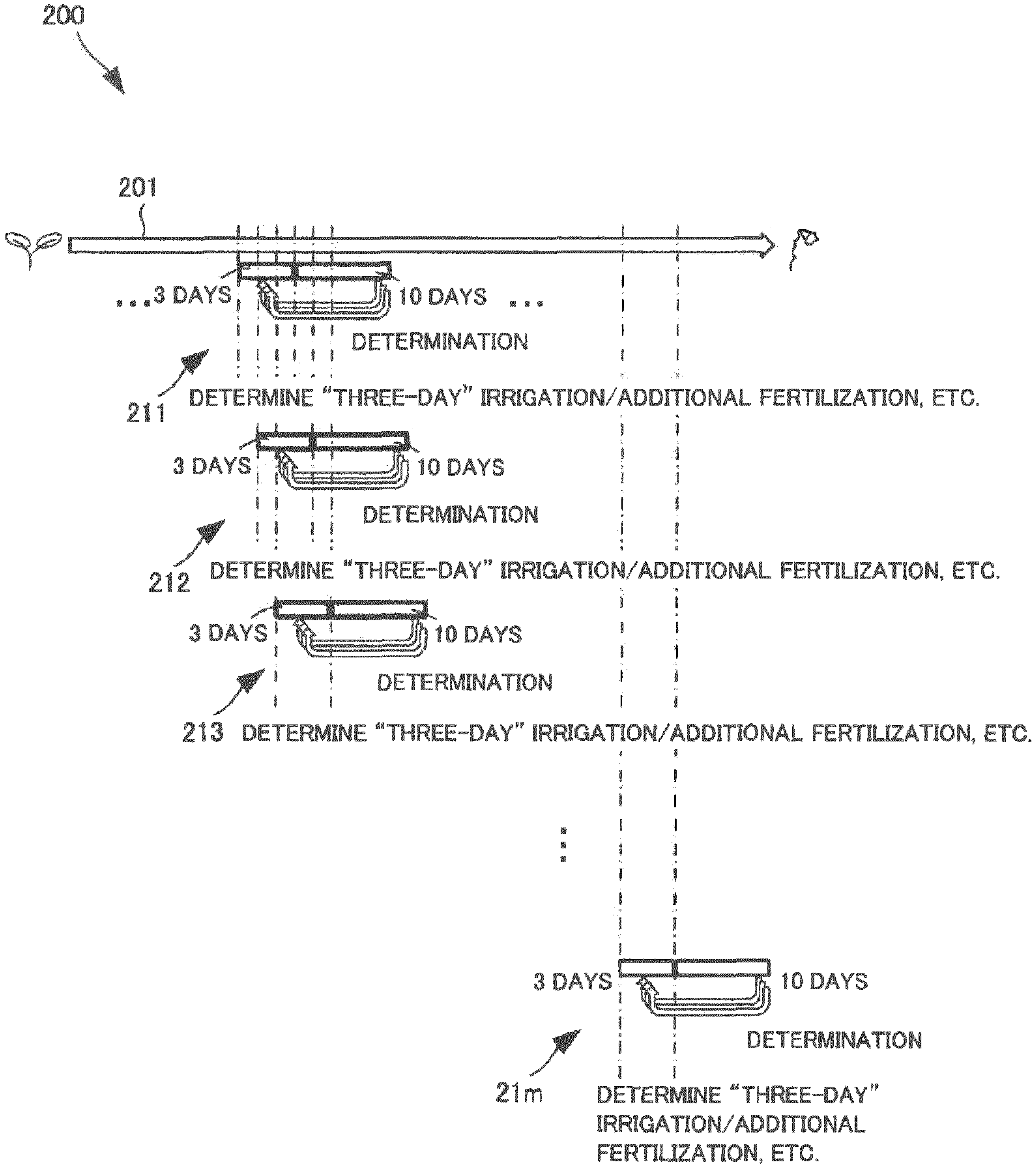
200
201
...3 DAYS
10 DAYS ...
DETERMINATION
211
DETERMINE "THREE-DAY" IRRIGATION/ADDITIONAL FERTILIZATION, ETC.
3 DAYS
10 DAYS
DETERMINATION
212
DETERMINE "THREE-DAY" IRRIGATION/ADDITIONAL FERTILIZATION, ETC.
3 DAYS
10 DAYS
DETERMINATION
213
DETERMINE "THREE-DAY" IRRIGATION/ADDITIONAL FERTILIZATION, ETC.
3 DAYS
10 DAYS
DETERMINATION
21m
DETERMINE "THREE-DAY"
IRRIGATION/ADDITIONAL
FERTILIZATION, ETC.

Fig.2B

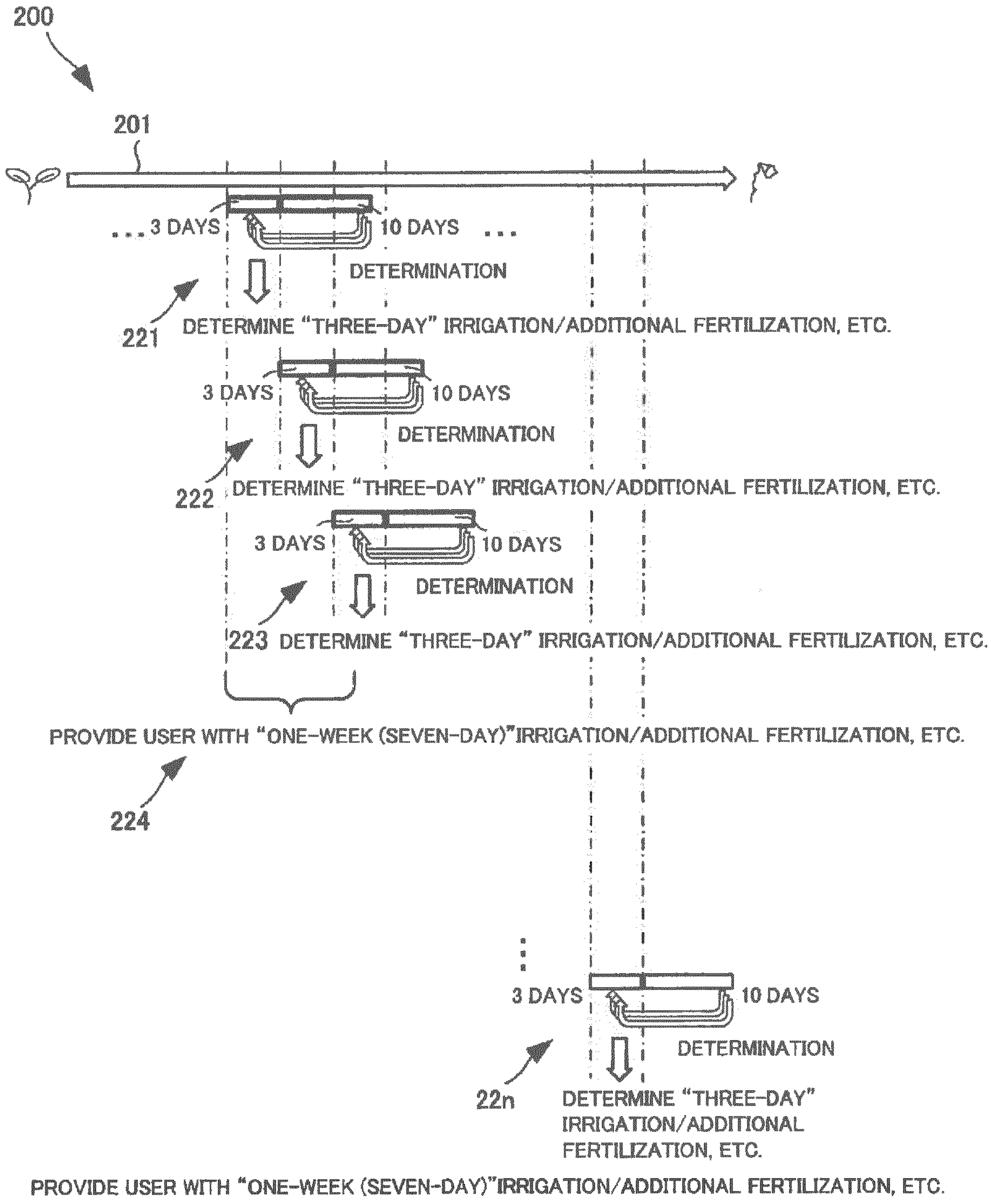
200
201
...3 DAYS
10 DAYS ...
DETERMINATION
221
DETERMINE "THREE-DAY" IRRIGATION/ADDITIONAL FERTILIZATION, ETC.
3 DAYS
10 DAYS
DETERMINATION
222
DETERMINE "THREE-DAY" IRRIGATION/ADDITIONAL FERTILIZATION, ETC.
3 DAYS
10 DAYS
DETERMINATION
223
DETERMINE "THREE-DAY" IRRIGATION/ADDITIONAL FERTILIZATION, ETC.
PROVIDE USER WITH "ONE-WEEK (SEVEN-DAY)"IRRIGATION/ADDITIONAL FERTILIZATION, ETC.
224
3 DAYS
10 DAYS
DETERMINATION
22n
DETERMINE "THREE-DAY" IRRIGATION/ADDITIONAL FERTILIZATION, ETC.
PROVIDE USER WITH "ONE-WEEK (SEVEN-DAY)"IRRIGATION/ADDITIONAL FERTILIZATION, ETC.

Fig.2C

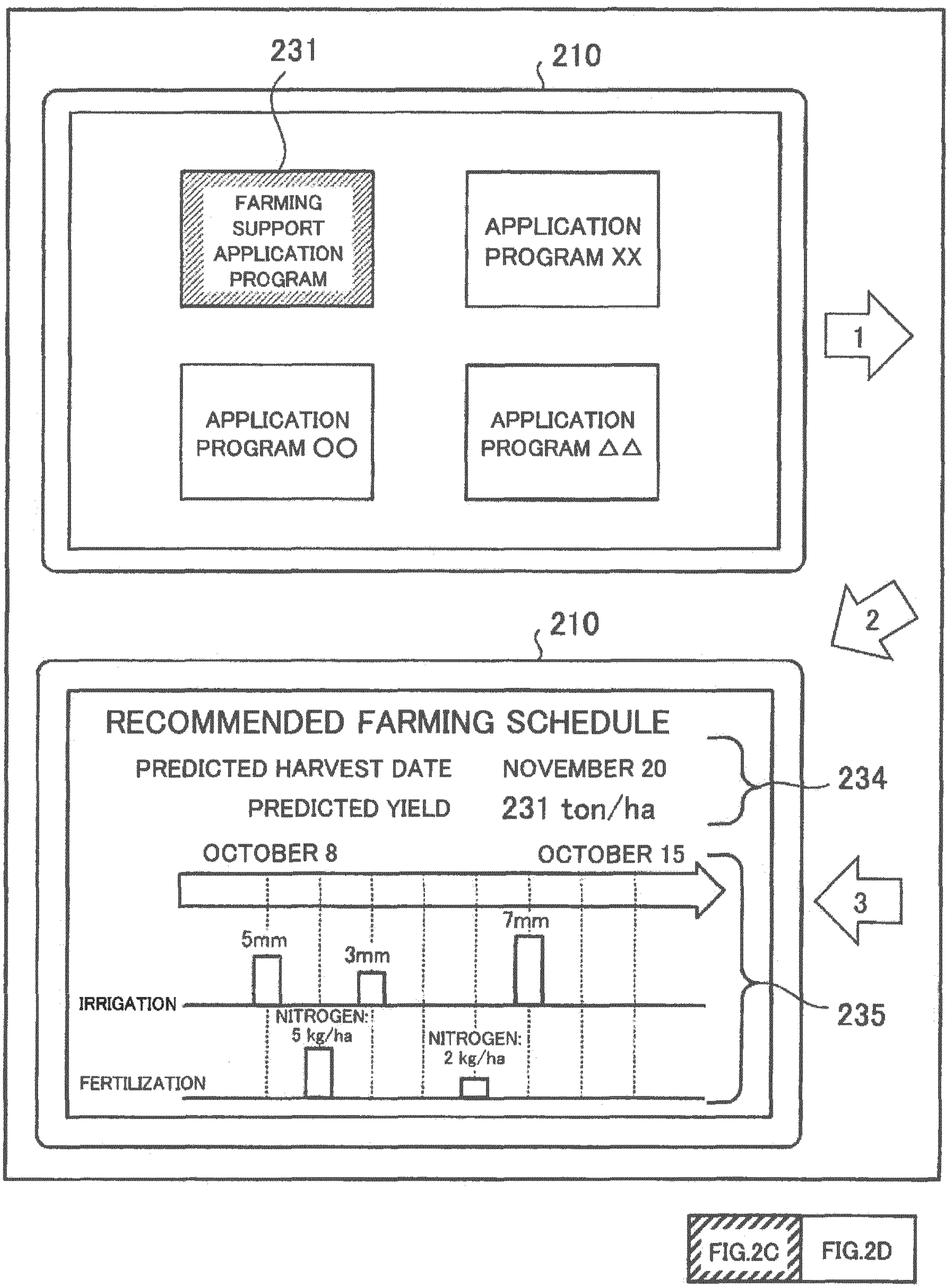
231
210
FARMING SUPPORT APPLICATION PROGRAM
APPLICATION PROGRAM XX
APPLICATION PROGRAM ○○
APPLICATION PROGRAM △△
1
2
210
RECOMMENDED FARMING SCHEDULE
PREDICTED HARVEST DATE NOVEMBER 20
PREDICTED YIELD 231 ton/ha
234
OCTOBER 8
OCTOBER 15
3
5mm
3mm
7mm
IRRIGATION
NITROGEN: 5 kg/ha
NITROGEN: 2 kg/ha
FERTILIZATION
235
FIG.2C
FIG.2D

Fig.2D

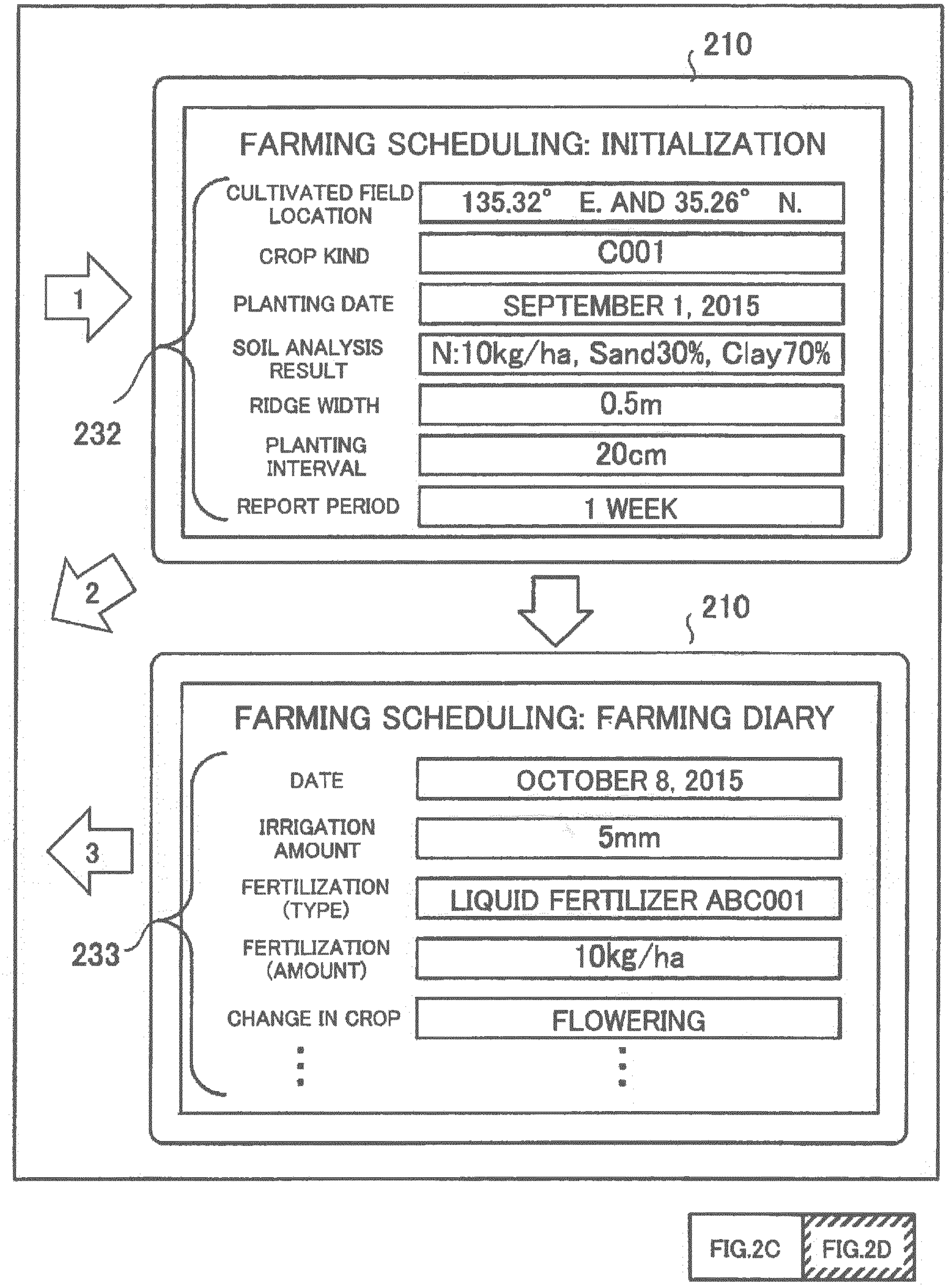
210
FARMING SCHEDULING: INITIALIZATION
CULTIVATED FIELD LOCATION
135.32° E. AND 35.26° N.
CROP KIND
C001
PLANTING DATE
SEPTEMBER 1, 2015
SOIL ANALYSIS RESULT
N:10kg/ha, Sand30%, Clay70%
RIDGE WIDTH
0.5m
PLANTING INTERVAL
20cm
REPORT PERIOD
1 WEEK
1
232
2
210
FARMING SCHEDULING: FARMING DIARY
DATE
OCTOBER 8, 2015
IRRIGATION AMOUNT
5mm
FERTILIZATION (TYPE)
LIQUID FERTILIZER ABC001
FERTILIZATION (AMOUNT)
10kg/ha
CHANGE IN CROP
FLOWERING
3
233
FIG.2C
FIG.2D

Fig.2E

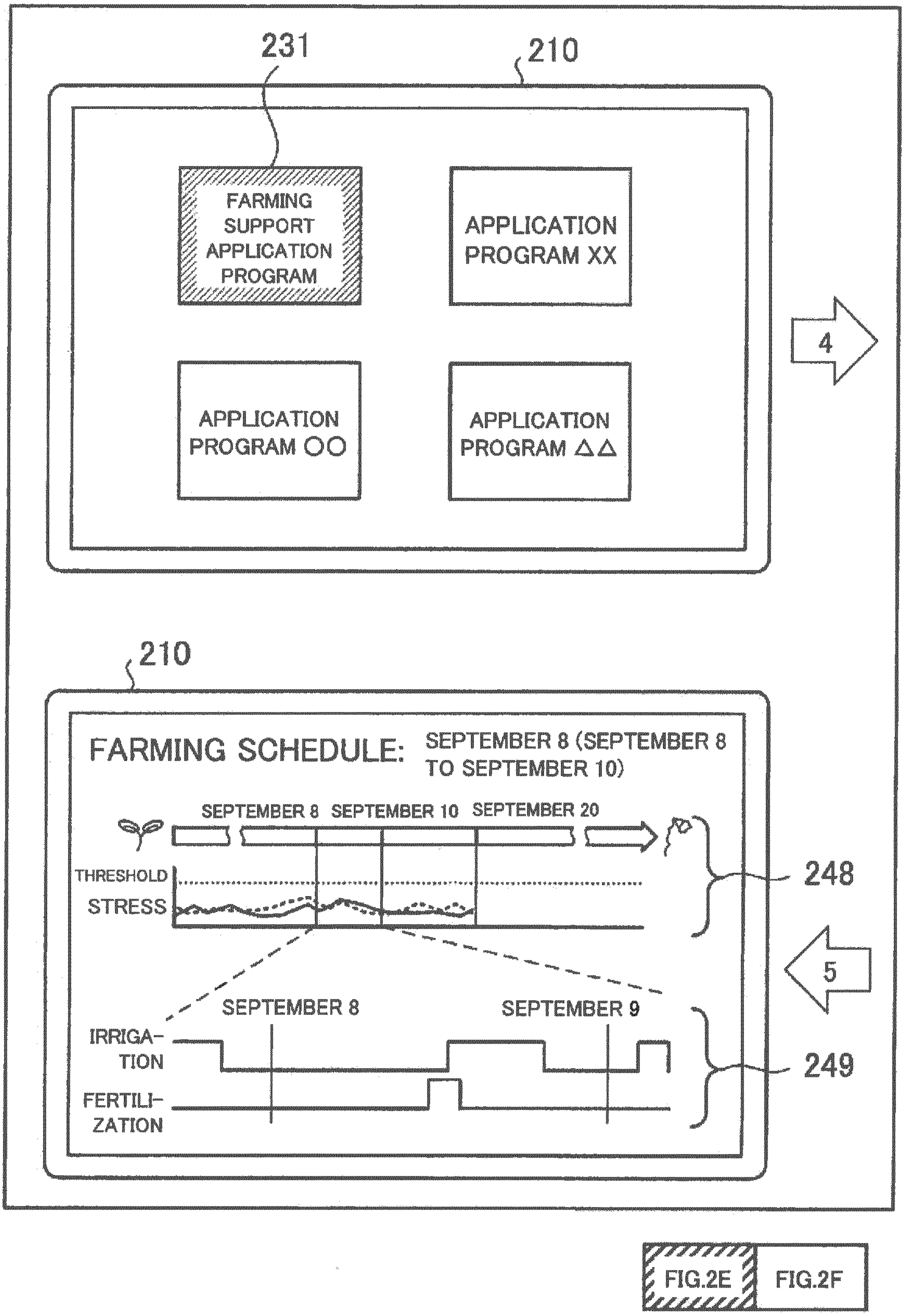
231
210
FARMING SUPPORT APPLICATION PROGRAM
APPLICATION PROGRAM XX
APPLICATION PROGRAM ○○
APPLICATION PROGRAM △△
4
210
FARMING SCHEDULE: SEPTEMBER 8 (SEPTEMBER 8 TO SEPTEMBER 10)
SEPTEMBER 8 SEPTEMBER 10 SEPTEMBER 20
THRESHOLD
STRESS
248
5
SEPTEMBER 8
SEPTEMBER 9
IRRIGATION
FERTILIZATION
249
FIG.2E
FIG.2F

Fig.2F

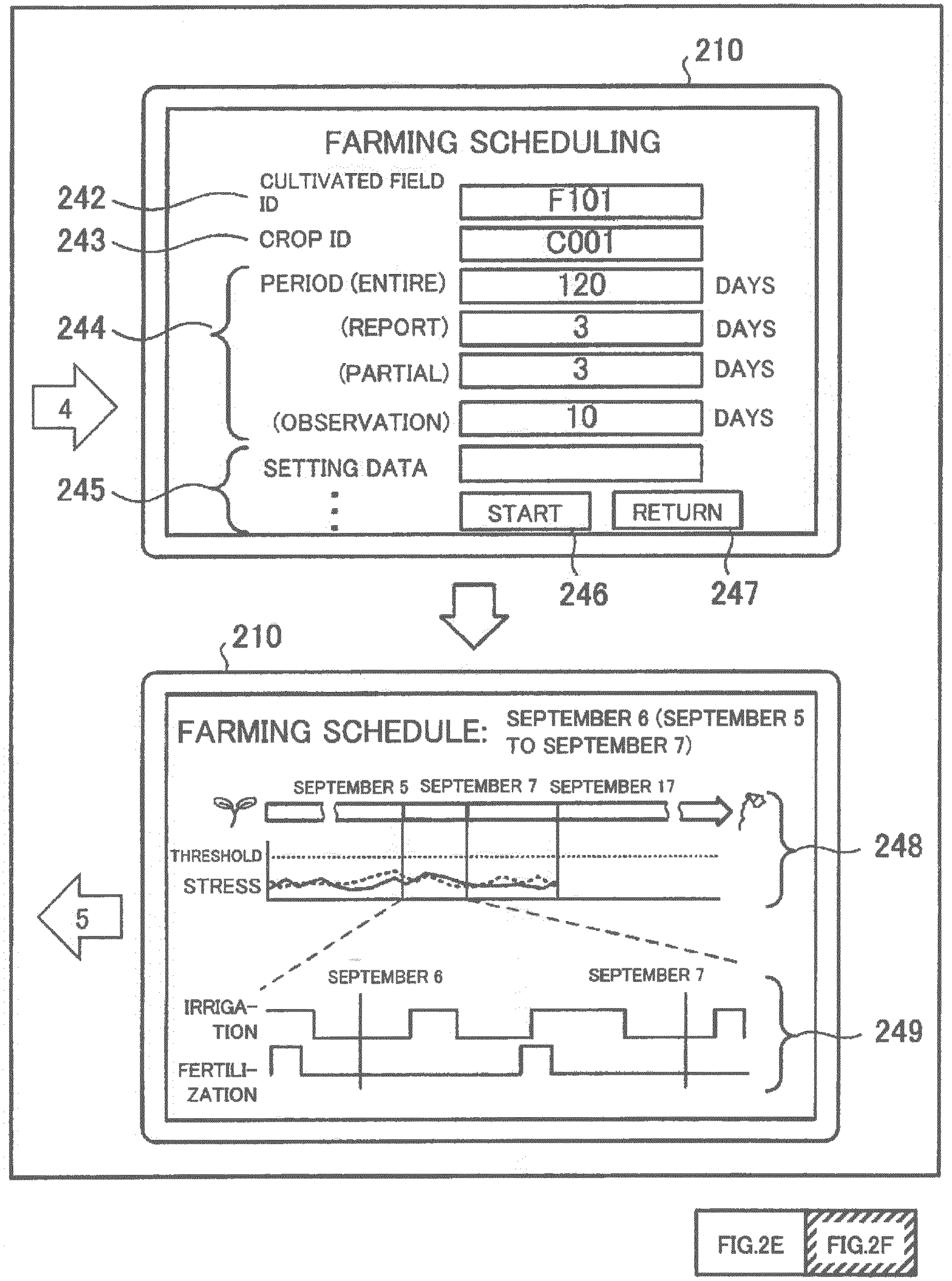
210
FARMING SCHEDULING
242
CULTIVATED FIELD ID
F101
243
CROP ID
C001
244
PERIOD (ENTIRE)
120
DAYS
(REPORT)
3
DAYS
(PARTIAL)
3
DAYS
(OBSERVATION)
10
DAYS
4
245
SETTING DATA
START
RETURN
246
247
210
FARMING SCHEDULE: SEPTEMBER 6 (SEPTEMBER 5 TO SEPTEMBER 7)
SEPTEMBER 5 SEPTEMBER 7 SEPTEMBER 17
THRESHOLD
STRESS
248
5
SEPTEMBER 6
SEPTEMBER 7
IRRIGA-TION
FERTILI-ZATION
249
FIG.2E
FIG.2F

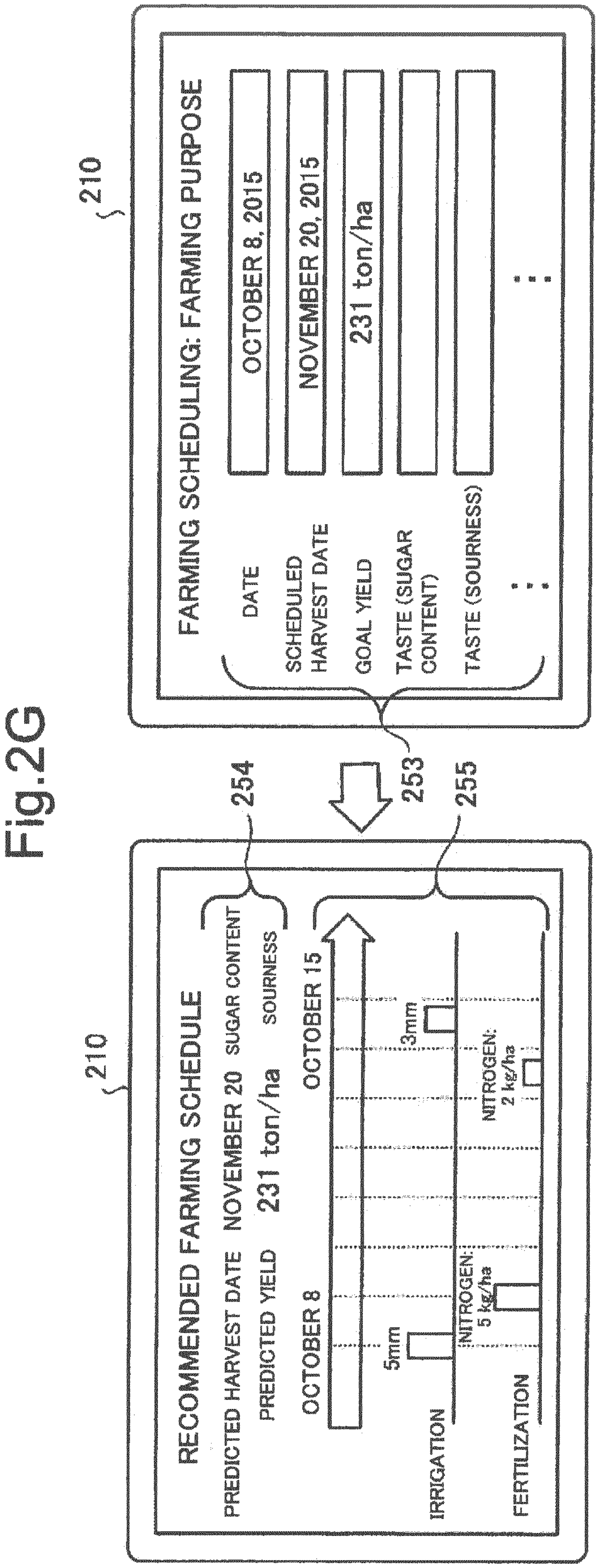
210
FARMING SCHEDULING: FARMING PURPOSE
DATE
OCTOBER 8, 2015
SCHEDULED HARVEST DATE
NOVEMBER 20, 2015
GOAL YIELD
231 ton/ha
TASTE (SUGAR CONTENT)
TASTE (SOURNESS)
253
254
255
210
RECOMMENDED FARMING SCHEDULE
PREDICTED HARVEST DATE NOVEMBER 20
SUGAR CONTENT
PREDICTED YIELD 231 ton/ha
SOURNESS
OCTOBER 8
OCTOBER 15
IRRIGATION
5mm
3mm
FERTILIZATION
NITROGEN: 5 kg/ha
NITROGEN: 2 kg/ha

Fig.2G

Fig.3A

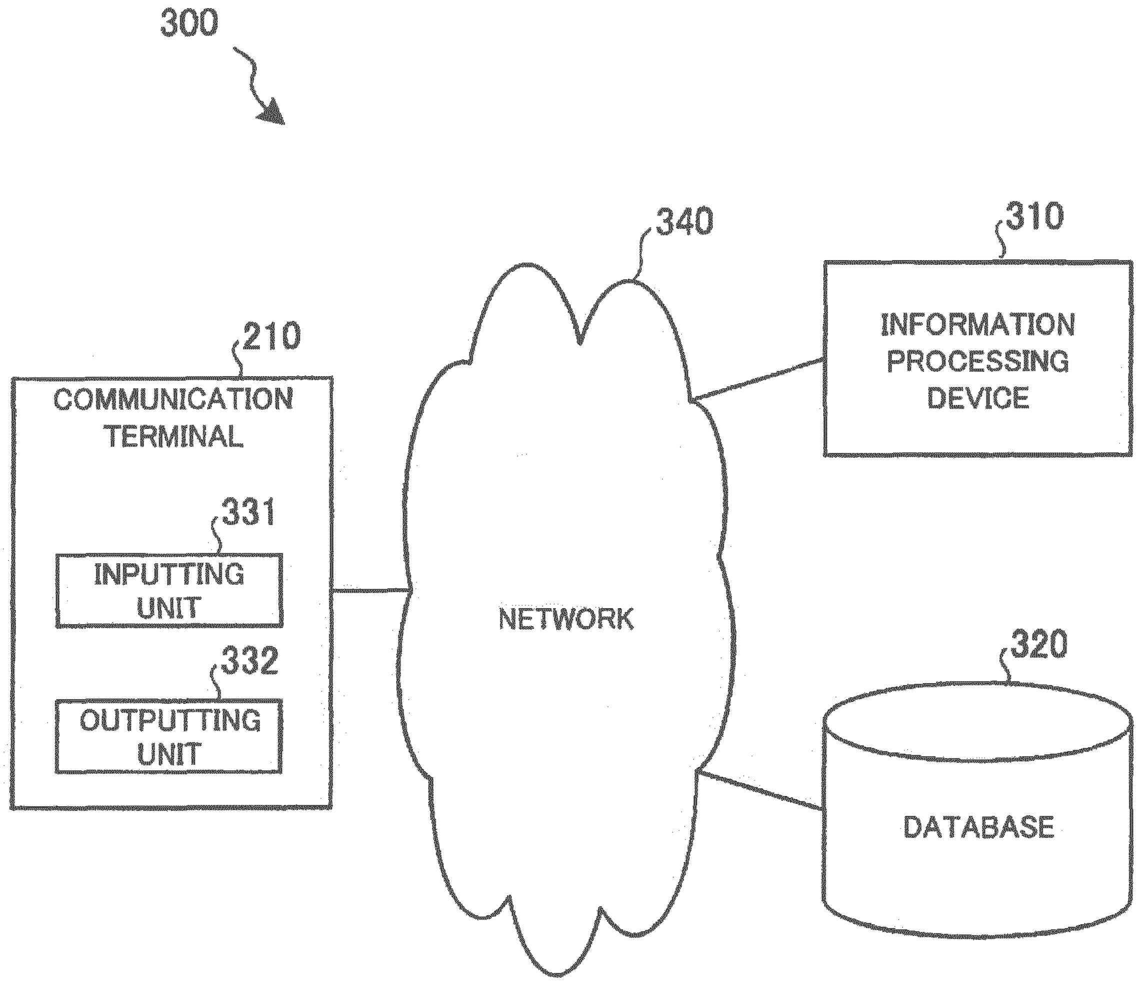
300
340
310
210
COMMUNICATION TERMINAL
331
INPUTTING UNIT
332
OUTPUTTING UNIT
NETWORK
INFORMATION PROCESSING DEVICE
320
DATABASE

Fig.3B

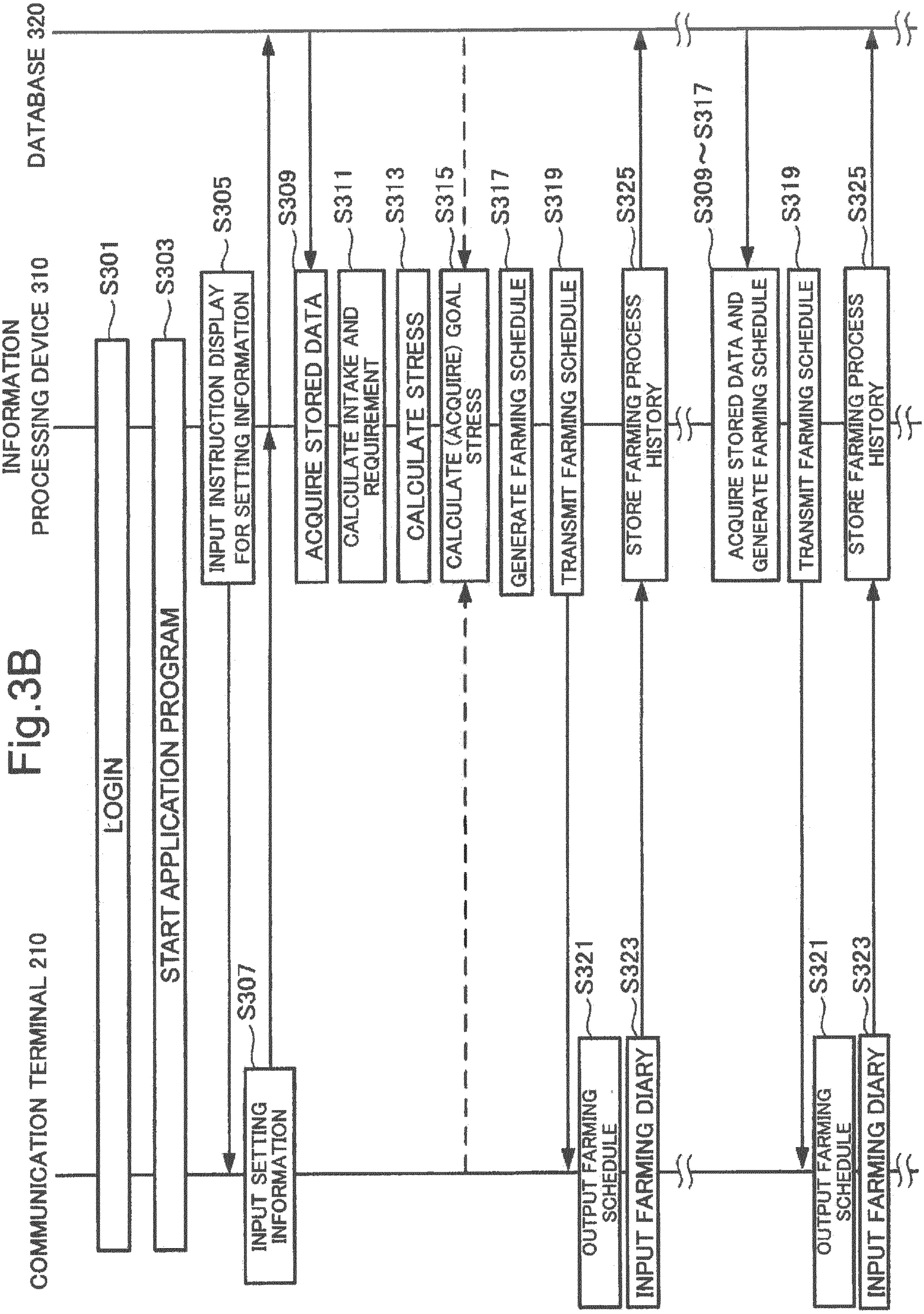
COMMUNICATION TERMINAL 210
INFORMATION PROCESSING DEVICE 310
DATABASE 320
LOGIN
S301
START APPLICATION PROGRAM
S303
INPUT INSTRUCTION DISPLAY FOR SETTING INFORMATION
S305
INPUT SETTING INFORMATION
S307
ACQUIRE STORED DATA
S309
CALCULATE INTAKE AND REQUIREMENT
S311
CALCULATE STRESS
S313
CALCULATE (ACQUIRE) GOAL STRESS
S315
GENERATE FARMING SCHEDULE
S317
TRANSMIT FARMING SCHEDULE
S319
OUTPUT FARMING SCHEDULE
S321
INPUT FARMING DIARY
S323
STORE FARMING PROCESS HISTORY
S325
ACQUIRE STORED DATA AND GENERATE FARMING SCHEDULE
S309~S317
TRANSMIT FARMING SCHEDULE
S319
OUTPUT FARMING SCHEDULE
S321
INPUT FARMING DIARY
S323
STORE FARMING PROCESS HISTORY
S325

Fig.4

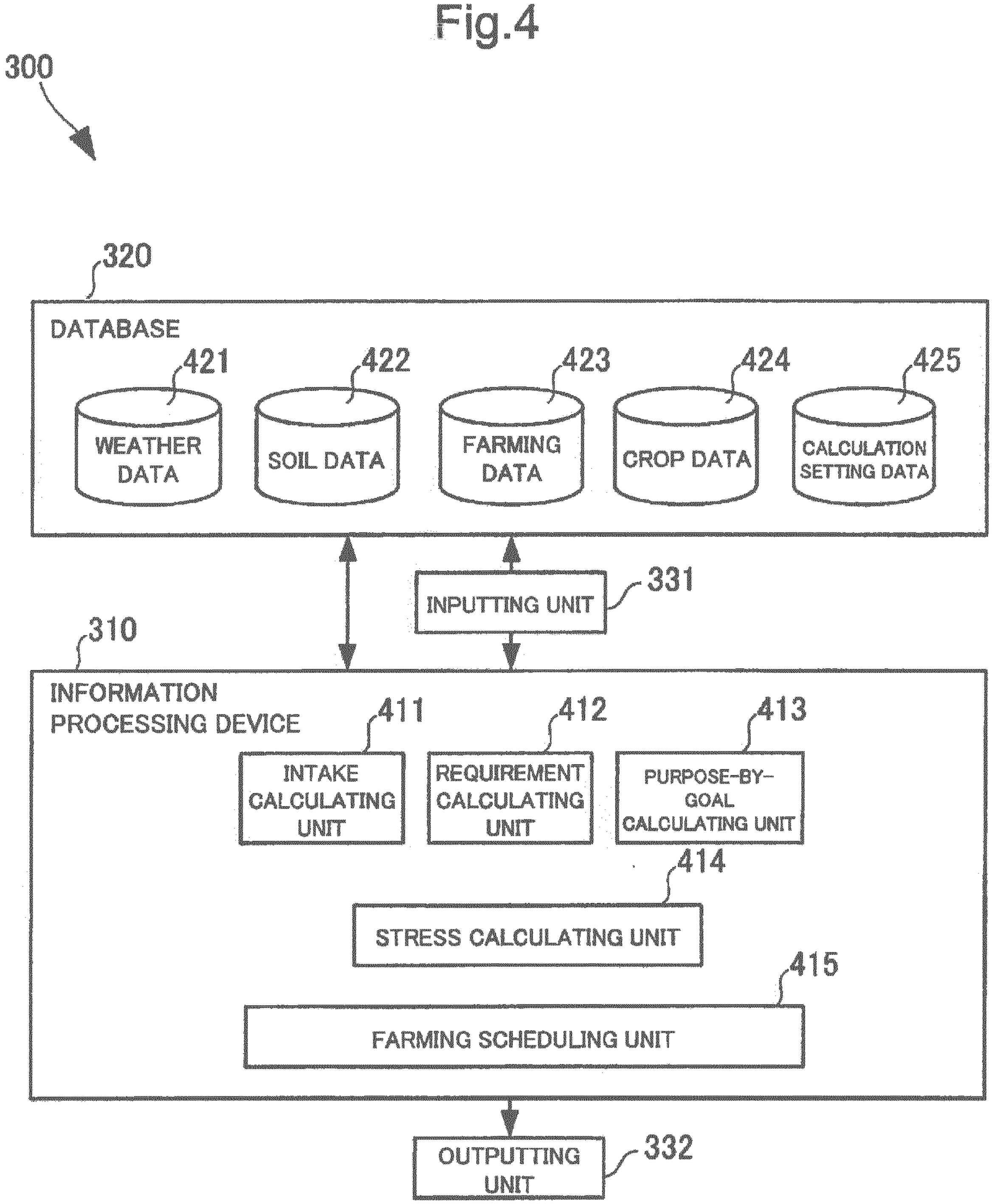
300
320
DATABASE
421
422
423
424
425
WEATHER DATA
SOIL DATA
FARMING DATA
CROP DATA
CALCULATION SETTING DATA
INPUTTING UNIT
331
310
INFORMATION PROCESSING DEVICE
411
412
413
INTAKE CALCULATING UNIT
REQUIREMENT CALCULATING UNIT
PURPOSE-BY-GOAL CALCULATING UNIT
414
STRESS CALCULATING UNIT
415
FARMING SCHEDULING UNIT
OUTPUTTING UNIT
332

Fig.5A

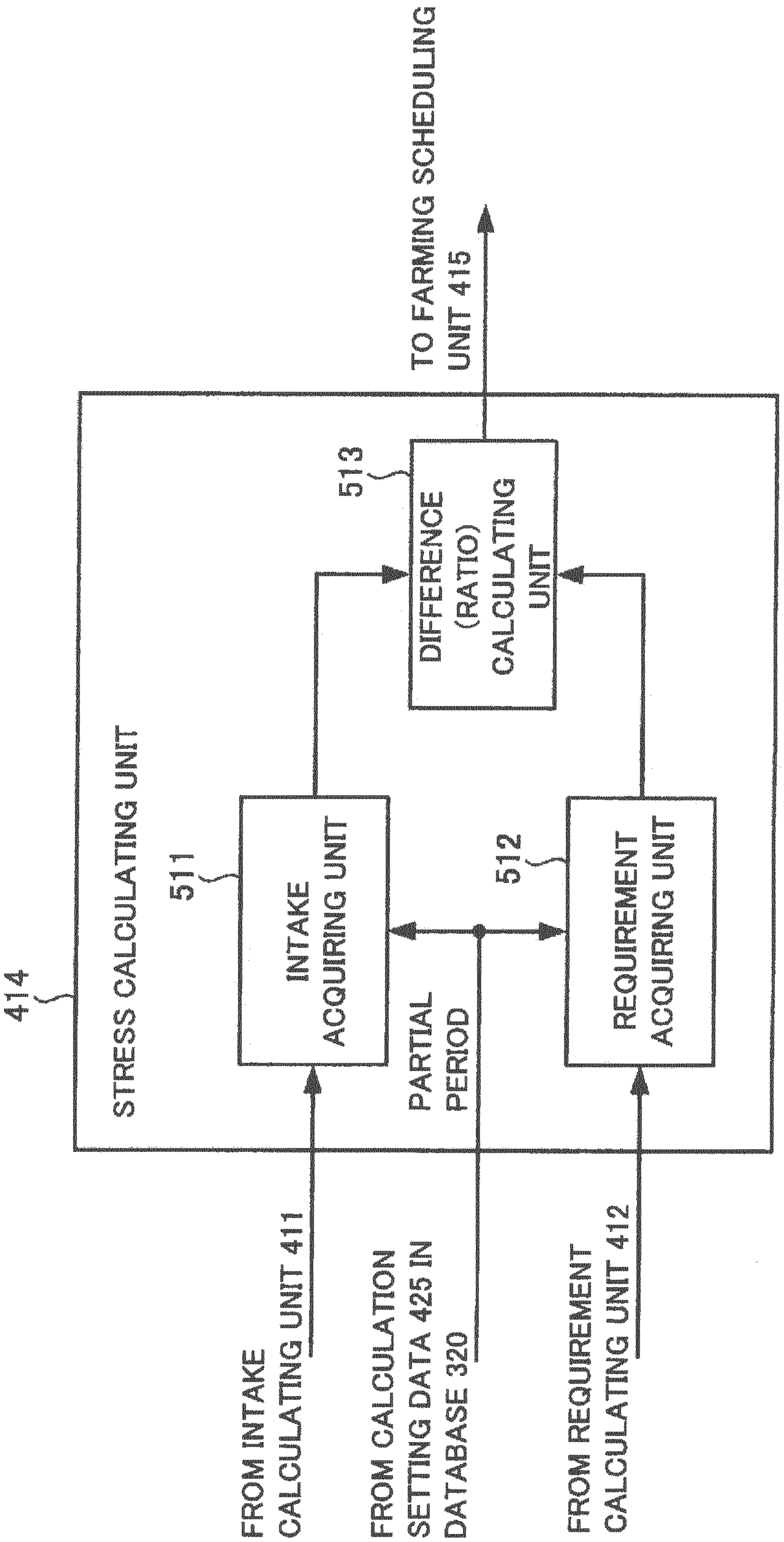
414
STRESS CALCULATING UNIT
511
INTAKE ACQUIRING UNIT
512
REQUIREMENT ACQUIRING UNIT
513
DIFFERENCE (RATIO) CALCULATING UNIT
PARTIAL PERIOD
FROM INTAKE CALCULATING UNIT 411
FROM CALCULATION SETTING DATA 425 IN DATABASE 320
FROM REQUIREMENT CALCULATING UNIT 412
TO FARMING SCHEDULING UNIT 415

Fig.5B

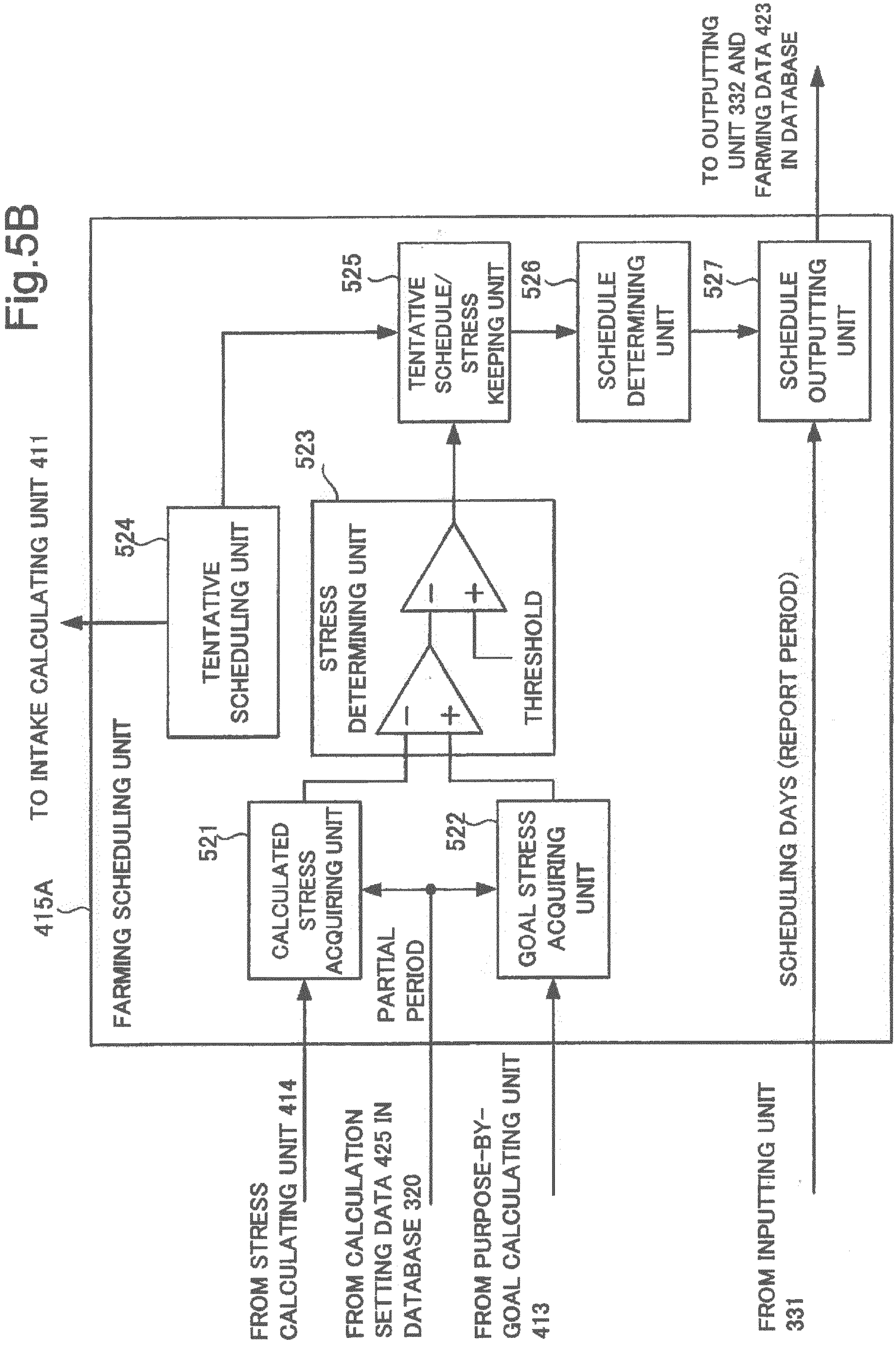
415A
FARMING SCHEDULING UNIT
TO INTAKE CALCULATING UNIT 411
524
TENTATIVE SCHEDULING UNIT
525
TENTATIVE SCHEDULE/ STRESS KEEPING UNIT
526
SCHEDULE DETERMINING UNIT
527
SCHEDULE OUTPUTTING UNIT
TO OUTPUTTING UNIT 332 AND FARMING DATA 423 IN DATABASE
523
STRESS DETERMINING UNIT
THRESHOLD
521
CALCULATED STRESS ACQUIRING UNIT
522
GOAL STRESS ACQUIRING UNIT
PARTIAL PERIOD
SCHEDULING DAYS (REPORT PERIOD)
FROM STRESS CALCULATING UNIT 414
FROM CALCULATION SETTING DATA 425 IN DATABASE 320
FROM PURPOSE-BY-GOAL CALCULATING UNIT 413
FROM INPUTTING UNIT 331

Fig.5C

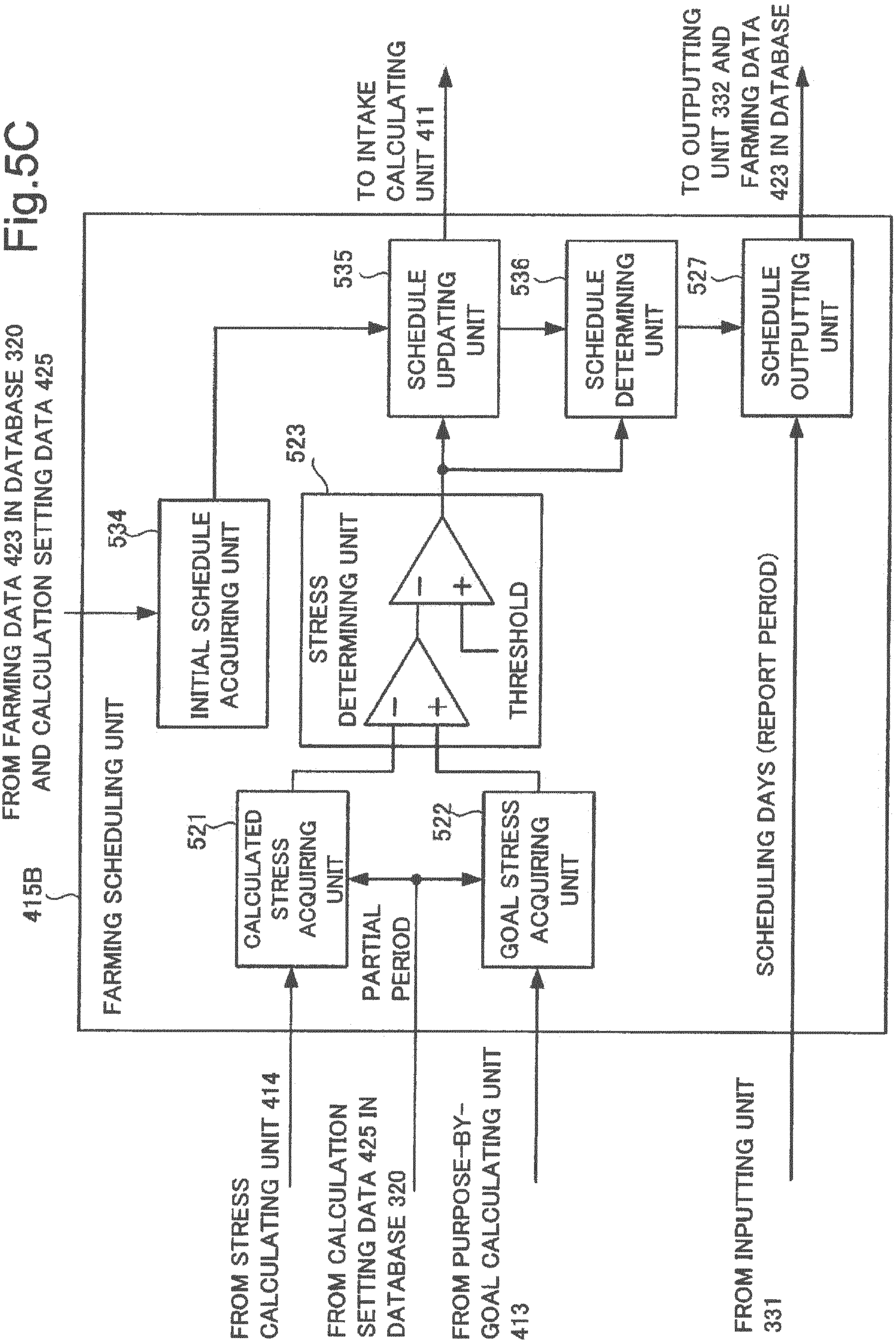
FROM FARMING DATA 423 IN DATABASE 320 AND CALCULATION SETTING DATA 425
TO INTAKE CALCULATING UNIT 411
TO OUTPUTTING UNIT 332 AND FARMING DATA 423 IN DATABASE
415B
FARMING SCHEDULING UNIT
534
INITIAL SCHEDULE ACQUIRING UNIT
535
SCHEDULE UPDATING UNIT
536
SCHEDULE DETERMINING UNIT
527
SCHEDULE OUTPUTTING UNIT
523
STRESS DETERMINING UNIT
THRESHOLD
521
CALCULATED STRESS ACQUIRING UNIT
522
GOAL STRESS ACQUIRING UNIT
PARTIAL PERIOD
SCHEDULING DAYS (REPORT PERIOD)
FROM STRESS CALCULATING UNIT 414
FROM CALCULATION SETTING DATA 425 IN DATABASE 320
FROM PURPOSE-BY-GOAL CALCULATING UNIT 413
FROM INPUTTING UNIT 331

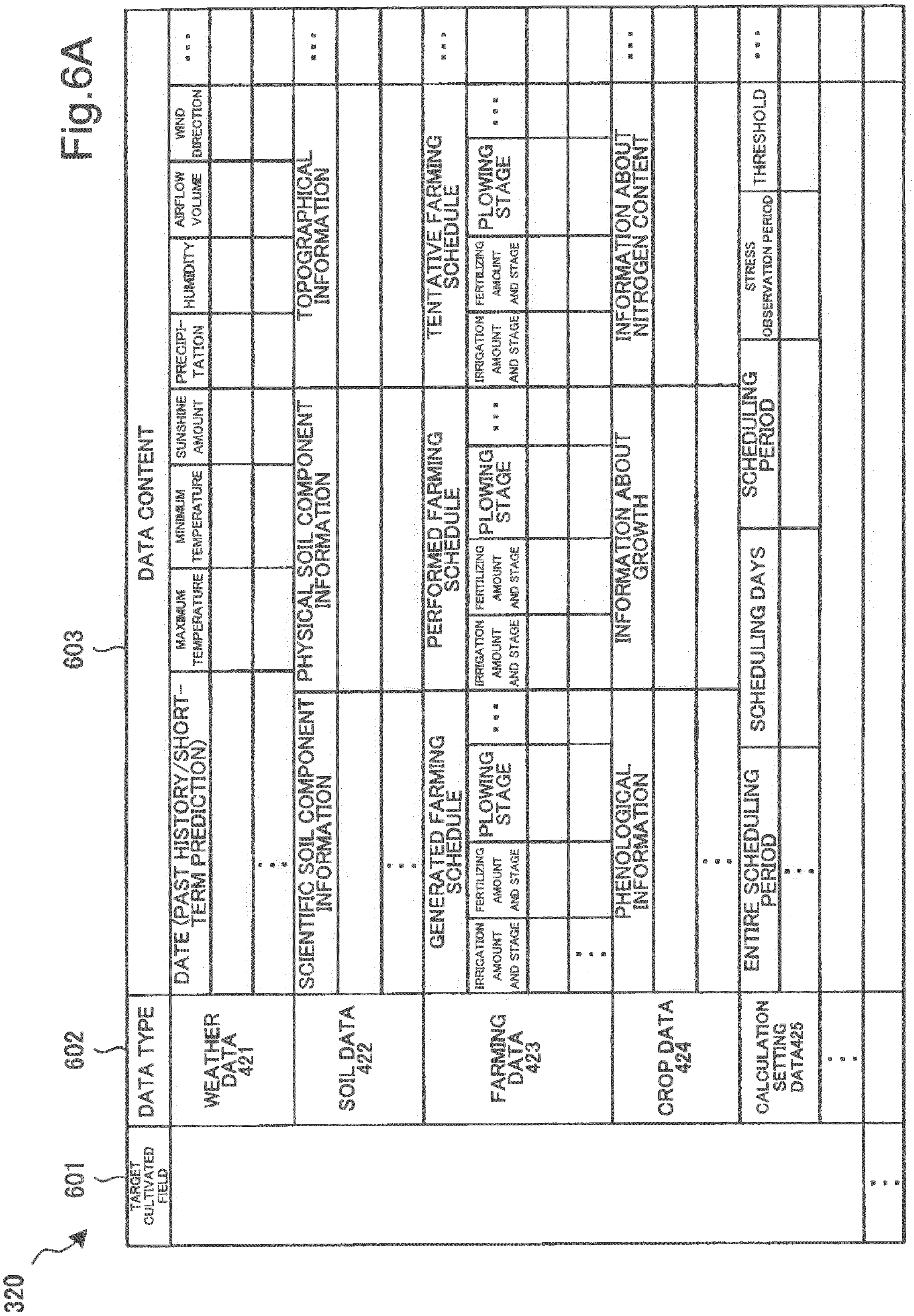
320
601
602
603
TARGET CULTIVATED FIELD
DATA TYPE
DATA CONTENT
WEATHER DATA 421
DATE (PAST HISTORY/SHORT-TERM PREDICTION)
MAXIMUM TEMPERATURE
MINIMUM TEMPERATURE
SUNSHINE AMOUNT
PRECIPI-TATION
HUMIDITY
AIRFLOW VOLUME
WIND DIRECTION
SOIL DATA 422
SCIENTIFIC SOIL COMPONENT INFORMATION
PHYSICAL SOIL COMPONENT INFORMATION
TOPOGRAPHICAL INFORMATION
FARMING DATA 423
GENERATED FARMING SCHEDULE
PERFORMED FARMING SCHEDULE
TENTATIVE FARMING SCHEDULE
IRRIGATION AMOUNT AND STAGE
FERTILIZING AMOUNT AND STAGE
PLOWING STAGE
CROP DATA 424
PHENOLOGICAL INFORMATION
INFORMATION ABOUT GROWTH
INFORMATION ABOUT NITROGEN CONTENT
CALCULATION SETTING DATA425
ENTIRE SCHEDULING PERIOD
SCHEDULING DAYS
SCHEDULING PERIOD
STRESS OBSERVATION PERIOD
THRESHOLD

Fig.6A

Fig.6B

425

| TARGET CROP (611) | FARMING STAGE (612) | CALCULATION TARGET (613) | USED PARAMETER (614) | FORMULA (615) |
|---|---|---|---|---|
| | GERMINATION | INTAKE | | |
| | | REQUIREMENT | | |
| | | STRESS | | |
| | | GOAL STRESS | | |
| | GROWTH | INTAKE | | |
| | | REQUIREMENT | | |
| | | STRESS | | |
| | | GOAL STRESS | | |
| | FLOWERING | INTAKE | | |
| | | REQUIREMENT | | |
| | | STRESS | | |
| | | GOAL STRESS | | |
| | ⋮ | | | |
| ⋮ | | | | |

320

# Fig.6C

| <SOIL> | <CROP PARAMETER> |
|---|---|
| INCLINATION OF CULTIVATED FIELD | RELATIVE RESPONSE COEFFICIENT FOR SUNSHINE DURATION |
| SUN ANGLE | GERMINATION-TO-FLOWER-SETTING PERIOD |
| DRAINAGE TYPE | FIRST-FLOWER-TO-FIRST-FRUIT PERIOD |
| DRAINAGE DEPTH | FIRST-FLOWER-TO-FIRST-SEED PERIOD |
| DRAINAGE SPACE | FIRST-SEED-TO-NEAR-SEED-COMPLETION PERIOD |
| STONE ON SURFACE | FIRST-FLOWER-TO-END-OF-LEAF-GROWTH PERIOD |
| SOIL COMPONENT | MAXIMUM PHOTOSYNTHESIS RATE |
| SOIL DEPTH | SPECIFIC LEAF AREA OF RELEVANT KIND UNDER TYPICAL GROWTH |
| SOIL REFLECTIVE LIGHT POWER | MAXIMUM LEAF AREA |
| DRAINAGE RATE | MAXIMUM GROWTH SECTION PER DAY |
| THAWING CURVE COEFFICIENT | MAXIMUM SEED MASS |
| ROOT GROWTH COEFFICIENT | AVERAGE NUMBER OF SEEDS PER CLUSTER |
| ORGANIC CARBON CONTENT | REQUIRED TIME FOR GROWTH OF LAST CLUSTER |
| CLAY RATIO | MAXIMUM THRESHING RATE |
| SILT RATIO | NITROGEN ABSORPTION RATE |
| STONE RATIO | ROOT DENSITY |
| TOTAL NITROGEN CONTENT | $CH_2O$ AMOUNT REQUIRED FOR NITROGEN FIXATION |
| WATER CONTENT | PROTEIN CONTENT IN EACH PART |
| WATER ph | $CH_2O$ AMOUNT REQUIRED FOR PROTEIN SYNTHESIS |
| BUFFER ph | |
| CATION EXCHANGE CAPACITY | |
| NITRATE ABSORPTION RATE | |
| | |
| | |
| | |
| | |
| | |
| | |
| | |
| | |
| | |

| FIG.6C | FIG.6D |
|---|---|

# Fig.6D

| | | |
|---|---|---|
| <INITIAL VALUE> | <IRRIGATION> | <WEATHER INFORMATION> |
| PREVIOUS CROP | IRRIGATION DATE | SUNSHINE LEVEL |
| INITIAL VALUE MEASUREMENT DATE | IRRIGATION AMOUNT | MAXIMUM TEMPERATURE |
| ROOT WEIGHT FROM PREVIOUS CROP | | MINIMUM TEMPERATURE |
| NODULE WEIGHT FROM PREVIOUS CROP | <CULTIVATION> | PRECIPITATION |
| NUMBER OF ROOT NODULE BACTERIA | DATE | HUMIDITY |
| EFFECT COEFFICIENT OF NUMBER OF ROOT NODULE BACTERIA | DEVICE | LATITUDE |
| SOIL WATER DEPTH | DEPTH | LONGITUDE |
| RESIDUAL CROP | | ELEVATION |
| RESIDUAL N | <CULTIVATED FIELD INFORMATION> | AVERAGE SOIL TEMPERATURE |
| RESIDUAL P | CULTIVATED FIELD LOCATION | COEFFICIENT REQUIRED FOR SOIL TEMPERATURE CALCULATION |
| BASE LAYER DEPTH | ANALYSIS PERIOD | REFERENCE ALTITUDE FOR TEMPERATURE MEASUREMENT |
| WATER CONTENT | SOIL WATER CONTENT | REFERENCE ALTITUDE FOR AIRFLOW VOLUME MEASUREMENT |
| AMMONIUM DENSITY | | DEW POINT TEMPERATURE (OR VAPOR PRESSURE) |
| $NO_3$ DENSITY | <FERTILIZATION> | AIRFLOW VOLUME |
| | DATE | WIND DIRECTION |
| <PLANTING> | COMPONENT | LIGHT INTENSITY FOR PHOTOSYNTHESIS |
| SEEDING DATE | PURPOSE | TRANSPIRATION AMOUNT |
| GERMINATION DATE | DEPTH | |
| PLANTING DATE | NITROGEN CONTENT | |
| SEED PLANTING DENSITY | PHOSPHORUS CONTENT | |
| PLANTING DENSITY AT GERMINATION | POTASSIUM CONTENT | |
| PLANTING METHOD | CALCIUM CONTENT | |
| PLANTING DISTRIBUTION | OTHER COMPONENT | |
| RIDGE INTERVAL | | |
| RIDGE DIRECTION | | |
| PLANTING DEPTH | | |
| DRY MASS OF PLANTED CROP | | |
| AGE AT TRANSPLANTATION | | |
| TEMPERATURE AT TRANSPLANTATION | | |
| NUMBER OF CROPS PER HILL | | |
| GERMINATING BUD LENGTH | | |

| FIG.6C | FIG.6D |
|---|---|

# Fig.7A

710

| 711 STRESS CALCULATING PERIOD | 712 ELEMENT | 713 PARAMETERS | | | | 714 INTAKE |
|---|---|---|---|---|---|---|
| DAY 1 | WATER | WATER CAPACITY OF SOIL | IRRIGATION AMOUNT HISTORY | CROP INTAKE | ... | |
| | | | | | | |
| | NUTRITION | WATER CAPACITY OF SOIL | IRRIGATION AMOUNT HISTORY | CROP INTAKE | ... | |
| | | | | | | |
| | ⋮ | | | | | |
| DAY 2 | | | | | | |
| DAY 3 | | | | | | |
| DAY 4 | | | | | | |
| ⋮ | | | | | | |
| DAY 13 | | | | | | |

# Fig.7B

720

721 722 723 724 725

| FARMING STAGE | STRESS CALCULATING PERIOD | ELEMENT | PARAMETERS | | | REQUIRE-MENT |
|---|---|---|---|---|---|---|
| FLOWER-ING | DAY 1 | WATER | TRANSPIRATION AMOUNT (WEATHER DATA) | OTHER CONSUMPTIONS | ... | |
| | | | | | | |
| | | NUTRITION | DEGREE OF GROWTH (GROWTH HISTORY) | OTHER CONSUMPTIONS | ... | |
| | | | | | | |
| | | ⋮ | | | | |
| | DAY 2 | | | | | |
| | DAY 3 | | | | | |
| | DAY 4 | | | | | |
| | ⋮ | | | | | |
| | DAY 13 | | | | | |

# Fig.7C

730

731 732 733 734 735

| STRESS CALCULATING PERIOD | ELEMENT | PARAMETERS | | | | | FARMING PURPOSE | STRESS GOAL VALUE |
|---|---|---|---|---|---|---|---|---|
| DAY 1 | WATER | PRESENT STAGE OF PHENOLOGY | PHENOLOGY HISTORY | YIELD GOAL | ENVIRONMENT PREDICTION | ... | YIELD<br>TASTE (SUGAR CONTENT)<br>TASTE (SOURNESS)<br>COLOR<br>LUSTER<br>⋮ | |
| | | | | | | | | |
| | NUTRITION | PRESENT STAGE OF PHENOLOGY | PHENOLOGY HISTORY | YIELD GOAL | ENVIRONMENT PREDICTION | ... | | |
| | | | | | | | | |
| | ⋮ | | | | | | | |
| DAY 2 | | | | | | | | |
| DAY 3 | | | | | | | | |
| DAY 4 | | | | | | | | |
| ⋮ | | | | | | | | |
| DAY 13 | | | | | | | | |

Fig.8

800

| 801 STRESS CALCULATING PERIOD | 802 ELEMENT | 803 CALCULATED INTAKE | 804 CALCULATED REQUIREMENT | 805 STRESS FORMULA | 806 STRESS VALUE (DIFFERENCE OR RATIO) |
|---|---|---|---|---|---|
| DAY 1 | WATER | | | | |
| | NUTRITION | | | | |
| | ⋮ | | | | |
| DAY 2 | | | | | |
| DAY 3 | | | | | |
| DAY 4 | | | | | |
| ⋮ | | | | | |
| DAY 13 | | | | | |

# Fig.9A

910

| SCHEDULING CANDIDATE (911) | STRESS CALCULATING PERIOD (912) | ELEMENT (COMPO-NENT) (913) | CALCULATED STRESS (914) | GOAL STRESS (915) | \|DIFFERENCE\| < THRESHOLD (916) | WEIGHTING (917) | SUM TOTAL OF STRESSES (918) | DETERMINED FARMING SCHEDULE (= LEAST STRESSFUL) (919) |
|---|---|---|---|---|---|---|---|---|
| SCHEDULE CANDIDATE 001 | DAY 1 | WATER | | | | | | REJECTED |
| | | NUTRITION | | | | | | |
| | | ⋮ | | | | | | |
| | DAY 2 | | | | | | | |
| | DAY 3 | | | | | | | |
| SCHEDULE HISTORY | DAY 4 | | | | | | | |
| | ⋮ | | | | | | | |
| | DAY 13 | | | | | | | |
| CANDIDATE 002 | | | | | | | | EMPLOYED |
| ⋮ | | | | | | | | |

# Fig.9B

920

921 922 923 924 925 926 927

| STRESS CALCULATING PERIOD | ELEMENT (COMPONENT) | CALCULATED STRESS | GOAL STRESS | \|DIFFERENCE\| < THRESHOLD | NECESSITY FOR RESCHEDULING | FARMING SCHEDULE | |
|---|---|---|---|---|---|---|---|
| | | | | | | INITIAL FARMING SCHEDULE | MODIFIED FARMING SCHEDULE |
| DAY 1 | WATER | | | | | | |
| | NUTRITION | | | | | | |
| | ⋮ | | | | | | |
| DAY 2 | | | | | | | |
| DAY 3 | | | | | | | |
| DAY 4 | | | | | | | |
| ⋮ | | | | | | | |
| DAY 13 | | | | | | | |

# Fig.9C

930

| SCHEDULING DAYS (931) | DETERMINED FARMING SCHEDULE (932) | FARMING SCHEDULE TO BE REPORTED (933) |
|---|---|---|
| 1 WEEK (7 DAYS) | DAY 1 TO DAY 3 | |
| | DAY 4 TO DAY 6 | |
| | DAY 7 | |

Fig.10

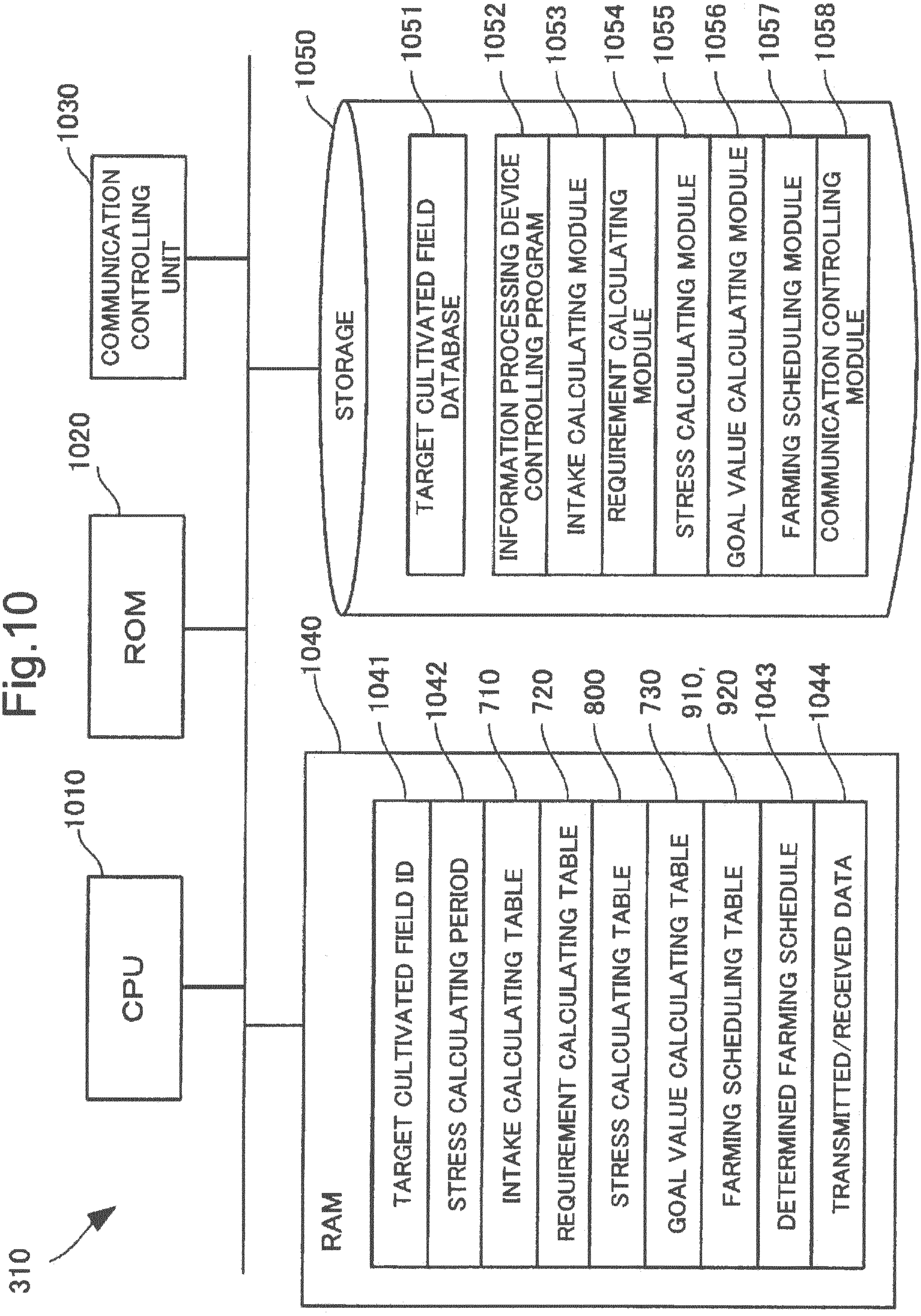
310
CPU
1010
ROM
1020
COMMUNICATION CONTROLLING UNIT
1030
RAM
1040
TARGET CULTIVATED FIELD ID
1041
STRESS CALCULATING PERIOD
1042
INTAKE CALCULATING TABLE
710
REQUIREMENT CALCULATING TABLE
720
STRESS CALCULATING TABLE
800
GOAL VALUE CALCULATING TABLE
730
FARMING SCHEDULING TABLE
910, 920
DETERMINED FARMING SCHEDULE
1043
TRANSMITTED/RECEIVED DATA
1044
STORAGE
1050
TARGET CULTIVATED FIELD DATABASE
1051
INFORMATION PROCESSING DEVICE CONTROLLING PROGRAM
1052
INTAKE CALCULATING MODULE
1053
REQUIREMENT CALCULATING MODULE
1054
STRESS CALCULATING MODULE
1055
GOAL VALUE CALCULATING MODULE
1056
FARMING SCHEDULING MODULE
1057
COMMUNICATION CONTROLLING MODULE
1058

Fig.11

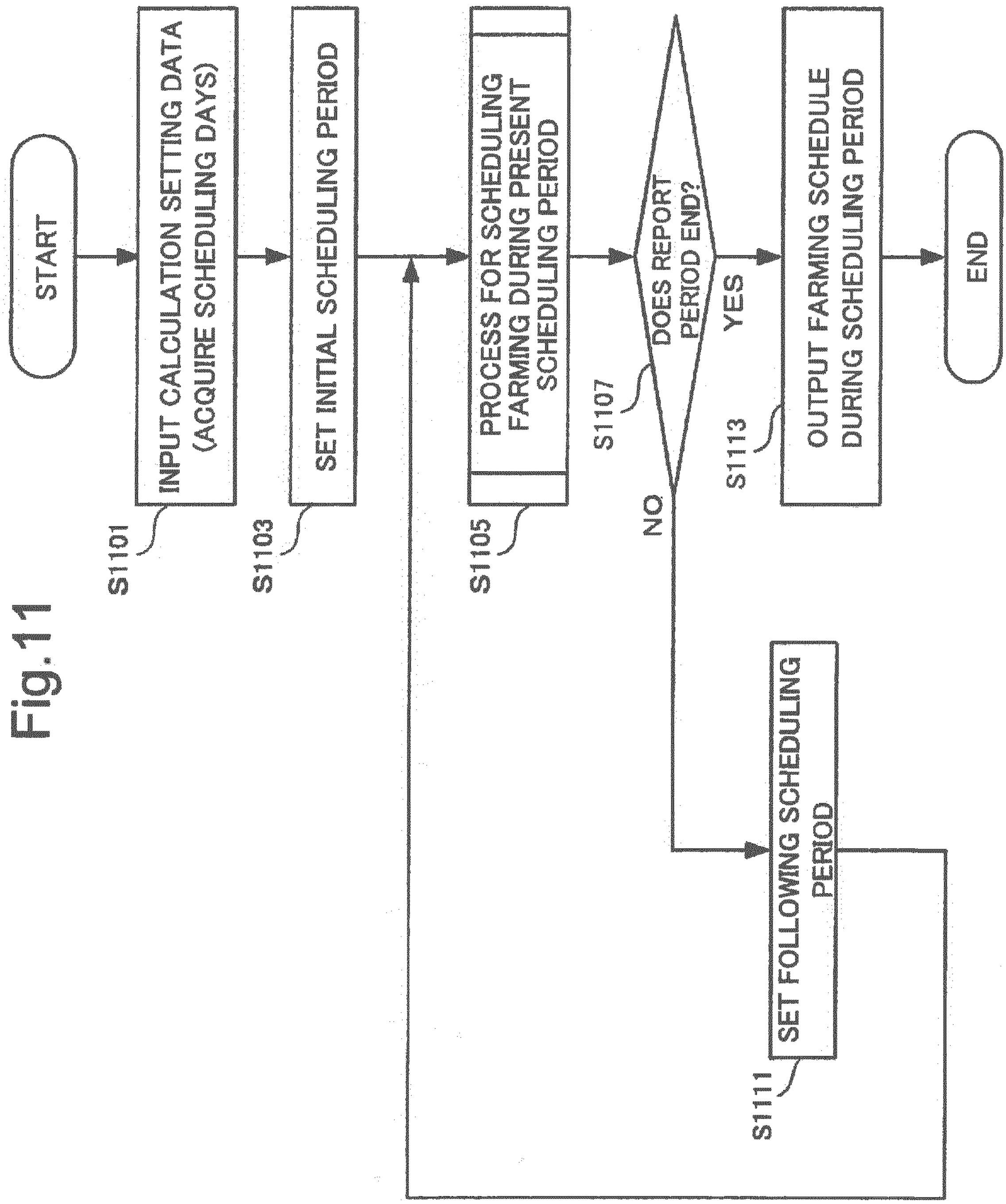
START
INPUT CALCULATION SETTING DATA (ACQUIRE SCHEDULING DAYS)
S1101
SET INITIAL SCHEDULING PERIOD
S1103
PROCESS FOR SCHEDULING FARMING DURING PRESENT SCHEDULING PERIOD
S1105
DOES REPORT PERIOD END?
S1107
YES
NO
OUTPUT FARMING SCHEDULE DURING SCHEDULING PERIOD
S1113
END
SET FOLLOWING SCHEDULING PERIOD
S1111

Fig.12A

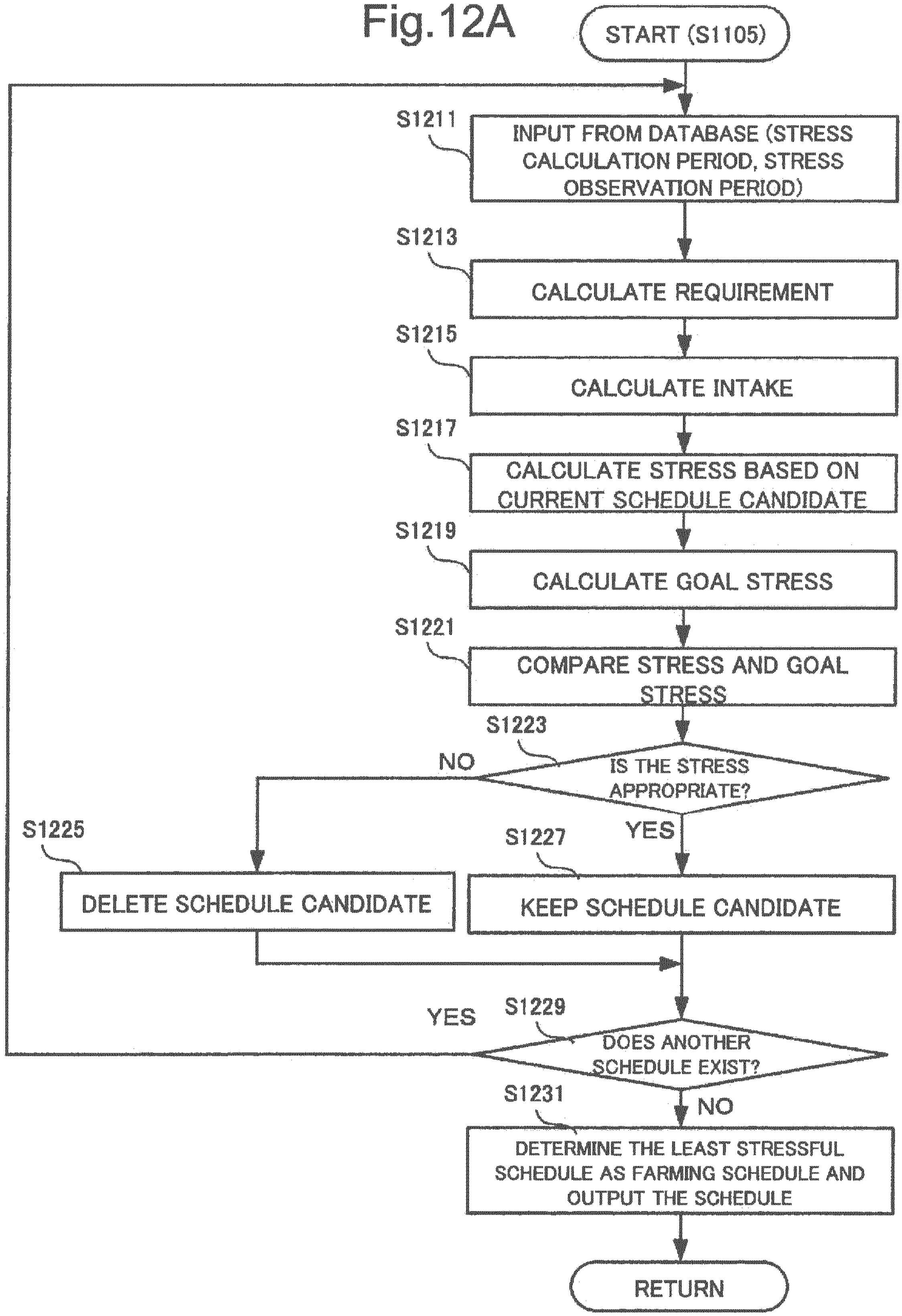
START (S1105)
S1211
INPUT FROM DATABASE (STRESS CALCULATION PERIOD, STRESS OBSERVATION PERIOD)
S1213
CALCULATE REQUIREMENT
S1215
CALCULATE INTAKE
S1217
CALCULATE STRESS BASED ON CURRENT SCHEDULE CANDIDATE
S1219
CALCULATE GOAL STRESS
S1221
COMPARE STRESS AND GOAL STRESS
S1223
IS THE STRESS APPROPRIATE?
NO
YES
S1225
DELETE SCHEDULE CANDIDATE
S1227
KEEP SCHEDULE CANDIDATE
YES
S1229
DOES ANOTHER SCHEDULE EXIST?
NO
S1231
DETERMINE THE LEAST STRESSFUL SCHEDULE AS FARMING SCHEDULE AND OUTPUT THE SCHEDULE
RETURN

Fig.12B

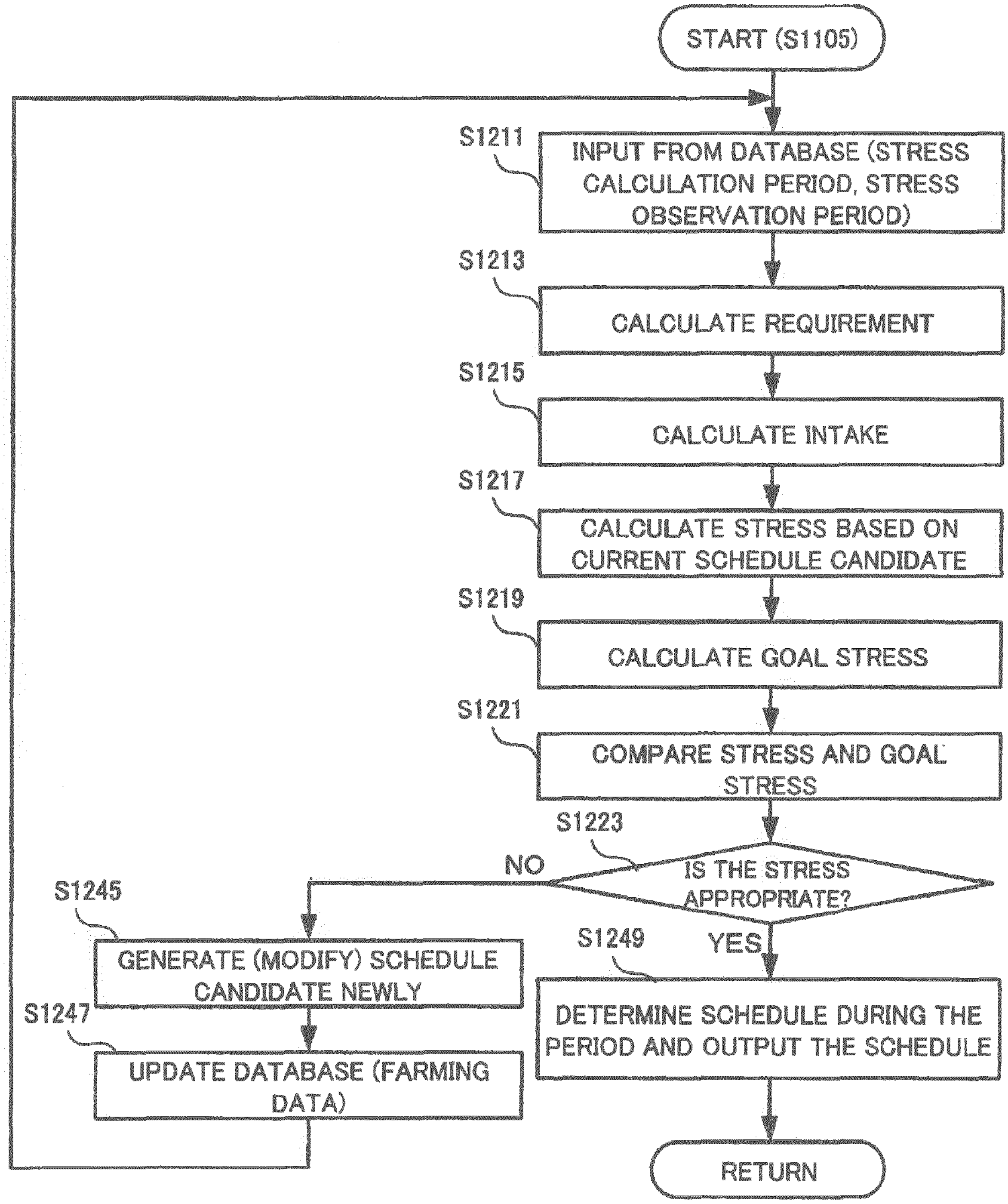
START (S1105)
S1211
INPUT FROM DATABASE (STRESS CALCULATION PERIOD, STRESS OBSERVATION PERIOD)
S1213
CALCULATE REQUIREMENT
S1215
CALCULATE INTAKE
S1217
CALCULATE STRESS BASED ON CURRENT SCHEDULE CANDIDATE
S1219
CALCULATE GOAL STRESS
S1221
COMPARE STRESS AND GOAL STRESS
S1223
IS THE STRESS APPROPRIATE?
NO
YES
S1245
GENERATE (MODIFY) SCHEDULE CANDIDATE NEWLY
S1247
UPDATE DATABASE (FARMING DATA)
S1249
DETERMINE SCHEDULE DURING THE PERIOD AND OUTPUT THE SCHEDULE
RETURN

Fig.13

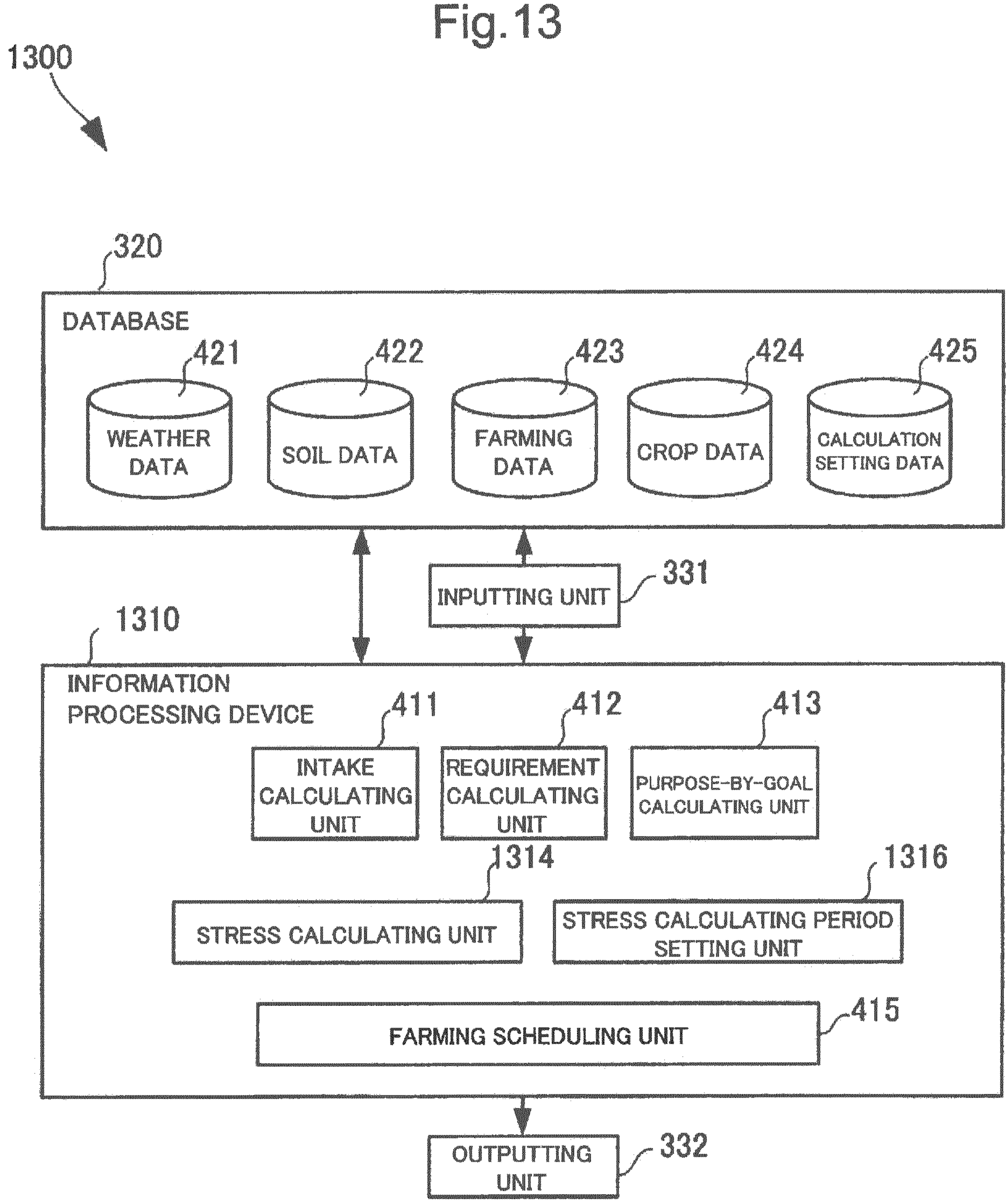
1300
320
DATABASE
421
422
423
424
425
WEATHER DATA
SOIL DATA
FARMING DATA
CROP DATA
CALCULATION SETTING DATA
INPUTTING UNIT
331
1310
INFORMATION PROCESSING DEVICE
411
412
413
INTAKE CALCULATING UNIT
REQUIREMENT CALCULATING UNIT
PURPOSE-BY-GOAL CALCULATING UNIT
1314
1316
STRESS CALCULATING UNIT
STRESS CALCULATING PERIOD SETTING UNIT
FARMING SCHEDULING UNIT
415
OUTPUTTING UNIT
332

# Fig.14

1400

| 1401 CROP KIND | 1402 CULTIVATED FIELD LOCATION | 1403 SOIL | 1404 FARMING STAGE | | ... | 1405 STRESS CALCULATING PERIOD | |
|---|---|---|---|---|---|---|---|
| | | | CLIMATE | FARMING PURPOSE | | SCHEDULING PERIOD | STRESS OBSERVATION PERIOD |
| | | | | | | 3 DAYS | 10 DAYS |
| | | | | | | 4 DAYS | 13 DAYS |
| ⋮ | | | | | | | |

Fig.15

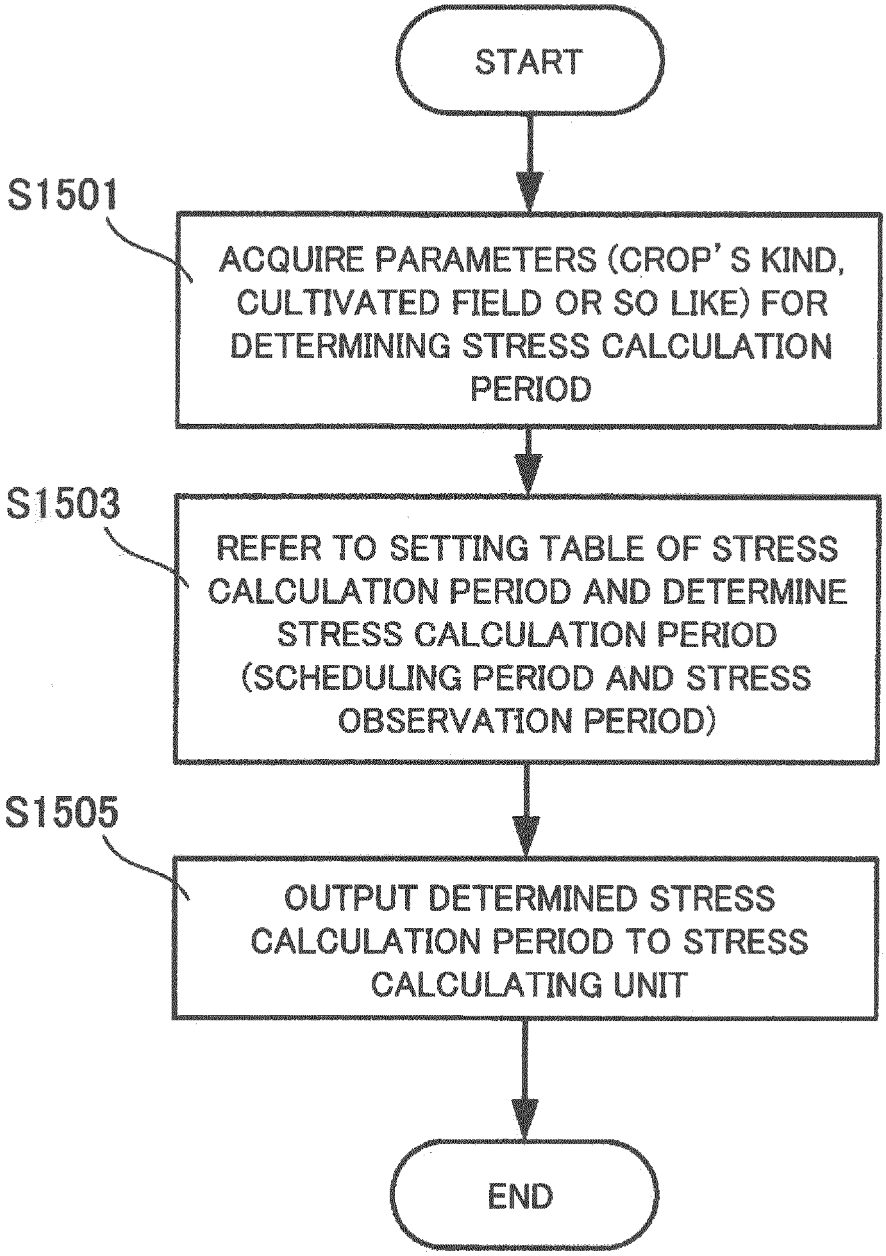
START
S1501
ACQUIRE PARAMETERS (CROP' S KIND, CULTIVATED FIELD OR SO LIKE) FOR DETERMINING STRESS CALCULATION PERIOD
S1503
REFER TO SETTING TABLE OF STRESS CALCULATION PERIOD AND DETERMINE STRESS CALCULATION PERIOD (SCHEDULING PERIOD AND STRESS OBSERVATION PERIOD)
S1505
OUTPUT DETERMINED STRESS CALCULATION PERIOD TO STRESS CALCULATING UNIT
END

Fig.16

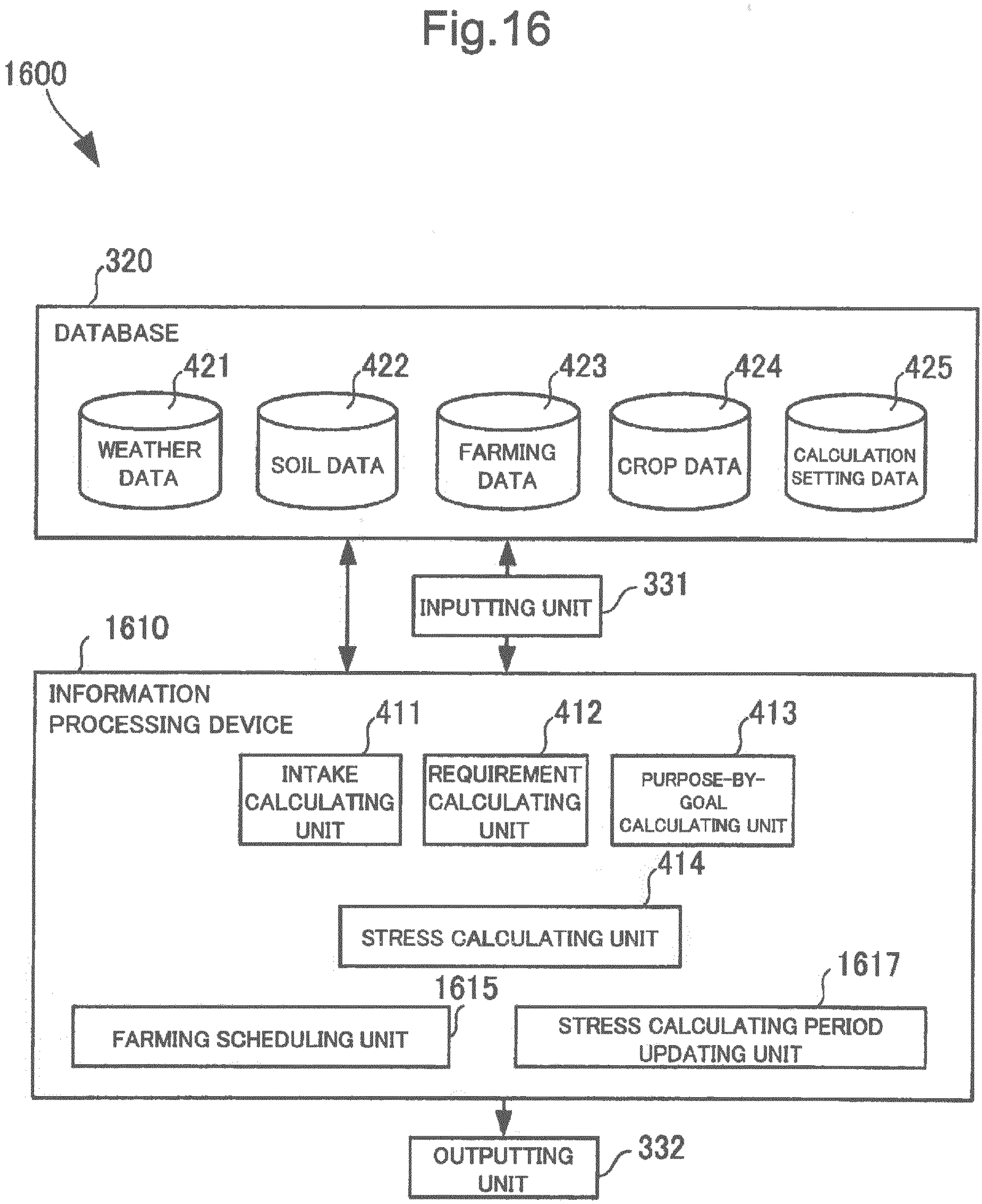
1600
320
DATABASE
421
422
423
424
425
WEATHER DATA
SOIL DATA
FARMING DATA
CROP DATA
CALCULATION SETTING DATA
INPUTTING UNIT
331
1610
INFORMATION PROCESSING DEVICE
411
412
413
INTAKE CALCULATING UNIT
REQUIREMENT CALCULATING UNIT
PURPOSE-BY-GOAL CALCULATING UNIT
414
STRESS CALCULATING UNIT
1615
1617
FARMING SCHEDULING UNIT
STRESS CALCULATING PERIOD UPDATING UNIT
OUTPUTTING UNIT
332

# Fig.17

1700

| STRESS CALCULATING PERIOD (1701) | | MINIMUM VALUE OF SUM TOTAL OF STRESSES DURING EACH STRESS CALCULATING PERIOD (NORMALIZED VALUE PER ONE DAY) (1702) | PRIORITIZATION OF MINIMUM VALUES OF SUM TOTALS OF STRESSES (1703) | RELATED FARMING SCHEDULE (1704) | SELECTED FARMING SCHEDULE (1705) |
|---|---|---|---|---|---|
| SCHEDULING PERIOD | STRESS OBSERVATION PERIOD | | | | |
| 3 DAYS | 10 DAYS | | 3 | | |
| 3 DAYS | 11 DAYS (+1 DAY) | | 2 | | RUNNER-UP |
| 3 DAYS | 9 DAYS (−1 DAY) | | | | |
| 4 DAYS | 13 DAYS | | | | |
| 4 DAYS | 14 DAYS (+1 DAY) | | 1 | | EMPLOYED |
| 4 DAYS | 12 DAYS (−1 DAY) | | | | |
| 2 DAYS | 5 DAYS | | 4 | | |
| ⋮ | | | | | |

Fig.18

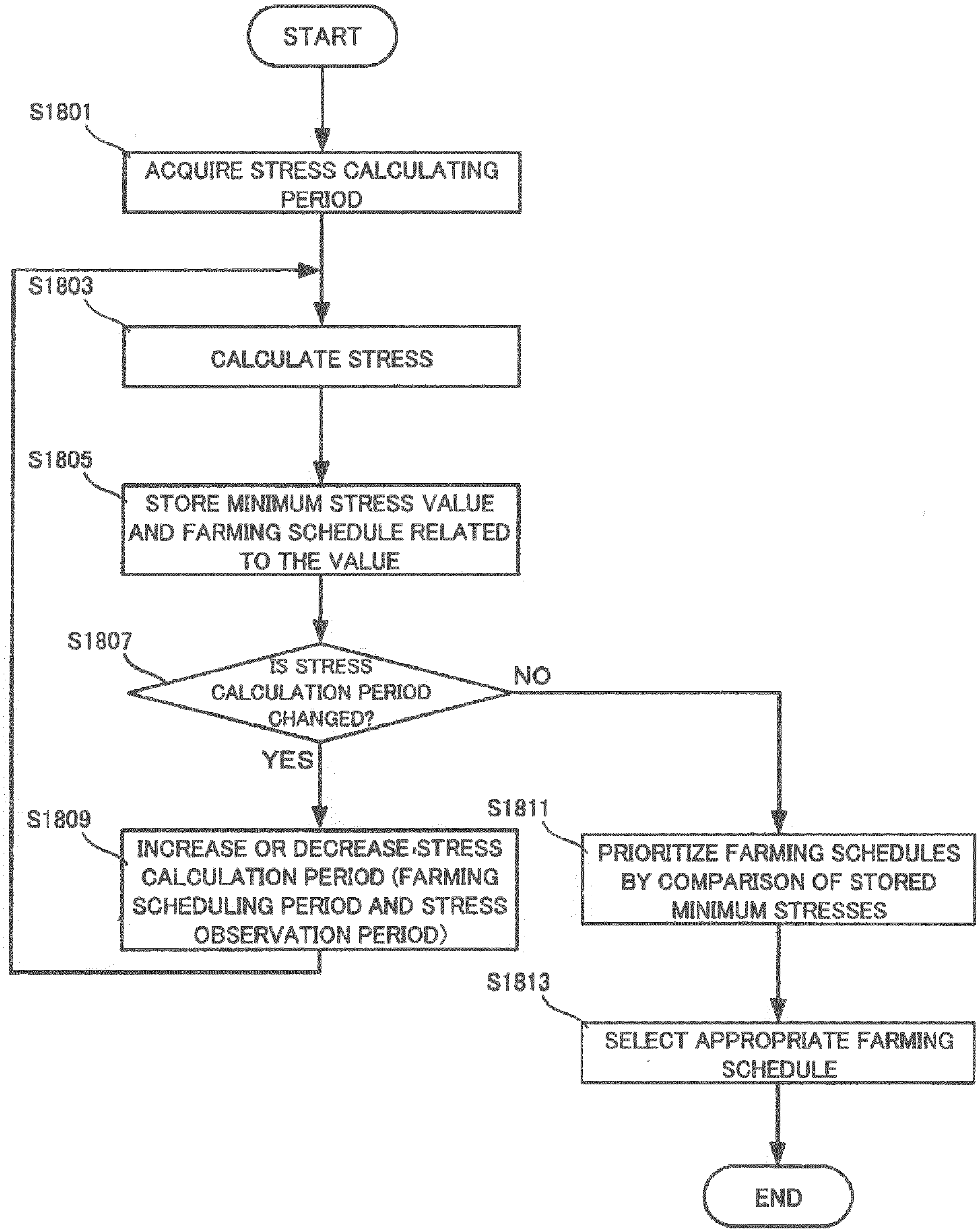
START
S1801
ACQUIRE STRESS CALCULATING PERIOD
S1803
CALCULATE STRESS
S1805
STORE MINIMUM STRESS VALUE AND FARMING SCHEDULE RELATED TO THE VALUE
S1807
IS STRESS CALCULATION PERIOD CHANGED?
NO
YES
S1809
INCREASE OR DECREASE STRESS CALCULATION PERIOD (FARMING SCHEDULING PERIOD AND STRESS OBSERVATION PERIOD)
S1811
PRIORITIZE FARMING SCHEDULES BY COMPARISON OF STORED MINIMUM STRESSES
S1813
SELECT APPROPRIATE FARMING SCHEDULE
END

Fig.19

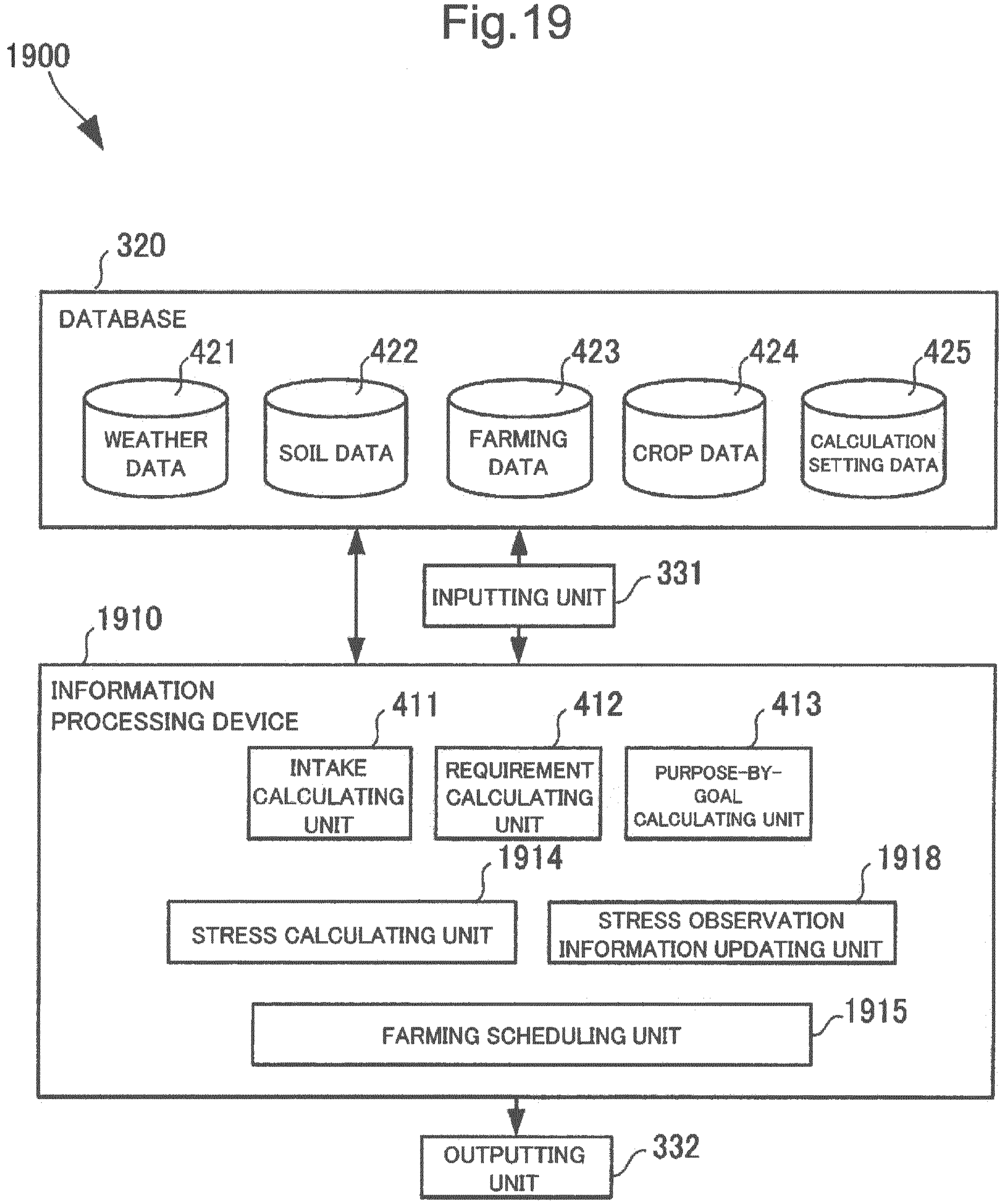
1900
320
DATABASE
421
422
423
424
425
WEATHER DATA
SOIL DATA
FARMING DATA
CROP DATA
CALCULATION SETTING DATA
INPUTTING UNIT
331
1910
INFORMATION PROCESSING DEVICE
411
412
413
INTAKE CALCULATING UNIT
REQUIREMENT CALCULATING UNIT
PURPOSE-BY-GOAL CALCULATING UNIT
1914
1918
STRESS CALCULATING UNIT
STRESS OBSERVATION INFORMATION UPDATING UNIT
FARMING SCHEDULING UNIT
1915
OUTPUTTING UNIT
332

Fig.20

2000

| TENTATIVE FARMING SCHEDULE DURING SCHEDULING PERIOD (2001) | STRESS OBSERVATION INFORMATION (2002) | | STRESS CALCULATION VALUE (2003) | | PRIORITIZATION OF SUM TOTALS OF STRESSES (2004) | SELECTED FARMING SCHEDULE (2005) |
|---|---|---|---|---|---|---|
| | FARMING SCHEDULE | WEIGHTING OR CHANGE | SCHEDULING PERIOD | STRESS OBSERVATION PERIOD | | |
| | | | | | | |
| | | | | | 1 | EMPLOYED |
| | | | | | 2 | |
| ⋮ | | | | | | |

Fig.21

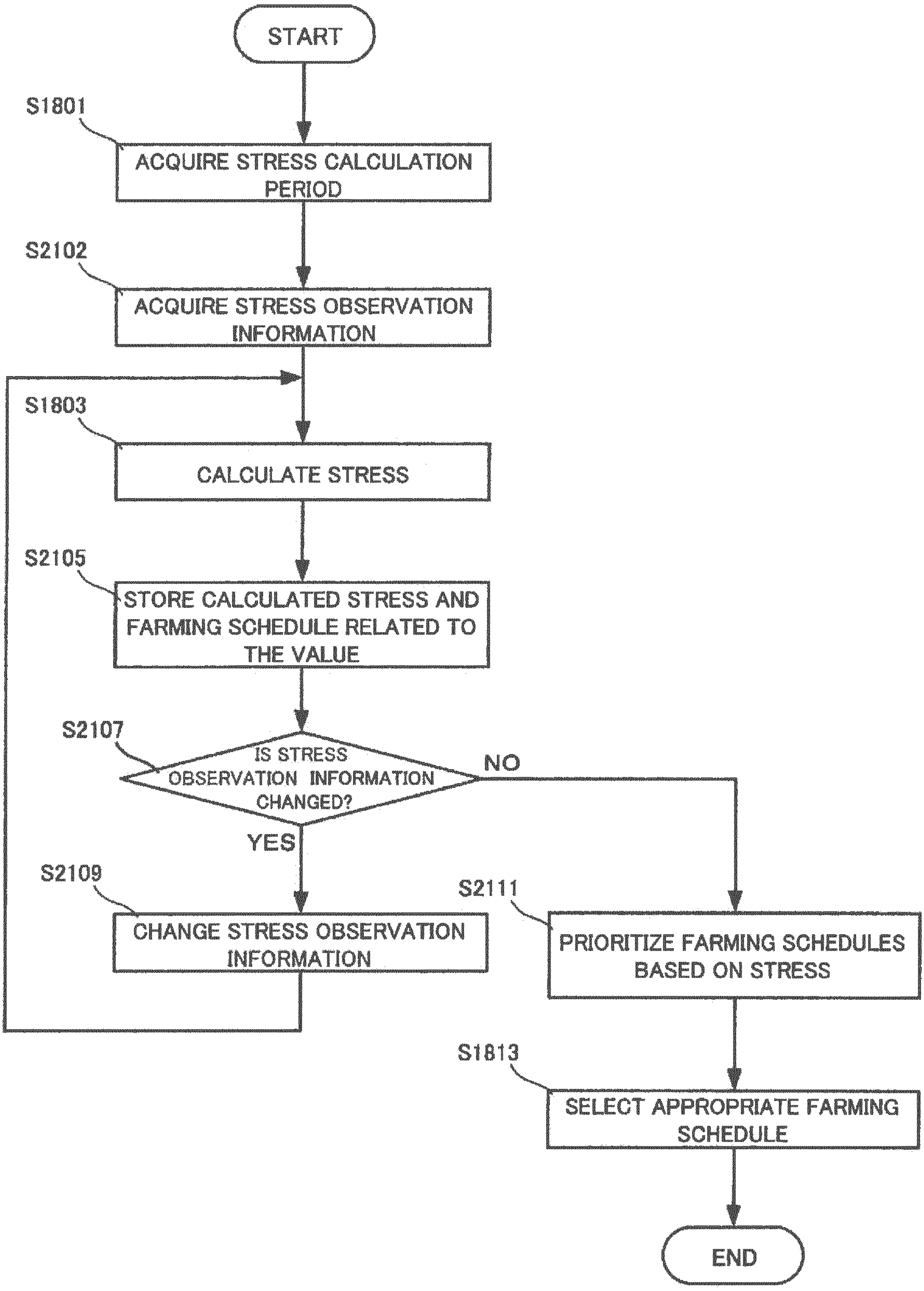
START
S1801
ACQUIRE STRESS CALCULATION PERIOD
S2102
ACQUIRE STRESS OBSERVATION INFORMATION
S1803
CALCULATE STRESS
S2105
STORE CALCULATED STRESS AND FARMING SCHEDULE RELATED TO THE VALUE
S2107
IS STRESS OBSERVATION INFORMATION CHANGED?
NO
YES
S2109
CHANGE STRESS OBSERVATION INFORMATION
S2111
PRIORITIZE FARMING SCHEDULES BASED ON STRESS
S1813
SELECT APPROPRIATE FARMING SCHEDULE
END

Fig.22

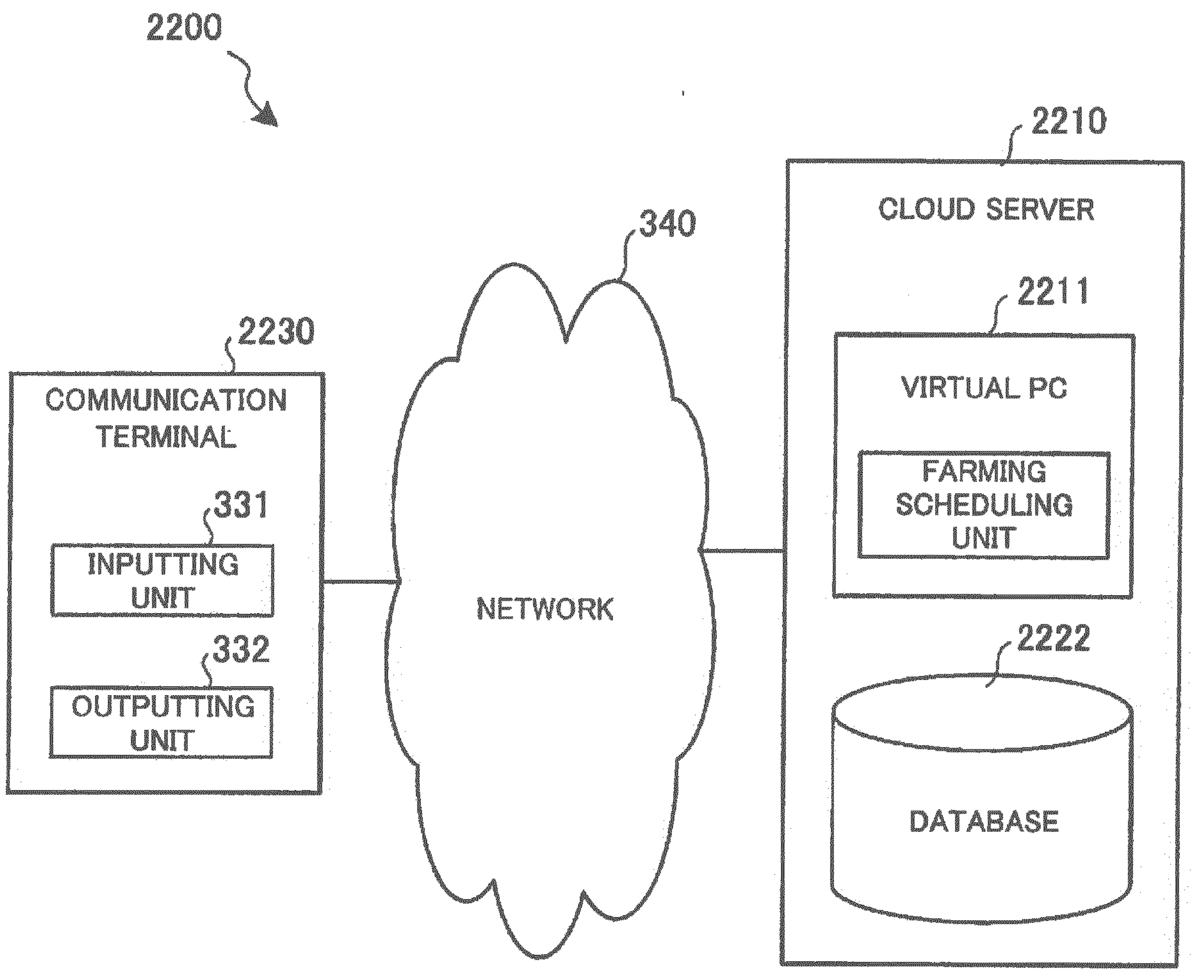
2200
2210
CLOUD SERVER
340
2211
2230
VIRTUAL PC
COMMUNICATION TERMINAL
FARMING SCHEDULING UNIT
331
INPUTTING UNIT
NETWORK
2222
332
OUTPUTTING UNIT
DATABASE

Fig.23

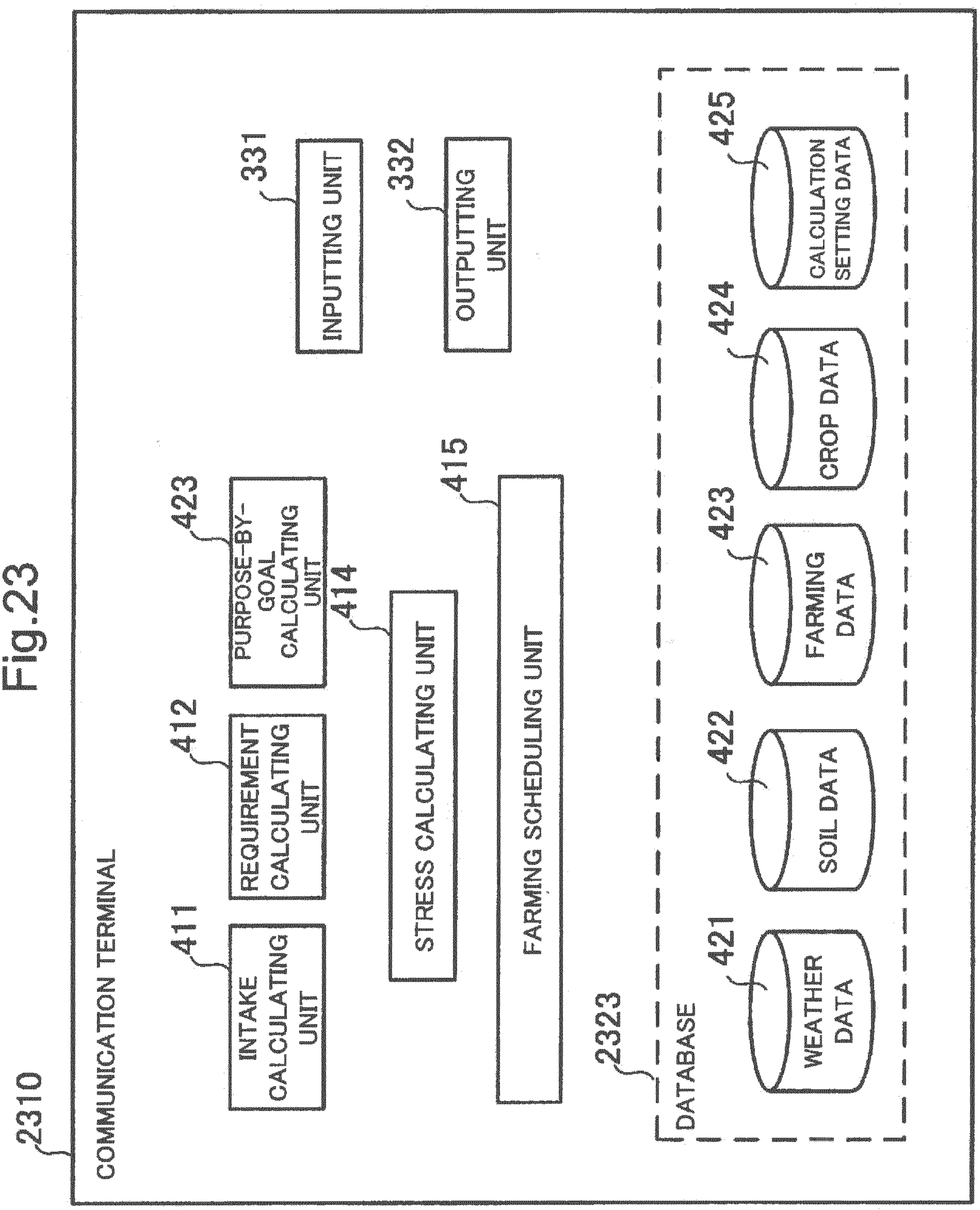
2310
COMMUNICATION TERMINAL
411
INTAKE CALCULATING UNIT
412
REQUIREMENT CALCULATING UNIT
423
PURPOSE-BY-GOAL CALCULATING UNIT
414
STRESS CALCULATING UNIT
415
FARMING SCHEDULING UNIT
331
INPUTTING UNIT
332
OUTPUTTING UNIT
2323
DATABASE
421
WEATHER DATA
422
SOIL DATA
423
FARMING DATA
424
CROP DATA
425
CALCULATION SETTING DATA

**INTERNATIONAL SEARCH REPORT**

International application No.
PCT/JP2016/004632

A. CLASSIFICATION OF SUBJECT MATTER
*G06Q50/02*(2012.01)i

According to International Patent Classification (IPC) or to both national classification and IPC

B. FIELDS SEARCHED

Minimum documentation searched (classification system followed by classification symbols)
G06Q10/00-99/00, A01G7/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 11-299351 A (Omron Corp.), 02 November 1999 (02.11.1999), entire text (Family: none) | 1-19 |
| A | JP 11-346578 A (Hitachi, Ltd., Biological Specific Industry Technological Research Propellant Organization), 21 December 1999 (21.12.1999), entire text (Family: none) | 1-19 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

Date of the actual completion of the international search
11 January 2017 (11.01.17)

Date of mailing of the international search report
24 January 2017 (24.01.17)

Name and mailing address of the ISA/
Japan Patent Office
3-4-3, Kasumigaseki, Chiyoda-ku,
Tokyo 100-8915, Japan

Authorized officer

Telephone No.

Form PCT/ISA/210 (second sheet) (January 2015)

INTERNATIONAL SEARCH REPORT

International application No.
PCT/JP2016/004632

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-189773 A (Yanmar Agricultural Equipment Co., Ltd., Yanmar Diesel Engine Co., Ltd.), 05 July 2002 (05.07.2002), entire text (Family: none) | 1-19 |
| A | JP 2003-143959 A (Hitachi Engineering Co., Ltd., Agriculture, Forestry and Fisheries Technical Information Society), 20 May 2003 (20.05.2003), entire text (Family: none) | 1-19 |
| A | JP 11-313594 A (Omron Corp.), 16 November 1999 (16.11.1999), entire text (Family: none) | 1-19 |
| A | JP 2007-310463 A (Hitachi Software Engineering Co., Ltd.), 29 November 2007 (29.11.2007), entire text (Family: none) | 1-19 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H111999313594 B
- JP 4873545 B
- JP 2015209378 A